(19) Europäisches Patentamt
European Patent Office
Office européen des brevets

(11) **EP 2 115 526 B1**

(12) **EUROPÄISCHE PATENTSCHRIFT**

(45) Veröffentlichungstag und Bekanntmachung des Hinweises auf die Patenterteilung:
**23.04.2014 Patentblatt 2014/17**

(51) Int Cl.:
***G02C 7/02*** *(2006.01)*  ***G02C 13/00*** *(2006.01)*
***G02C 7/06*** *(2006.01)*

(21) Anmeldenummer: **08707295.5**

(22) Anmeldetag: **25.01.2008**

(86) Internationale Anmeldenummer:
**PCT/EP2008/000586**

(87) Internationale Veröffentlichungsnummer:
**WO 2008/089997 (31.07.2008 Gazette 2008/31)**

(54) **BEZUGSPUNKTE FÜR ORTHOSTELLUNG**

REFERENCE POINTS FOR ORTHO POSITIONING

POINTS DE RÉFÉRENCE POUR ORTHOPOSITION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **25.01.2007 DE 102007003818**

(43) Veröffentlichungstag der Anmeldung:
**11.11.2009 Patentblatt 2009/46**

(73) Patentinhaber: **Rodenstock GmbH**
**80687 München (DE)**

(72) Erfinder:
• **ALTHEIMER, Helmut**
**87650 Baisweil-Lauchdorf (DE)**
• **ESSER, Gregor**
**81735 München (DE)**
• **BECKEN, Wolfgang**
**81541 München (DE)**

(74) Vertreter: **Müller-Boré & Partner Patentanwälte PartG mbB**
**Friedenheimer Brücke 21**
**80639 München (DE)**

(56) Entgegenhaltungen:
**EP-A- 1 154 302**    **EP-A- 1 666 953**
**WO-A-02/088832**    **DE-A1- 10 151 135**
**US-A1- 2003 231 282**    **US-A1- 2004 233 385**

• **ESSER G ET AL: "DIE PERFORMANCE INDIVIDUELLER GLEITSICHTGLAESER" DEUTSCHE OPTIKER ZEITUNG, XX, DE, 1. Dezember 2005 (2005-12-01), Seiten 38-44, XP000962762**
• **"Zentrieren von Fernbrillen mit prismatischer Wirkung / 3.3" In: Wolfgang Schulz, Johannes Eber: "Brillenanpassung", 1997, DOZ-Verlag, Heidelberg ISBN: 3-922269-21-4 pages 35-40,**

**Beschreibung**

Die vorliegende Erfindung betrifft ein Verfahren, ein System und ein Computerprogrammprodukt, insbesondere zum Entwerfen oder Herstellen eines Brillenglases mit prismatischer Wirkung sowie ein Brillenglas mit prismatischer Wirkung zur verbesserten Zentrierung.

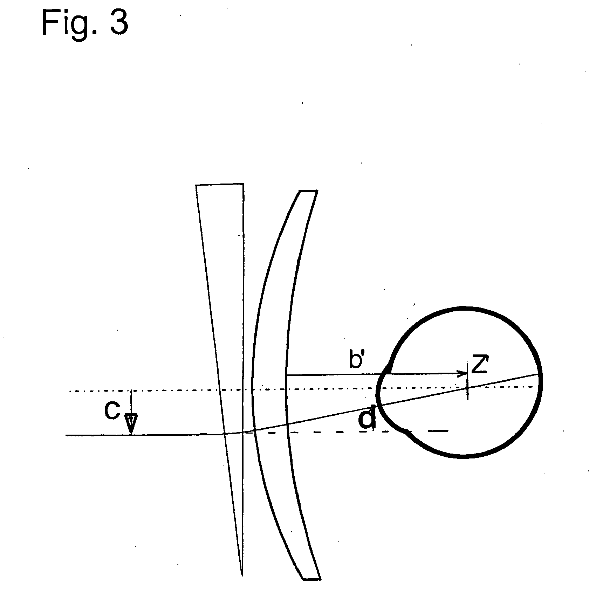

Zur Korrektion von Heterophorien werden Brillengläser mit prismatischer Wirkung (nachfolgend auch als prismatische Brillengläser bezeichnet) verwendet. Befindet sich, wie in der schematischen Darstellung von Fig. 3 gezeigt, eine prismatische Wirkung bzw. ein Brillenglas mit prismatischer Wirkung p vor einem Auge eines Brillenträgers, so kann ein Objektpunkt nur durch eine kompensatorische Einstellbewegung des Auges fixiert und damit zentral auf die Fovea abgebildet werden. Dies führt zu einer Verschiebung c des Durchblickspunkts auf dem Brillenglas entgegengesetzt zur Basislage des Prismas. Im dargestellten Fall von Fig. 3 ist bei einer Bestimmung der prismatischen Ablenkung neben dem Prisma auch die prismatische Nebenwirkung des Korrektionsglases zu berücksichtigen.

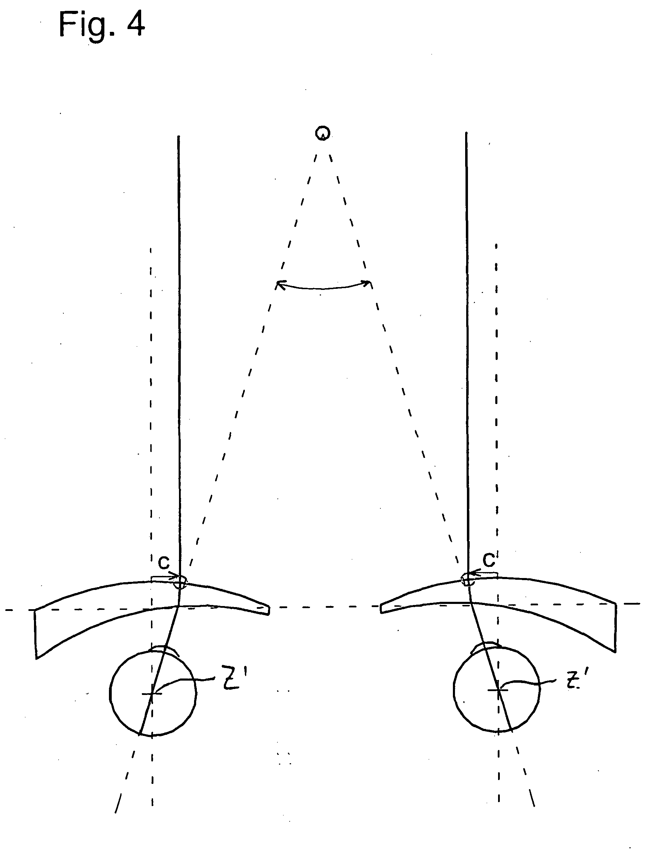

Bei der Korrektion von Heterophorien durch prismatische Brillengläser tritt bei der Zentrierung der Gläser vor dem Auge, respektive beim Einschleifen der prismatischen Brillengläser in die Fassung, genau das gleiche Phänomen, und jetzt eigentlich als Problem, auf. Das Augenpaar führt, wie in Fig. 4 dargestellt, hinter den Gläsern Einstellbewegungen aus, damit sich die Fixierlinien im Objektpunkt schneiden können und der Punkt binokular einfach gesehen werden kann. Der Prismenbezugspunkt, der Punkt auf dem Brillenglas, in dem die geforderte prismatische Wirkung herrscht, darf nicht vor dem Augendrehpunkt liegen, sondern muss entgegengesetzt zur Basislage soweit verschoben werden, bis er mit dem Durchstoßpunkt des fixierenden Hauptstrahles auf der Glasvorderfläche zusammenfällt. Nur dann stimmen der Abbildungsstrahlengang und der Berechnungsstrahlengang überein, und der Prismenbezugspunkt fällt mit dem entsprechenden Durchblickspunkt zusammen.

Insbesondere muss der Optiker beim Zentrieren der Gläser neben dem Berechnen der Zentrierdaten $u_1$ und $v_1$ noch zusätzlich eine Dezentration c aufgrund der prismatischen Wirkung berücksichtigen und kann dann erst die Gesamtdezentration $u$ und $v$ des Bezugspunktes zum Formscheibenmittelpunkt bzw. Kastenmittelpunkt berechnen:

$$u = u_1 + c_{pr} \cos \beta$$

$$v = v_1 - c_{pr} \sin \beta$$

wobei β die Basislage bezeichnet.

Beispielhaft sind derartige Vorgehensweisen unter anderem von Wolfgang Schulz und Johannes Eber in "Brillenanpassung", DOZ-Verlag, Heidelberg ISBN: 3-922269-21-4, Seiten 35-40, Kapitel 3.3 "Zentrieren von Fernbrillen mit prismatischer Wirkung" beschrieben. Demnach ist das Ziel der Zentrierung erreicht, wenn in der fertigen Brille an den Durchblickpunkten die gleiche binokular-prismatische Wirkung herrscht wie bei der Messbrille nach erfolgter Augenglasbestimmung. So müssen demnach anders als bei Brillengläsern mit sphärischer und astigmatischer Wirkung die Zentrierwerte nicht erst bei der Brillenanpassung, sondern schon bei der Augenglasbestimmung festgelegt werden. In diesem Zusammenhang werden die beiden bekannten Verfahren der Pupillenmittenzentrierung (PMZ) und der Formelzentrierung beschrieben.

Während bei der Pupillenmittenzentrierung das Messglas genau auf die Pupillenmitte bei monokularer Nullblickrichtung zentriert wird und dort während der weiteren Messung verbleibt, werden die Messgläser bei der Formelzentrierung während der Augenglasbestimmung so verändert, dass die Augen immer durch die geometrische Mitte der Messgläser schauen. Die Veränderung der Messbrillenzentrierung bei der Formelzentrierung richtet sich nach der Größe des Prismas, der Basisrichtung und dem Hornhautscheitelabstand, die in eine Näherungsformel für die Verschiebung der Messgläser einfließen.

Nach Herstellung des entsprechende Brillenglases muss dieses vom Optiker gerandet und gefasst werden. Hierfür ist die korrekte Zentrierung des Brillenglases zu beachten. Bei Gläsern für eine prismatische Verordnung muss der Optiker aber beachten, dass für den Zweck der korrekten Zentrierung auf dem Glas markierte Prismenbezugspunkt nicht auf die Pupillenmitte bei monokularer Nullblickrichtung zentriert werden darf, sondern entgegengesetzt zur Basislage soweit verschoben werden muss, bis er mit dem Durchstoßpunkt des fixierenden Hauptstrahles auf der Glasvorderfläche zusammenfällt.

Dieses Vorgehen ist jedoch fehleranfällig, aufwendig und ungenau. Gerade die genaue Zentrierung von Gleitsichtgläsern vor den Augen ist für ein störungsfreies Binokularsehen extrem wichtig. Insbesondere bei progressiven Brillengläsern muss horizontal dafür gesorgt werden, dass die Hauptblicklinie bei Blicksenkung exakt durch die Mitte des Progressionskanals verläuft und in vertikaler Richtung muss Sorge getragen werden, dass keine zusätzlichen prismatischen Höhendifferenzen auftreten. Aber selbst wenn der Optiker noch so gewissenhaft arbeitet, kann er doch die notwendige Dezentration nur näherungsweise berücksichtigen.

Es ist Aufgabe der Erfindung, ein Verfahren, ein System und ein Computerprogrammprodukt, das eine einfachere und genauere Zentrierung von Brillengläsern insbesondere von Brillengläsern mit prismatischer Wirkung ermöglicht, sowie ein Brillenglas mit prismatischer Wirkung für eine verbesserte Zentrierung bereitzustellen. Diese Aufgabe wird durch ein Verfahren mit den in Anspruch 1 oder 2, ein Computerprogrammprodukt mit den in Anspruch 10, ein System mit den in Anspruch 11 und ein Brillenglas mit den in Anspruch 12 angegebenen Merkmalen gelöst. Bevorzugte Ausführungsformen sind Gegenstand der abhängigen Ansprüche. Somit stellt die Erfindung in einem Aspekt ein Verfahren zur Herstellung eines Brillenglases mit prismatischer Wirkung bzw. eines prismatischen Brillenglases für einen Brillenträger bereit, welches umfasst:

- Erfassen von individuellen Benutzerdaten bzw. Anwendungsdaten des Brillenträgers, wobei die individuellen Benutzerdaten prismatische Verordnungsdaten umfassen;
- Entwerfen des Brillenglases mit prismatischer Wirkung unter Berücksichtigung der individuellen Benutzerdaten; und
- Bestimmen bzw. Festlegen von Zentierdaten insbesondere der Position eines Anpasspunkts für das Brillenglas mit prismatischer Wirkung bzw. das prismatische Brillenglas in Abhängigkeit von den prismatischen Verordnungsdaten.

Damit lässt sich für einen Optiker in besonders einfacher und präziser Weise eine Zentrierung eines prismatischen Billenglases bzw. eines Brillenglases mit prismatischer Wirkung für einen individuellen Brillenträger vornehmen. Insbesondere kann der Optiker auf Basis der in Abhängigkeit von den individuellen prismatischen Verordnungsdaten bestimmten Zentrierdaten eine einfache Zentrierung vornehmen, ohne eine zusätzliche Dezentrierung unter Berücksichtigung der prismatischen Wirkung vornehmen zu müssen. Damit wird insbesondere auch eine Verbesserung der Zentriergenauigkeit erreicht.

Unter einem prismatischen Brillenglas bzw. Brillenglas mit prismatischer Wirkung wird dabei insbesondere ein Brillenglas verstanden, das so gefertigt ist bzw. wird, dass es in einem Bezugspunkt, insbesondere einem vom Hersteller festgelegten Prismenbezugspunkt, der vorzugsweise mit dem geometrischen Mittelpunkt des Rohglases zusammenfällt, eine von Null verschiedene prismatische Wirkung besitzt. Die prismatische Wirkung bezieht sich vorzugsweise auf die Grundablenkung, d.h. auf die Ablenkung eines Lichtstrahls für den Fall, dass der Lichtstrahl auf einer der beiden Oberflächen des Brillenglases, insbesondere im Prismenbezugspunkt, senkrecht steht. Der Prismenbezugspunkt wird vorzugsweise als Punkt auf der Vorderfläche des Brillenglases angegeben. Somit ist unter einer prismatischen Wirkung für das prismatische Brillenglas insbesondere eine zur Korrektur gemäß den prismatischen Verordnungsdaten und/oder eine durch ein Dickenreduktionsprisma eingeführte Wirkung, welche insbesondere im wesentlichen auf dem gesamten Brillenglas oder zumindest auf dem gesamten für einen bestimmten Sehbereich oder eine bestimmte Sehaufgabe ausgelegten Bereich des Brillenglases vorhanden ist, nicht aber eine ausschließlich durch die nicht-prismatischen Verordnungsdaten, wie z.B. Sphäre, Zylinder, usw., eingeführte prismatische Nebenwirkung zu verstehen.

Als Zentrierdaten könnten insbesondere Positionsdaten eines Anpasspunkts an und/oder in einem Brillenglas und/oder bezüglich eines Brillenglases bestimmt werden, wobei der Anpasspunkt insbesondere derjenige Punkt an bzw. in dem Brillenglas bzw. bezüglich des Brillenglases ist, der bei einer korrekten Zentrierung des Brillenglases für den Brillenträger in der Gebrauchsstellung des Brillenglases insbesondere gemäß den individuellen Benutzerdaten und bei Nullblickrichtung des Brillenträgers horizontal vor der Pupille des Brillenträgers angeordnet ist bzw. für eine korrekte Zentrierung anzuordnen ist. Die Positionsdaten des Anpasspunkts können insbesondere als räumliche Position oder Positionen relativ zu einem oder mehreren für das Brillenglas festgelegten Referenzpunkten bestimmt werden. In einer bevorzugten Ausführungsform umfassen solche festgelegten Referenzpunkte permanente und/oder nicht-permanente Markierungen an und/oder in dem Brillenglas. Vorzugsweise umfassen solche Markierungen Gravuren und/oder Stempelungen bzw. Stempelbilder.

In einer bevorzugten Ausführungsform umfassen die Zentrierdaten Positionsdaten in Form von Längen- und/oder Abstands- bzw. Entfernungs- und/oder Winkel- und/oder Verhältnisangaben einer Position des Anpasspunkts relativ zu markierten Referenzpunkten. Winkelangaben könnten sich dabei insbesondere auf einen Winkel eines Positionsvektors bzw. Ortsvektors des Anpasspunkts relativ zu einer Glashorizontalen und/oder einer Glasvertikalen beziehen, welche wiederum vorzugsweise durch permanente oder nicht-permanente Markierungen an bzw. in dem Brillenglas festgelegt sind.

In einer weiteren bevorzugten Ausführungsform umfassen die Zentrierdaten eine oder mehrere Markierungen an und/oder in dem Brillenglas, die unmittelbar eine Zentrierposition, insbesondere den Anpasspunkt kennzeichnen. Somit ist bzw. wird der Anpasspunkt vorzugsweise selbst als permanente oder nicht-permanente Markierung an und/oder in und/oder auf dem Brillenglas ausgebildet bzw. angeordnet, wobei diese Markierung zumindest einen Teil der Zentrierdaten bildet. Das Verfahren umfasst dabei vorzugsweise ferner ein Anbringen einer insbesondere permanenten und/oder einer nicht permanenten Zentriermarkierung am und/oder im Brillenglas insbesondere auf zumindest einer Fläche des Brillenglases insbesondere am Anpasspunkt in Abhängigkeit von den bestimmten Zentierdaten oder als zumindest ein Teil der Zentrierdaten insbesondere in Abhängigkeit von den prismatischen Verordnungsdaten. Besonders bevorzugt umfasst das Anbringen der Zentriermarkierung ein Stempeln eines Zentrierkreuzes und/oder einer anderen geeigneten Zentriermarkierung auf der zumindest einen Fläche des Brillenglases, mit deren Hilfe ein Optiker zum korrekten Zentrieren eine Ausrichtung des Anpasspunkts des prismatischen Billenglases an einen individuell für den Brillenträger ermittelten Zentrierpunkt vornehmen kann. Dazu werden die Zentrierdaten insbesondere vom Brillenglashersteller vorzugsweise während der Herstellung des Brillenglases individuell ermittelt und dem Optiker zur Verfügung gestellt.

Vorzugsweise umfassen die individuellen Benutzerdaten individuelle optische Korrektionswirkungen bzw. Korrektionsdaten zur Korrektion einer Fehlsichtigkeit des Brillenträgers und Gebrauchsdaten bezüglich einer individuellen Positionierung des Brillenglases für den Brillenträger und/oder bezüglich einer individuellen Sehaufgabe des Brillenträgers. Dabei erfolgt das Entwerfen des Brillen glases mit prismatischer Wirkung bzw. des prismatischen Brillenglases vorzugsweise unter Berücksichtigung der Korrektionswirkungen und/oder der Gebrauchsdaten.

Somit umfassen die individuellen Benutzerdaten beispielsweise als Teil der individuellen Korrektionsdaten dioptrische Wirkungsdaten, wie z.B. Sphäre, Zylinder, Achse (Achslage des Zylinders), Prisma, Basis und/oder Addition. Gläser mit prismatischer Wirkung bzw. prismatische Brillengläser dienen insbesondere zur Korrektion von Stellungsanomalien der Augen. Dazu umfassen die Benutzerdaten insbesondere prismatische Verordnungsdaten bzw. Korrektionsdaten bzw. ein Verordnungsprisma, d.h. Rezeptwerte insbesondere zur Korrektion solcher Stellungsfehler. Insbesondere umfassen die prismatischen Verordnungsdaten einen Betrag (Absolutwert) und eine Basislage der erforderlichen prismatischen Korrektionswirkung des gewünschten Brillenglases. Vorzugsweise umfassen die individuellen Benutzerdaten individuelle Korrektionsdaten für eine Vielzahl von Blickrichtungen des Brillenträgers.

In einer bevorzugten Ausführungsform legen die Gebrauchsdaten zumindest eine vorzugsweise individuelle Gebrauchsstellung zumindest teilweise fest. Dazu umfassen die individuellen Benutzerdaten vorzugsweise einen Hornhaut-Scheitel-Abstand und/oder einen Augendrehpunktabstand und/oder eine Pupillendistanz und/oder einen Fassungsscheibenwinkel und/oder eine Vorneigung bzw. Fässungsvorneigung bzw. einen pantoskopischen Winkel. In einer bevorzugten Ausführungsform umfassen die individuellen Benutzerdaten Fassungsdaten, wie z.B. eine Scheibenhöhe und/oder eine Scheibenlänge und/oder einen Fassungsscheibenwinkel und/oder eine Fassungsdurchbiegung bzw. Durchmuschelung und/oder eine Brückenweite bzw. einen Abstand zwischen den Gläsern (AzG) und/oder eine Brückenhöhe und/oder einen kleinsten bzw. minimalen für die Fassung geeigneter Rohglasdurchmesser und/oder einen Scheibenmittenabstand und/oder eine Scheibenform. In einer bevorzugten Ausführungsform legen die Gebrauchsdaten zumindest eine vorzugsweise individuelle Gebrauchssituation bzw. Anwendungssituation zumindest teilweise fest. Dazu umfassen die individuellen Benutzerdaten, insbesondere die individuellen Gebrauchsdaten, bevorzugte bzw. hauptsächlich genutzte Sehbereiche bzw. Bereiche bevorzugter bzw. hauptsächlich genutzter Blickwinkel des Brillenträgers und/oder eine Objektentfernung und/oder eine Vielzahl von Objektentfernungen für eine Vielzahl von Blickwinkeln bzw. Blickrichtungen.

In einer bevorzugten Ausführungsform umfasst das Bestimmen von Zentrierdaten für das prismatische Brillenglas:

- Bestimmen von Entwurfszentrierdaten bzw. Hilfszentrierdaten insbesondere eines Hilfszentrierpunkts bzw. Hilfsanpasspunkts unabhängig von den prismatischen Verordnungsdaten bzw. unter Vernachlässigung der prismatischen Verordnungsdaten; und

- Bestimmen von Zentierverschiebungsdaten relativ zu den Entwurfszentrierdaten bzw. Hilfszentrierdaten in Abhängigkeit von den bzw. unter Berücksichtigung der prismatischen Verordnungsdaten.

Vorzugsweise umfasst das Bestimmen von Hilfszentrierdaten ein Anbringen insbesondere einer permanenten und/oder einer nicht permanenten Hilfszentriermarkierung am und/oder im Brillenglas insbesondere auf zumindest einer Fläche des Brillenglases in Abhängigkeit von den bestimmten Hilfszentierdaten oder als zumindest ein Teil der Hilfszentrierdaten. Besonders bevorzugt umfasst das Anbringen der Hilfszentriermarkierung ein Stempeln eines Zentrierkreuzes und/oder einer anderen geeigneten Hilfszentriermarkierung auf der zumindest einen Fläche des Brillenglases, die insbesondere als Ausgangs- bzw. Referenzpunkt für die Bestimmung des Anpasspunkts auf Basis der Zentrierverschiebungsdaten dient. In einer bevorzugten Ausführngsform werden die Zentrierverschiebungsdaten vom Brillenglashersteller vorzugsweise während der Herstellung des Brillenglases individuell ermittelt und dem Optiker zur Verfügung gestellt.

Vorzugsweise umfasst das Entwerfen des Brillenglases mit prismatischer Wirkung bzw. des prismatischen Brillenglases:

- Ermitteln eines insbesondere nicht-prismatischen Designentwurfs, d.h. insbesondere eines Designentwurfs für ein Brillenglas ohne prismatische Wirkung, unter Berücksichtigung der bzw. in Abhängigkeit von den individuellen Benutzerdaten ohne die prismatischen Verordnungsdaten bzw. unter Vernachlässigung der prismatischen Verordnungsdaten; und

- Hinzufügen einer prismatischen Wirkung zum Designentwurf in Abhängigkeit von den prismatischen Verordnungsdaten.

Vorzugsweise erfolgt das Hinzufügen der prismatischen Wirkung unabhängig von weiteren individuellen optischen Korrektionswirkungen insbesondere unabhängig von den übrigen Benutzerdaten. Vorzugsweise erfolgt das Hinzufügen der prismatischen Wirkung durch ein Verkippen einer Rückfläche und/oder einer Vorderfläche im Designentwurf des Brillenglases relativ zueinander. Dabei wird je nach Wahl eines Koordinatensystems in diesem Koordinatensystem zumindest eine der beiden Flächen verkippt.

In einer bevorzugten Ausführungsform umfasst das Ermitteln eines insbesondere nicht prismatischen Designentwurfs ein Bestimmen bzw. Festlegen von Entwurfszentrierdaten bzw. Hilfszentrierdaten, insbesondere eines Entwurfszentrierpunkts bzw. Hilfszentrierpunkts. Vorzugsweise werden die Entwurfszentrierdaten, insbesondere der Entwurfszentrierpunkt bzw. Hilfszentrierpunkt derart bestimmt, dass ein gemäß dem Designentwurf gefertigtes insbesondere nicht prismatisches Entwurfs-Brillenglas bei Zentrierung für den Brillenträger gemäß den Entwurfszentrierdaten, insbesondere dem Entwurfszentrierpunkt und insbesondere bei einer Positionierung des EntwurfsBrillenglases gemäß den Gebrauchsdaten die von den Benutzerdaten umfassten individuellen Korrektionswirkungen für den Brillenträger erfüllt bzw. erfüllen würde. Dieses Entwurfs-Brillenglas wird vorzugsweise nicht gefertigt. Statt dessen dient dessen Designentwurf als bevorzugtes Hilfsdesign oder Design-Zwischenprodukt für das Entwerfen des endgültigen Brillenglases. In einer bevorzugten Ausführungsform umfasst ein solcher Designentwurf ein Zwischenergebnis bzw. Daten-Zwischenprodukt einer rechnergestützten Optimierungsverfahrens.

Vorzugsweise umfasst das Bestimmen des Anpasspunkts ein Ermitteln einer Anpassverschiebung bzw. Zentrierverschiebung $s_z$ als Verschiebung des Anpasspunkts relativ zum Hilfszentierpunkt. In einer bevorzugten Ausführungsfärm umfasst das Bestimmen der Zentrierdaten ein Ermitteln einer Dezentration $c_z$ als Verschiebung des für den Brillenträger individuell ermittelten Zentrierpunkts. Vorzugsweise entspricht die Dezentration der negativen Zentrierverschiebung, d.h. $c_z = -s_z$. Vorzugsweise bezeichnet die Zentrierverschiebung $s_z$ eine Verschiebung des Anpasspunkts relativ zum Hilfszentrierpunkt in Richtung zur Basis des Prismas des prismatischen Brillenglases. Die Dezentration $c_Z$ bezeichnet vorzugsweise ein Verschiebung des Zentrierpunkts in Richtung entgegengesetzt zur Basis bzw. von der Basis weg.

Vorzugsweise wird die Zentrierverschiebung $s_Z$ und/oder die Dezentration $c_Z$ in Abhängigkeit von den prismatischen Verordnungsdaten und weiteren individuellen Benutzerdaten ermittelt. Insbesondere umfassen die individuellen Benutzerdaten vorzugsweise einen Hornhautscheitelabstand e und/oder einen Augendrehpunktabstands b' und/oder eine Randdicke $d_R$ des Brillenglases und/oder eine Mittendicke und/oder eine minimale Dicke $d_{min}$ des Brillenglases und/oder eine Glasvorneigung bzw. Fassungsvorneigung bzw. einen pantoskoptischen Winkel und/oder eine Fassungsscheibenwinkel und/oder einen Brillenglasdurchmesser bzw. Scheibendurchmesser und/oder zumindest einen Brechwert und/oder eine Brechzahl des Brillenglases und/oder eine Basiskurve und/oder eine astigmatische Wirkung und/oder eine Addition, wobei die Zentierdaten und insbesondere die Zentrierverschiebung $s_Z$ und/oder die Dezentration $c_Z$ in Abhängigkeit von dem Hornhautscheitelabstand e und/oder dem Augendrehpunktabstands b' und/oder der Randdicke $d_R$ des Brillenglases und/oder der Mittendicke und/oder der minimalen Dicke $d_{min}$ des Brillenglases und/oder der Glasvorneigung bzw. Fassungsvorneigung bzw. dem pantoskopischen Winkel und/oder dem Fassungsscheibenwinkel und/oder dem Brillenglasdurchmesser bzw. Scheibendurchmesser und/oder dem zumindest einen Brechwert und/oder der Brechzahl des Brillenglases und/oder der Basiskurve und/oder der astigmatischen Wirkung und/oder der Addition bestimmt werden.

In einer bevorzugten Ausführungsform wird die Zentrierverschiebung $s_Z$ in der Einheit mm in Abhängigkeit vom Hornhautscheitelabstand e in der Einheit mm und der prismatischen Wirkung p in der Einheit cm/m gemäß

$$s_Z = \frac{(e+15)p}{10}$$

in Richtung zur Basis des Prismas ermittelt.

In einem Aspekt stellt die Erfindung ein Verfahren zur Herstellung eines Brillenglases mit prismatischer Wirkung bzw. eines prismatischen Brillenglases für einen Brillenträger bereit, welches umfasst

- Erfassen von individuellen Benutzerdaten des Brillenträgers, wobei die individuellen Benutzerdaten prismatische Verordnungsdaten umfassen;
- Ermitteln eines Designentwurfs unter Berücksichtigung der individuellen Benutzerdaten ohne die prismatischen Verordnungsdaten;
- Bestimmen eines Anpasspunkts und zumindest eines optischen Entwurfsbezugspunkts für zumindest eine optische Wirkungsgröße des Brillenglases in Abhängigkeit von den individuellen Benutzerdaten ohne die prismatischen Verordnungsdaten derart, dass ein gemäß dem Designentwurf gefertigtes Entwurfs-Brillenglas bei Zentrierung für den Brillenträger gemäß dem Anpasspunkt zumindest für einen durch den optischen Entwurfsbezugspunkt verlaufenden Hauptstrahl einen vorgegebenen Wert für die zumindest eine optische Wirkung für den Brillenträger erfüllt;

- Hinzufügen einer prismatischen Wirkung zum Designentwurf in Abhängigkeit von den prismatischen Verordnungsdaten; und
- Bestimmen einer Bezugspunktverschiebung $c_B$ in Abhängigkeit von den prismatischen Verordnungsdaten.

Vorzugsweise ist die zumindest eine optische Wirkungsgröße von den individuellen Benutzerdaten erfasst bzw. in den individuellen Benutzerdaten insbesondere für das Brillenglas individuell festgelegt, wobei dessen vorgegebener Wert der von den Benutzerdaten umfasste Wert für diese Wirkungsgröße ist, falls die zumindest eine optische Wirkung nicht die prismatischen Verordnungsdaten umfasst, und als Null festgelegt ist bzw. wird, wenn die optische Wirkungsgröße der prismatische Wirkung bzw. das Verordnungsprisma betrifft.

In einer bevorzugten Ausführungsform umfasst der zumindest eine optische Entwurfsbezugspunkt einen Prismenbezugspunkt, wobei der vorgegebene Wert für die zumindest eine optische Wirkungskungsgröße einen Wert Null für die prismatische Wirkung umfasst. In einer weiteren bevorzugten Ausführungsform umfasst der zumindest eine optische Entwurfsbezugspunkt einen Fernbezugspunkt, wobei der vorgegebene Wert für die zumindest eine optische Wirkungsgröße einen von den individullen Benutzerdaten umfassten Wert für die dioptrische Fernwirkung umfasst. In einer weiteren bevorzugten Ausführungsform umfasst der zumindest eine optische Entwurfsbezugspunkt einen Nahbezugspunkt, wobei der vorgegebene Wert für die zumindest eine optische Wirkungsgröße einen von den individullen Benutzerdaten umfassten Wert für die dioptrische Nahwirkung umfasst.

In einer bevorzugten Ausführungsform umfassen die prismatischen Verordnungsdaten eine Vertikalkomponente $p_y$ einer prismatischen Korrektionswirkung, wobei eine Vertikalkomponente $c_y$ (in mm) der Dezentration $c_Z$ und/oder der Bezugspunktverschiebung $c_B$ gemäß den Formeln

$$\delta = -\frac{p_y}{100} \qquad (p_y \text{ in cm/m})$$

$$\alpha_K = \frac{\delta}{n-1}$$

$$d_{Pr} = \frac{\varnothing |\tan \alpha_K|}{2} \approx \frac{\varnothing |\alpha_K|}{2} \quad , \quad \text{mit einem Brillenglasdurchmesser } \varnothing \text{ (in mm),}$$

$$z_K = b' + \frac{e+10}{100}\left(b' + d_{Pr} + d_{min} + \max(0, S')\right)\cos \alpha_V \text{ mit einem Augendrehpunktabstand b' (in mm), einem}$$

Hornhautscheitelabstand e (in mm), einer minimalen Dicke $d_{min}$ des Brillenglases (in mm) einem mittleren Brechwert S' des Brillenglases (in dpt),

$\Delta y_1 = y_{BP} - y_{BZ}$, mit einer vertikalen Positionskomponente $y_{BP}$ des optischen Entwurfsbezugspunkts (in mm) und einer vertikalen Positionskomponente $y_{BZ}$ des Anpasspunkts,

$$\varphi_1 = \arctan\left(\frac{\Delta y_1}{z_K}\right)$$

$$\varphi_2 = \varphi_1 + \delta$$

$$\Delta y_2 = z_K \tan \varphi_2$$

$$c_y = \Delta y_2 - \Delta y_1$$

bestimmt wird. In einer weiteren bevorzugten Ausführungsform erfolgt eine Bestimmung der Zentrierverschiebung $s_Z$ in analoger Weise, gegebenenfalls mit umgekehrtem Vorzeichen, wie bereits erwähnt.

Vorzugsweise umfasst das Verfahren

- Bestimmen zumindest einer objektseitigen "Soll"-Richtung als die Richtung des objektseitigen Abschnitts des Hauptstrahls durch den zumindest einen optischen Entwurfsbezugspunkt des Entwurfsbrillenglases; und
- Festlegen eines prismatischen Designentwurfs durch Hinzufügen einer prismatischen Wirkung zum Designentwurf in Abhängigkeit von den prismatischen Verordnungsdaten,

wobei das Bestimmen einer Bezugspunktverschiebung umfasst

- Festlegen zumindest eines um einen Startwert der zumindest einen Bezugspunktverschiebung relativ zu dem zumindest einen Entwurfsbezugspunkt verschobenen Entwurfsbezugspunkt;
- Ermitteln zumindest einer objektseitigen "Ist"-Richtung als die Richtung des objektseitigen Abschnitts des Hauptstrahls durch den zumindest einen verschobenen Entwurfsbezugspunkt auf Basis des prismatischen Designentwurfs;

und wobei das Verfahren ferner umfasst

- Bewerten des prismatischen Designentwurfs auf Basis der zumindest einen "Soll"-Richtung und der zumindest einen "ist"-Richtung.

Vorzugsweise wird im Falle einer unzureichenden Übereinstimmung der zumindest einen "Ist"-Richtung mit der zumindest einen "Soll"-Richtung im Schritt des Bewertens des prismatischen Designentwurfs eine weitere Bezugspunktverschiebung ermittelt. Im Falle einer ausreichenden Übereinstimmung der zumindest einen "ist"-Richtung mit der zumindest einen "Soll"-Richtung wird vorzugsweise der prismatische Designentwurf als Brillenglasdesign festgelegt. Auf Basis des so festgelegten Brillenglasdesigns könnte anschließend das Brillenglas gefertigt und insbesondere mit einer Zentriermarkierungs, wie z.B. einem Zentrierkreuz am Anpasspunkt versehen werden.

Vorzugsweise umfasst das Brillenglas eine Referenzfläche, auf oder bezüglich der der Anpasspunkt und/oder der zumindest eine optische Bezugspunkt bzw. Entwurfsbezugspunkt festgelegt bzw. verschoben wird, und eine Rezeptfläche, welche in Abhängigkeit von den individuellen optischen Korrektionsdaten ermittelt bzw. angepasst wird. In einer bevorzugten Ausführungsform ist das prismatische Brillenglas ein individuelles Mehrstärkenbrillenglas, insbesondere ein individuelles progressives Brillenglas, wobei die Referenzfläche die progressive Fläche zumindest teilweise umfasst. Vorzugsweise bezeichnet die Referenzfläche ein Fläche des Brillenglases, die eine Vielzahl von bevorzugten Bezugspunkten, insbesondere einen Prismenbezugspunkt und/oder einen Fernbezugspunkt und/oder einen Nahbezugspunkt umfasst oder eine Fläche, der nach ihrer optischen Wirkung solche Bezugspunkte zugeordnet sind bzw. werden können. Insbesondere für ein progressives Brillenglas mit zumindest einer progressiven Fläche umfasst die Referenzfläche zumindest teilweise die progressive Fläche. In einer bevorzugten Ausführungsform bildet die Referenzfläche zumindest teilweise die Vorderfläche des Brillenglases, während die Rezeptfläche zumindest teilweise die Rückfläche des Brillenglases bildet. In einer anderen bevorzugten Ausführungsform bildet die Referenzfläche die Rückfläche des Brillenglases, während die Rezeptfläche die Vorderfläche bildet. In einer weiteren bevorzugten Ausführungsform fallen die Referenzfläche und die Rezeptfläche zumindest teilweise zusammen und bilden dabei zumindest teilweise entweder die Vorderfläche oder die Rückfläche des Brillenglases. Es ist dabei nicht erforderlich, dass die Bezugspunkte auf der Referenzfläche angeordnet sind. Insbesondere bei einem progressiven Brillenglas könnte die Referenzfläche zumindest einen Teil der Rückfläche umfassen, wobei die Bezugspunkte, insbesondere ein Prismenbezugspunkt und/oder ein Fernbezugspunkt und/oder ein Nahbezugspunkt auf der Vorderfläche angeordnet bzw. definiert sind.

Vorzugsweise umfasst das Verfahren einen Schritt des Festlegens eines korrigierten prismatischen Designentwurfs, welcher vorzugsweise umfasst:

- Verschieben der Rezeptfläche relativ zur Referenzfläche und/oder der Referenzfläche relativ zum Anpasspunkt in Abhängigkeit von der zumindest einen Bezugspunktverschiebung; und
- Ermitteln eines korrigierten prismatischen Designentwurfs durch Optimieren der Rezeptfläche in Abhängigkeit von den Benutzerdaten,

wobei das Ermitteln der zumindest einen objektseitigen "Ist"-Richtung als die Richtung des objektseitigen Abschnitts des Hauptstrahls durch den zumindest einen verschobenen Entwurfsbezugspunkt auf Basis des korrigierten prismatischen Designentwurfs erfolgt.

Vorzugsweise umfasst der Schritt des Festlegens eines korrigierten prismatischen Designentwurfs:

Verschieben einer Vielzahl von Bezugspunkten bzw. Entwurfsbezugspunkten relativ zum Anpasspunkt in Abhängigkeit von der zumindest einen Bezugspunktverschiebung bzw. entsprechend der zumindest einen Bezugspunktverschiebung; und

- Ermitteln eines korrigierten prismatischen Designentwurfs durch Optimieren der Rezeptfläche in Abhängigkeit von den Benutzerdaten,

wobei das Ermitteln der zumindest einen objektseitigen "Ist"-Richtung als die Richtung des objektseitigen Abschnitts des Hauptstrahls durch den zumindest einen verschobenen Entwurfsbezugspunkt auf Basis des korrigierten prismatischen Designentwurfs erfolgt.

Vorzugsweise umfasst das Verfahren ein Fertigen des Brillenglases mit einer Zentriermarkierung, insbesondere einem Zentrierkreuz am Anpasspunkt und/oder zur Kenntlichmachung bzw. zum Markieren des Zentrierpunkts.

Außerdem stellt die Erfindung ein Computerprogrammprodukt bereit, welches Programmcode umfasst, welcher, wenn in einem Computersystem geladen und ausgeführt, zur Durchführung eines Verfahrens gemäß der vorliegenden Erfindung oder bevorzugten Ausführungsform ausgelegt ist.

Außerdem stellt die Erfindung ein System zur Herstellung eines prismatischen Brillenglases bereit, wobei das System ausgelegt ist, ein Verfahren gemäß der vorliegenden Erfindung oder einer bevorzugten Ausführungsform auszuführen.

Außer dem stellt die Erfindung ein prismatisches Brillenglas bzw. ein Brillenglas mit einer prismatischen Wirkung für einen Brillenträger bereit, umfassend einen Anpasspunkt derart, dass dieser für eine korrekte Zentrierung des Brillenglases für den Brillenträger in der Gebrauchsstellung des Brillenglases insbesondere gemäß den individuellen Benutzerdaten und bei Nullblickrichtung des Brillenträgers horizontal vor der Pupille des Brillenträgers angeordnet ist bzw. für eine korrekte Zentrierung anzuordnen ist, wobei am Anpasspunkt eine Zentriermarkierung, insbesondere ein Zentrierkreuz angeordnet ist.

Die Erfindung wird nachfolgend mit Bezug auf begleitende Zeichnungen bevorzugter Ausführungsformen beispielhaft beschrieben. Dabei zeigen:

Fig. 1:     einen schematischen Querschschnitt eines Brillenglasdesigns zur Veranschlaulichung einer ersten bevorzugten Ausführungsform der vorliegenden Erfindung;

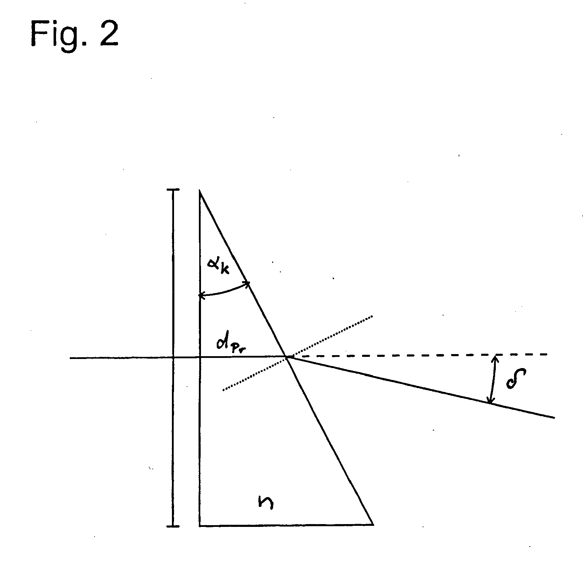

Fig. 2:     eine schematische Darstellung eines Planprismas in Grundablenkung als Hintergrund zur Veranschlaulichung einer zweiten bevorzugten Ausführungsform der vorliegenden Erfindung;

Fig. 3:     eine schematische Darstellung einer Beeinflussung des Strahlengangs durch das Einführen einer prismatischen Wirkung für ein Brillenglas; und

Fig. 4:     eine schematische Darstellung eines Strahlengangs bei binokularem Sehen durch eine Brille mit beispielhaften prismatischen Brillengläsern.

Für eine Bestimmung einer Verschiebung von Bezugspunkten, insbesondere eine Bezugspunktverschiebung $c_B$, werden vorzugsweise eine Vielzahl von Einflussgrößen berücksichtigt. Diese umfassen vorzugsweise individuelle Verordnungsdaten, wie z.B. Sphäre, Zylinder, Achse, Prisma, Basis und/oder Addition, und/oder individuelle Gebrauchsstellungsdaten, wie z.B. Hornhautscheitelabstand (HSA), Vorneigung und/oder Fassungsscheibenwinkel, und/oder Brillenglasparameter, wie z.B. Basiskurve, Mittendicke und/oder Brechzahl. Vorzugsweise werden zumindest einige dieser Einflussgrößen dem Hersteller insbesondere bei der Bestellung des Brillenglases übermittelt. Vorzugsweise führt der Hersteller insbesondere unter Berücksichtigung der übermittelten Einflussgrößen ein Verfahren zur Herstellung eines prismatischen Brillenglas gemäß der vorliegenden Erfindung, insbesondere in einer bevorzugten Ausführungsform durch. Vorzugsweise berechnet der Hersteller die Position eines Durchblickpunktes auf dem Brillenglas nach der Einstellbewegung der Augen der Brillenträgers näherungsweise oder exakt. Die Abweichung vom ursprünglichen Bezugspunkt, insbesondere einem korrespondierenden Durchblickpunkt für dieselbe Objektstrahlrichtung, wird vorzugsweise dem Kunden bzw. dem Optiker mitgeteilt, damit dieser eine Zentrierkorrektur (BZ und damit das gesamte Glas wird verschoben) nicht nur annähern muss, sondern mit den vom Hersteller bestimmten Werten bzw. Angaben (z.B. in Form von Anpasspunktmarkierungen) mit besserer Genauigkeit und einfacher durchführen kann.

In einer bevorzugten Ausführungsform werden insbesondere bei der Herstellung bzw. Optimierung insbesondere durch den Hersteller Verschiebungen insbesondere die Bezugspunktverschiebung $c_B$ zumindest eines Bezugspunktes, vorzugsweise aller Bezugspunkte und Sehbereiche mit Ausnahme des Anpasspunkts, im Glas, insbesondere relativ zum Anpasspunkt, verschoben. Der Optiker muss dann beim Einschleifen der Gläser keine Unterscheidung mehr zwischen prismatischen und nicht prismatischen Brillengläsern machen, was den Arbeitsablauf deutlich erleichtert und zudem eine mögliche Fehlerquelle eliminiert.

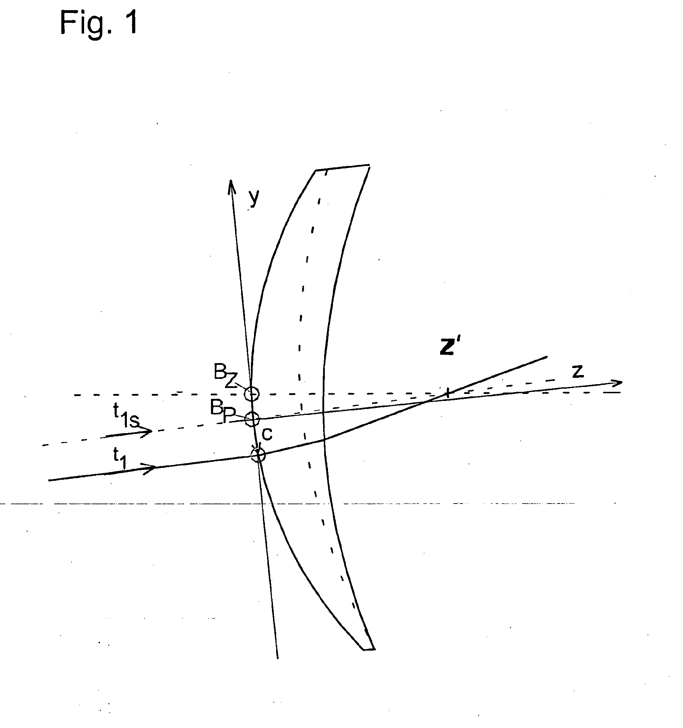

Ein Verfahren gemäß einer bevorzugten Ausführungsform der vorliegenden Erfindung wird mit Bezug auf Fig. 1 beschreiben. Dabei wird zunächst von einem

Designentwurf ausgegangen, der eine Vielzahl, vorzugsweise alle individuellen Verordnungsdaten für den Brillenträger mit Ausnahme der verordneten prismatischen Wirkung bzw. des Verordnungsprismas erfüllt. Für diesen Designentwurf wird ein Entwurfsbezugspunkt, insbesondere ein Entwurfs-Prismenbezugspunkt $B_P$, und ein Anpasspunkt $B_Z$ auf der Vorderfläche festgelegt. Vorzugsweise wird ein kartesisches Koordinatensystem (x-y-z) festgelgt, dessen x-y-Ebene vorzugsweise tangential zur Vorderfläche im Prismenbezugspunkt $B_P$ liegt. Die z-Achse verläuft vorzugsweise senkrecht dazu. Der Koordinatenursprung wird vorzugsweise im Prismenbezugspunkt festgelegt. Außerdem wird eine Nullblickachse entlang einer Nullblickrichtung durch den Anpasspunkt $B_Z$ mit einem Augendrehpunkt Z' vorzugsweise gemäß individuellen Benutzerdaten festgelegt. Insbesondere wird zur Bereitstellung des Designentwurfs die Rezeptfläche (Verkippung und Krümmungen) ohne Prisma berechnet.

Für das Entwurfsbrillenglas gemäß dem Designentwurf, d.h. ohne Prisma, wird der Hauptstrahl durch den Augendrehpunkt Z' und den Prismenbezugspunkt $B_P=(p_{1x},p_{1y})$ bestimmt und dessen objektseitige Richtung als "Soll"-Richtung $t_{1S}$ festgelegt. Anschließend wird die prismatische Wirkung, insbesondere das Verordnungsprisma hinzugefügt, z.B. durch Verkippen der Rückfläche im Koordinatensystem, und ein Startwert für die Bezugspunktverschiebung c wird nach folgenden Formel bestimmt:

$$c_y = c_{90} = -\frac{b'\, p_y}{10} = -\frac{b'\, p_{90}}{10} \;\; ;$$

mit $p_y = p_{90} = p \sin \beta$ für eine Prismenkomponente mit Basislage 90°;

$$c_x = c_0 = -\frac{b'\, p_x}{10} = -\frac{b'\, p_0}{10}$$

mit $p_x = p_0 = p \cos \beta$ für eine Prismenkomponente mit Basislage 0°.

Dabei werden die Bezugspunktverschiebung c = ($c_x$ ; $c_y$) und der Augendrehpunktabstand b' vorzugsweise in Einheiten von mm und das Prisma p = ($p_x$ ; $p_y$) in der Einheit cm/m eingesetzt.

Vorzugsweise werden zusammen mit dem Prismenbezugspunkt $B_P$ auch weitere Bezugspunkte, z.B. ein Fernbezugspunkt und/oder ein Nahbezugspunkt, und/oder Sehbereiche, z.B. ein Fernbereich und/oder in Nahbereich und/oder ein Kanalbereich eines progressiven Brillenglases, insbesondere auf der Vorderfläche verschoben, beispielsweise um die selben Werte $c_x$ und $c_y$. Die Rezeptfläche wird anschließend neu berechnet und der Hauptstrahl durch den verschobenen Bezugspunkt $B_P$, sowie die resultierende "Ist"-Richtung $t_1$ ermittelt.

In einer bevorzugten Ausführungsform wird eine simultane Iteration in x und y durchgeführt, z.B. wird über eine einfache Iteration (z.B. Newtonmethode) in (x1,y1) der Bezugspunkt $B_P$ auf der Vorderfläche solange verschoben (und jedes Mal die Rezeptfläche neu berechnet), bis die "Ist"-Richtung $t_1$ und die "Soll"-Richtung $t_{1s}$ hinreichend genau übereinstimmen. Der Anpasspunkt $B_Z$ bleibt hierbei unverändert.

Für die Verschiebung gilt insbesondere

$$\bar{c} = \begin{pmatrix} c_x \\ c_y \end{pmatrix} = \begin{pmatrix} p_{2x} \\ p_{2y} \end{pmatrix} - \begin{pmatrix} p_{1x} \\ p_{1y} \end{pmatrix}$$

In einer bevorzugten Ausführungsform wird eine getrennte Iteration in y und x durchgeführt. Die äußere Iteration läuft nur über die y-Koordinate. In jedem Horizontalschnitt wird dann mit den bekannten Methoden die zugehörige x-Koordinate des Durchstoßpunktes des Hauptstrahles auf der Glasvorderfläche bestimmt (Hauptblicklinienberechnung), z.B. mit folgenden Schritten

Festlegen: $p_{2y} = y_{BP} + c_{90} = p_{1y} + c_{90}$
Festlegen eines Startwerts $\Delta y = 0$

a) Ersetzen von $p_{2y}$ durch $p_{2y} + 25\Delta y$
b) Berechne Rezeptfläche (Verkippung und Krümmungen)
c) Aktualisiere die Hauptblicklinie in der Höhe $p_{2y} \Rightarrow p_{2x}$, $c_x$

d) Berechne Hauptstrahl vom Augendrehpunkt durch den Prismenbezugspunkt bzw. verschobenen Prismenbezugspunkt

e) Setze: $\Delta y = t_{1y} - t_{1Sy}$

f) wenn $\Delta y$ hinreichend klein, dann Abbruch, sonst Wiederholung ab a) mit $c_y = p_{2y} - p_{1y}$

Oft kommt einer genauen Berechnung der vertikalen Verschiebung $c_y$ eine höhere Bedeutung zu als der genauen Berechnung der horizontalen Verschiebung $c_x$, da die Fusionsmechanismen des Augenpaares in vertikaler Richtung deutlich eingeschränkt sind und deshalb die induzierten vertikalen Prismendifferenzen bei erheblich kleineren Werten (z.B. 0.5 cm/m) zu Unverträglichkeiten (asthenopische Beschwerden, Doppelbilder) führen können.

Kann der Hersteller wegen fehlender Daten oder Berechnungstools keine Hauptstrahliteration in der Gebrauchstellung durchführen, so kann mit dem nachfolgenden Formelsatz mit Bezug auf Fig. 4 die vertikale Verschiebung berechnet werden:

Ablenkungswinkel

$$\delta = -\frac{p_y}{100} \quad (p_y \text{ in cm/m}) \tag{1}$$

Keilwinkel

$$\alpha_K = \frac{\delta}{n-1} \tag{2}$$

Dicke Prismenkeil

$$d_{Pr} = \frac{\varnothing |\tan \alpha_K|}{2} \approx \frac{\varnothing |\alpha_K|}{2} \tag{3}$$

mit einem Brillenglasdurchmesser $\varnothing$ (in mm),

$$z_K = b' + \frac{e+10}{100}\left(b' + d_{Pr} + d_{min} + \max(0, S')\right)\cos \alpha_v \tag{4}$$

mit einem Augendrehpunktabstand b' (in mm), einem Hornhautscheitelabstand e (in mm), einer minimalen Dicke $d_{min}$ des Brillenglases (in mm) einem mittleren Brechwert S' des Brillenglases (in dpt),

$$\Delta y_1 = y_{BP} - y_{BZ} \tag{5}$$

mit einer vertikalen Positionskomponente $y_{BP}$ des optischen Entwurfsbezugspunkts (in mm) und einer vertikalen Positionskomponente $y_{BZ}$ des Anpasspunkts,

$$\varphi_1 = \arctan\left(\frac{\Delta y_1}{z_K}\right) \tag{6}$$

$$\varphi_2 = \varphi_1 + \delta \tag{7}$$

$$\Delta y_2 = z_K \tan \varphi_2 \tag{8}$$

$$=> \quad c_y = \Delta y_2 - \Delta y_1 \tag{9}$$

mit:

| | |
|---|---|
| e | Hornhautscheitelabstand (z.B. 13mm) |
| b' | Augendrehpunktabstand (z.B. e+13.5) |
| $d_R$ | Randdicke des Glases |
| $d_{min}$ | minimale Brillenglasdicke (insbesondere minimale Randdicke des Brillenglases) |
| $y_{BP}$ | y-Koordinate Prismenbezugspunkt ($p_{1y}$) |
| $y_{BZ}$ | y-Koordinate Zentrierpunktes |
| $\alpha_v$ | Glasvorneigung (z.B. 9°/180*) |
| $c_y$ | vertikale Verschiebung |

Die durch die vorliegende Erfindung erreichbare Verbesserung zeigt eine beispielhafte systematische Berechnung von 90 Gläsern.

Brechzahl n = 1.597, Glasdurchmesser = 65 mm, Anpasspunktpunkt (bzw. Zentrierpunkt) BZ=(0 ; 4 mm), Prismenbezugspunkt BP=(0,0)

5 verschiedene Wirkungen S' : -10.0 dpt, -5.0 dpt, 0.0 dpt, +5.0 dpt, +10.0 dpt
2 verschiedene Vertikalprismen P90: - 6.0 cm/m, + 6.0 cm/m
3 verschiedene Vorneigungen: 0°, 10°, 20°
3 verschiedende Hornhautscheitelabstände e: 8 mm, 14 mm, 20 mm

Für jedes Glas wurde die vertikale Verschiebung mittels Iterationsverfahrens in einer bevorzugten Ausführungsform der vorliegenden Erfindung, wie oben beschrieben bestimmt und dann mit anderen in Tabelle 1 angegebenen bevorzugten Berechungsverfahren für die vertikale Komponente $c_v$ der ermittelten Dezentration c verglichen. Die Abweichungen dieser anderen bevorzugten Verfahren von dem bevorzugten Iternationsverfahren sind in Form statistischer Mittelwerte über alle 90 beispielhaften Gläser in Tabelle 1 zusammengefasst. Tabelle 2 zeigt die entsprechenden Vergleichswerte der Dezentration c für alle 90 Gläser einzeln aufgelistet.

Tabelle 1:

| Methode | | Quadratisches Mittel der Abweichungen | größter Einzelfehler |
|---|---|---|---|
| 1 | $c_v = 0.25p$ | 0.41 mm | 0.82 mm |
| 2 | $c_v = 0.3$ | 0.31 mm | 0.51 mm |
| 3 | $c_v = \dfrac{b' p}{10}$ | 0.14 mm | 0.30 mm |
| 4 | $c_v = \dfrac{(e+15)p}{10}$ | 0.07 mm | 0.21 mm |
| 5 | Obiger Formelsatz (Formeln (1) bis (9)) | 0.04 mm | 0.09 mm |

Tabelle 2:

| Sph | Vorn. | Pr90 | HSA | iterativ | Pro CM/M | Methode 1 | Methode 2 | Methode 3 | Methode 4 | Methode 5 |
|---|---|---|---|---|---|---|---|---|---|---|
| -10.00 | 0.00 | -6.00 | 20.0 | 2.07 | 0.34 | -0.57 | -0.27 | -0.06 | 0.03 | 0.03 |
| -10.00 | 0.00 | -6.00 | 14.0 | 1.72 | 0.29 | -0.22 | 0.08 | -0.07 | 0.02 | 0.01 |
| -10.00 | 0.00 | -6.00 | 8.0 | 1.38 | 0.23 | 0.12 | 0.42 | -0.09 | 0.00 | -0.02 |

(fortgesetzt)

| Sph | Vorn. | Pr90 | HSA | iterativ | Pro CM/M | Methode 1 | Methode 2 | Methode 3 | Methode 4 | Methode 5 |
|---|---|---|---|---|---|---|---|---|---|---|
| -10.00 | 10.00 | -6.00 | 20.0 | 2.05 | 0.34 | -0.55 | -0.25 | -0.04 | 0.05 | 0.04 |
| -10.00 | 10.00 | -6.00 | 14.0 | 1.69 | 0.28 | -0.19 | 0.11 | -0.04 | 0.05 | 0.03 |
| -10.00 | 10.00 | -6.00 | 8.0 | 1.34 | 0.22 | 0.16 | 0.46 | -0.05 | 0.04 | 0.02 |
| -10.00 | 20.00 | -6.00 | 20.0 | 2.10 | 0.35 | -0.60 | -0.30 | -0.09 | 0.00 | -0.04 |
| -10.00 | 20.00 | -6.00 | 14.0 | 1.71 | 0.29 | -0.21 | 0.09 | -0.06 | 0.03 | -0.01 |
| -10.00 | 20.00 | -6.00 | 8.0 | 1.34 | 0.22 | 0.16 | 0.46 | -0.05 | 0.04 | 0.01 |
| -5.00 | 0.00 | -6.00 | 20.0 | 2.07 | 0.34 | -0.57 | -0.27 | -0.06 | 0.03 | 0.03 |
| -5.00 | 0.00 | -6.00 | 14.0 | 1.72 | 0.29 | -0.22 | 0.08 | -0.07 | 0.02 | 0.01 |
| -5.00 | 0.00 | -6.00 | 8.0 | 1.38 | 0.23 | 0.12 | 0.42 | -0.09 | 0.00 | -0.02 |
| -5.00 | 10.00 | -6.00 | 20.0 | 2.05 | 0.34 | -0.55 | -0.25 | -0.04 | 0.05 | 0.04 |
| -5.00 | 10.00 | -6.00 | 14.0 | 1.69 | 0.28 | -0.19 | 0.11 | -0.04 | 0.05 | 0.04 |
| -5.00 | 10.00 | -6.00 | 8.0 | 1.34 | 0.22 | 0.17 | 0.46 | -0.05 | 0.04 | 0.02 |
| -5.00 | 20.00 | -6.00 | 20.0 | 2.09 | 0.35 | -0.59 | -0.29 | -0.08 | 0.01 | -0.03 |
| -5.00 | 20.00 | -6.00 | 14.0 | 1.71 | 0.28 | -0.21 | 0.09 | -0.06 | 0.03 | 0.00 |
| -5.00 | 20.00 | -6.00 | 8.0 | 1.33 | 0.22 | 0.17 | 0.47 | -0.04 | 0.05 | 0.01 |
| 0.00 | 0.00 | -6.00 | 20.0 | 2.09 | 0.35 | -0.58 | -0.29 | -0.08 | 0.01 | 0.01 |
| 0.00 | 0.00 | -6.00 | 14.0 | 1.73 | 0.29 | -0.23 | 0.07 | -0.08 | 0.01 | 0.00 |
| 0.00 | 0.00 | -6.00 | 8.0 | 1.39 | 0.23 | 0.12 | 0.41 | -0.10 | -0.01 | -0.02 |
| 0.00 | 10.00 | -6.00 | 20.0 | 2.06 | 0.34 | -0.56 | -0.26 | -0.05 | 0.04 | 0.03 |
| 0.00 | 10.00 | -6.00 | 14.0 | 1.69 | 0.28 | -0.19 | 0.11 | -0.04 | 0.05 | 0.03 |
| 0.00 | 10.00 | -6.00 | 8.0 | 1.33 | 0.22 | 0.16 | 0.47 | -0.04 | 0.05 | 0.02 |
| 0.00 | 20.00 | -6.00 | 20.0 | 2.11 | 0.35 | -0.61 | -0.31 | -0.10 | -0.01 | -0.05 |
| 0.00 | 20.00 | -6.00 | 14.0 | 1.72 | 0.29 | -0.22 | 0.08 | -0.07 | 0.02 | -0.01 |
| 0.00 | 20.00 | -6.00 | 8.0 | 1.33 | 0.22 | 0.16 | 0.47 | -0.04 | 0.05 | 0.02 |
| 5.00 | 0.00 | -6.00 | 20.0 | 2.13 | 0.36 | -0.62 | -0.33 | -0.12 | -0.03 | 0.05 |
| 5.00 | 0.00 | -6.00 | 14.0 | 1.77 | 0.29 | -0.26 | 0.03 | -0.12 | -0.03 | 0.03 |
| 5.00 | 0.00 | -6.00 | 8.0 | 1.41 | 0.24 | 0.10 | 0.39 | -0.12 | -0.03 | 0.01 |
| 5.00 | 10.00 | -6.00 | 20.0 | 2.10 | 0.35 | -0.60 | -0.30 | -0.09 | 0.00 | 0.08 |
| 5.00 | 10.00 | -6.00 | 14.0 | 1.72 | 0.29 | -0.23 | 0.08 | -0.07 | 0.02 | 0.07 |
| 5.00 | 10.00 | -6.00 | 8.0 | 1.35 | 0.23 | 0.15 | 0.45 | -0.06 | 0.03 | 0.06 |
| 5.00 | 20.00 | -6.00 | 20.0 | 2.15 | 0.36 | -0.66 | -0.35 | -0.14 | -0.05 | -0.01 |
| 5.00 | 20.00 | -6.00 | 14.0 | 1.75 | 0.29 | -0.26 | 0.05 | -0.10 | -0.01 | 0.02 |
| 5.00 | 20.00 | -6.00 | 8.0 | 1.35 | 0.22 | 0.14 | 0.45 | -0.06 | 0.03 | 0.05 |
| 10.00 | 0.00 | -6.00 | 20.0 | 2.28 | 0.38 | -0.77 | -0.48 | -0.27 | -0.18 | -0.01 |
| 10.00 | 0.00 | -6.00 | 14.0 | 1.89 | 0.32 | -0.38 | -0.09 | -0.24 | -0.15 | -0.02 |
| 10.00 | 0.00 | -6.00 | 8.0 | 1.51 | 0.25 | 0.01 | 0.29 | -0.22 | -0.13 | -0.04 |
| 10.00 | 10.00 | -6.00 | 20.0 | 2.24 | 0.37 | -0.74 | -0.44 | -0.23 | -0.14 | 0.03 |
| 10.00 | 10.00 | -6.00 | 14.0 | 1.84 | 0.31 | -0.34 | -0.04 | -0.19 | -0.10 | 0.03 |

(fortgesetzt)

| Sph | Vorn. | Pr90 | HSA | iterativ | Pro CM/M | Methode 1 | Methode 2 | Methode 3 | Methode 4 | Methode 5 |
|---|---|---|---|---|---|---|---|---|---|---|
| 10.00 | 10.00 | -6.00 | 8.0 | 1.44 | 0.24 | 0.06 | 0.36 | -0.15 | -0.06 | 0.03 |
| 10.00 | 20.00 | -6.00 | 20.0 | 2.30 | 0.38 | -0.80 | -0.50 | -0.29 | -0.20 | -0.07 |
| 10.00 | 20.00 | -6.00 | 14.0 | 1.86 | 0.31 | 0.38 | -0.06 | -0.21 | -0.12 | -0.03 |
| 10.00 | 20.00 | -6.00 | 8.0 | 1.44 | 0.24 | 0.05 | 0.36 | -0.15 | -0.06 | 0.01 |
| -10.00 | 0.00 | 6.00 | 20.0 | -2.18 | 0.36 | 0.68 | 0.38 | 0.17 | 0.08 | 0.05 |
| -10.00 | 0.00 | 6.00 | 14.0 | -1.83 | 0.31 | 0.33 | 0.03 | 0.18 | 0.09 | 0.07 |
| -10.00 | 0.00 | 6.00 | 8.0 | -1.48 | 0.25 | -0.01 | -0.32 | 0.19 | 0.10 | 0.09 |
| -10.00 | 10.00 | 6.00 | 20.0 | -2.09 | 0.35 | 0.59 | 0.29 | 0.08 | -0.01 | -0.03 |
| -10.00 | 10.00 | 6.00 | 14.0 | -1.74 | 0.29 | 0.24 | -0.06 | 0.09 | 0.00 | -0.01 |
| -10.00 | 10.00 | 6.00 | 8.0 | -1.40 | 0.23 | -0.10 | -0.40 | 0.11 | 0.02 | 0.01 |
| -10.00 | 20.00 | 6.00 | 20.0 | -2.06 | 0.34 | 0.56 | 0.26 | 0.05 | -0.04 | -0.03 |
| -10.00 | 20.00 | 6.00 | 14.0 | -1.70 | 0.28 | 0.20 | -0.10 | 0.05 | -0.04 | -0.03 |
| -10.00 | 20.00 | 6.00 | 8.0 | -1.35 | 0.22 | -0.15 | -0.45 | 0.06 | -0.03 | -0.03 |
| -5.00 | 0.00 | 6.00 | 20.0 | -2.16 | 0.36 | 0.66 | 0.36 | 0.15 | 0.06 | 0.04 |
| -5.00 | 0.00 | 6.00 | 14.0 | -1.81 | 0.30 | 0.31 | 0.01 | 0.16 | 0.07 | 0.06 |
| -5.00 | 0.00 | 6.00 | 8.0 | -1.47 | 0.25 | -0.03 | -0.33 | 0.18 | 0.09 | 0.08 |
| -5.00 | 10.00 | 6.00 | 20.0 | -2.08 | 0.35 | 0.57 | 0.28 | 0.07 | -0.02 | -0.04 |
| -5.00 | 10.00 | 6.00 | 14.0 | -1.73 | 0.29 | 0.23 | -0.07 | 0.08 | -0.01 | -0.03 |
| -5.00 | 10.00 | 6.00 | 8.0 | -1.38 | 0.23 | -0.12 | -0.42 | 0.09 | 0.00 | -0.01 |
| -5.00 | 20.00 | 6.00 | 20.0 | -2.05 | 0.34 | 0.55 | 0.25 | 0.04 | -0.05 | -0.04 |
| -5.00 | 20.00 | 6.00 | 14.0 | -1.69 | 0.28 | 0.19 | -0.11 | 0.04 | -0.05 | -0.04 |
| -5.00 | 20.00 | 6.00 | 8.0 | -1.34 | 0.22 | -0.17 | -0.46 | 0.05 | -0.04 | -0.04 |
| 0.00 | 0.00 | 6.00 | 20.0 | -2.16 | 0.36 | 0.66 | 0.36 | 0.15 | 0.06 | 0.04 |
| 0.00 | 0.00 | 6.00 | 14.0 | -1.81 | 0.30 | 0.31 | 0.01 | 0.16 | 0.07 | 0.05 |
| 0.00 | 0.00 | 6.00 | 8.0 | -1.46 | 0.24 | -0.04 | -0.34 | 0.17 | 0.08 | 0.06 |
| 0.00 | 10.00 | 6.00 | 20.0 | -2.08 | 0.35 | 0.58 | 0.28 | 0.07 | -0.02 | -0.04 |
| 0.00 | 10.00 | 6.00 | 14.0 | -1.72 | 0.29 | 0.22 | -0.08 | 0.07 | -0.02 | -0.03 |
| 0.00 | 10.00 | 6.00 | 8.0 | -1.37 | 0.23 | -0.13 | -0.43 | 0.08 | -0.01 | -0.02 |
| 0.00 | 20.00 | 6.00 | 20.0 | -2.06 | 0.34 | 0.55 | 0.26 | 0.05 | -0.04 | -0.02 |
| 0.00 | 20.00 | 6.00 | 14.0 | -1.70 | 0.28 | 0.19 | -0.10 | 0.05 | -0.04 | -0.03 |
| 0.00 | 20.00 | 6.00 | 8.0 | -1.33 | 0.22 | -0.18 | -0.47 | 0.04 | -0.05 | -0.04 |
| 5.00 | 0.00 | 6.00 | 20.0 | -2.19 | 0.37 | 0.69 | 0.39 | 0.18 | 0.09 | -0.03 |
| 5.00 | 0.00 | 6.00 | 14.0 | -1.82 | 0.30 | 0.33 | 0.02 | 0.17 | 0.08 | -0.01 |
| 5.00 | 0.00 | 6.00 | 8.0 | -1.46 | 0.24 | -0.03 | -0.34 | 0.17 | 0.08 | 0.01 |
| 5.00 | 10.00 | 6.00 | 20.0 | -2.12 | 0.35 | 0.61 | 0.32 | 0.11 | 0.02 | -0.09 |
| 5.00 | 10.00 | 6.00 | 14.0 | -1.75 | 0.29 | 0.24 | -0.05 | 0.10 | 0.01 | -0.08 |
| 5.00 | 10.00 | 6.00 | 8.0 | -1.38 | 0.23 | -0.12 | -0.42 | 0.09 | 0.00 | -0.06 |
| 5.00 | 20.00 | 6.00 | 20.0 | -2.12 | 0.35 | 0.60 | 0.32 | 0.11 | 0.02 | -0.05 |

(fortgesetzt)

| Sph | Vorn. | Pr90 | HSA | iterativ | Pro CM/M | Methode 1 | Methode 2 | Methode 3 | Methode 4 | Methode 5 |
|---|---|---|---|---|---|---|---|---|---|---|
| 5.00 | 20.00 | 6.00 | 14.0 | -1.74 | 0.29 | 0.21 | -0.06 | 0.09 | 0.00 | -0.06 |
| 5.00 | 20.00 | 6.00 | 8.0 | -1.36 | 0.23 | -0.17 | -0.44 | 0.07 | -0.02 | -0.07 |
| 10.00 | 0.00 | 6.00 | 20.0 | -2.31 | 0.39 | 0.82 | 0.51 | 0.30 | 0.21 | 0.01 |
| 10.00 | 0.00 | 6.00 | 14.0 | -1.92 | 0.32 | 0.43 | 0.12 | 0.27 | 0.18 | 0.02 |
| 10.00 | 0.00 | 6.00 | 8.0 | -1.53 | 0.25 | 0.04 | -0.27 | 0.24 | 0.15 | 0.03 |
| 10.00 | 10.00 | 6.00 | 20.0 | -2.26 | 0.38 | 0.74 | 0.46 | 0.25 | 0.16 | -0.03 |
| 10.00 | 10.00 | 6.00 | 14.0 | -1.86 | 0.31 | 0.35 | 0.06 | 0.21 | 0.12 | -0.03 |
| 10.00 | 10.00 | 6.00 | 8.0 | -1.46 | 0.24 | -0.05 | -0.34 | 0.17 | 0.08 | -0.03 |
| 10.00 | 20.00 | 6.00 | 20.0 | -2.30 | 0.38 | 0.75 | 0.50 | 0.29 | 0.20 | 0.04 |
| 10.00 | 20.00 | 6.00 | 14.0 | -1.88 | 0.31 | 0.34 | 0.08 | 0.23 | 0.14 | 0.01 |
| 10.00 | 20.00 | 6.00 | 8.0 | -1.46 | 0.24 | -0.08 | -0.34 | 0.17 | 0.08 | -0.01 |
| Sph | Vorn. | Pr90 | HSA | exakt | Pro CM/M | d(N1) | d(N1) | d(N2) | d(N3) | d(N4) |
| Fehler: | | | | | | | | | | |
| arithmetisches Mittel | | | | | 0.29 | 0.01 | 0.02 | 0.02 | 0.02 | 0.00 |
| quadratisches Mittel | | | | | 0.30 | 0.41 | 0.31 | 0.14 | 0.07 | 0.04 |
| groesster Fehler | | | | | | 0.82 | 0.51 | 0.30 | 0.21 | 0.09 |

In einem weiteren Aspekt der Erfindung wird für eine Bestimmung einer Zentrierverschiebung und/oder einer Dezentration für Brillengläser insbesondere ein Satz von Individualparametern bzgl. einer Fassung des Brillenträgers berücksichtigt. Ein bevorzugtes Verfahren bezüglich dieses Aspekts könnte dabei sowohl auf prismatische als auch auf nicht prismatische Brillengläser, also mit und ohne prismatische Verordnung angewendet werden. Sind dem Hersteller neben den einfachen Individualparametern zusätzlich insbesondere die Fassungsdaten (Abstand zwischen den Gläsern, Scheibenlänge, Scheibenhöhe, Fassungsscheibenwinkel) die Pupillendistanz und die Zentrierdaten bekannt, dann kann zusätzlich in der Verschiebung die normale Zentrierung mitberücksichtigt werden. Der Optiker könnte dann jedes Glas auf Mitte, also ohne jegliche Dezentration, einschleifen und die Bezugspunkte würden sich dann vor dem Auge in der richtigen Position befinden. Dies hätte bei Brillengläsern mit individueller Rezeptfläche den zusätzlichen Vorteil, dass beim Hersteller das Blanklager deutlich reduziert werden könnte, denn die Gläser müssten nicht mehr dezentriert werden und die Durchmesser der Gläser richteten sich nur noch nach der Fassungsgröße. Insbesondere bei Sportgläsern mit hoher Basiskurve, großem Fassungsscheibenwinkel und großer Scheibenlänge wäre das für den Optiker eine zusätzliche große Erleichterung bei der Zentrierung und der Fassungswahl (der verfügbare Glasdurchmesser stellt keine Einschränkung mehr dar).

Weitere Merkmale und Vorteile bevorzugter Ausführungsformen der Erfindung sind nachfolgend anhand von nicht beschränkenden Beispielen näher erläutert.

Weitere Ausführungsbeispiele, Vorteile und Eigenschaften der Erfindung ergeben sich aus den beigefügten exemplarischen und nicht beschränkenden Beschreibungsseiten.

Nachfolgend werden die individuell festlegbaren Fern- und Nahbezugspunkte jeweils als Designpunkt "Ferne" bzw. Designpunkt "Nähe" bezeichnet. Insbesondere entspricht der individuell ermittelte Fernbezugspunkt bzw. Designpunkt "Ferne" dem Punkt, durch den der Brillenglasträger beim Blick in die Ferne optimal korrigiert ist und welcher seinen persönlichen Sehgewohnheiten entspricht. Der individuell ermittelte Nahbezugpunkt bzw. Designpunkt "Nähe" entspricht dem Punkt, durch den der Brillenglasträger bei Nahsehaufgaben optimal korrigiert ist und die für ihn angenehme Blicksenkung einnehmen kann.

Es zeigen:

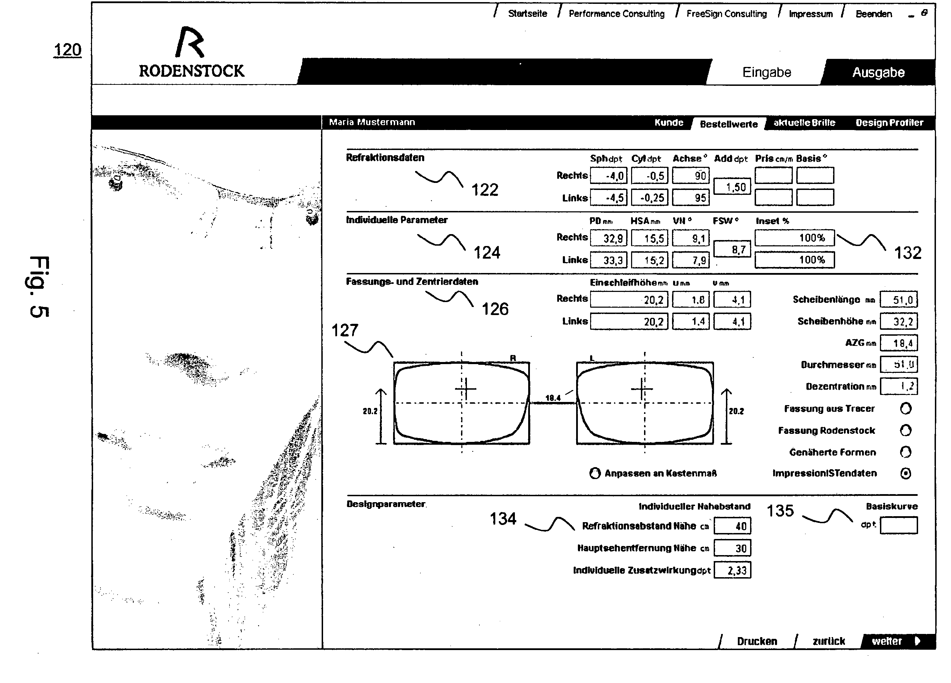

Fig. 5:　Beispiel einer Maske bzw. graphischen Benutzerschnittstelle zur Eingabe von individuellen Kundenparametern;

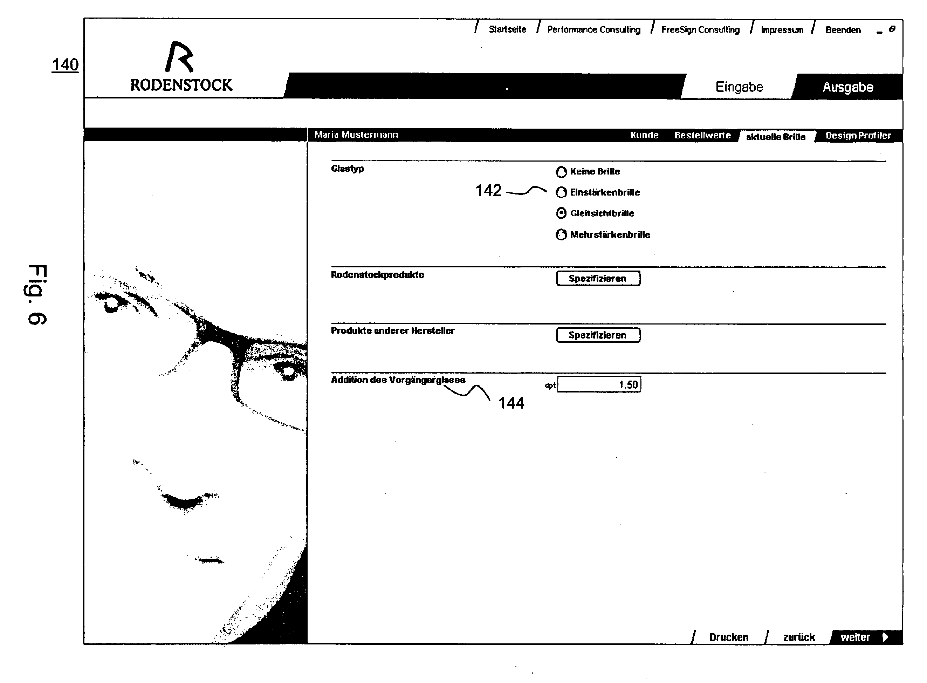

Fig. 6:　Beispiel einer Maske bzw. graphischen Benutzerschnittstelle zur Eingabe von Daten bezüglich der aktuellen Brille;

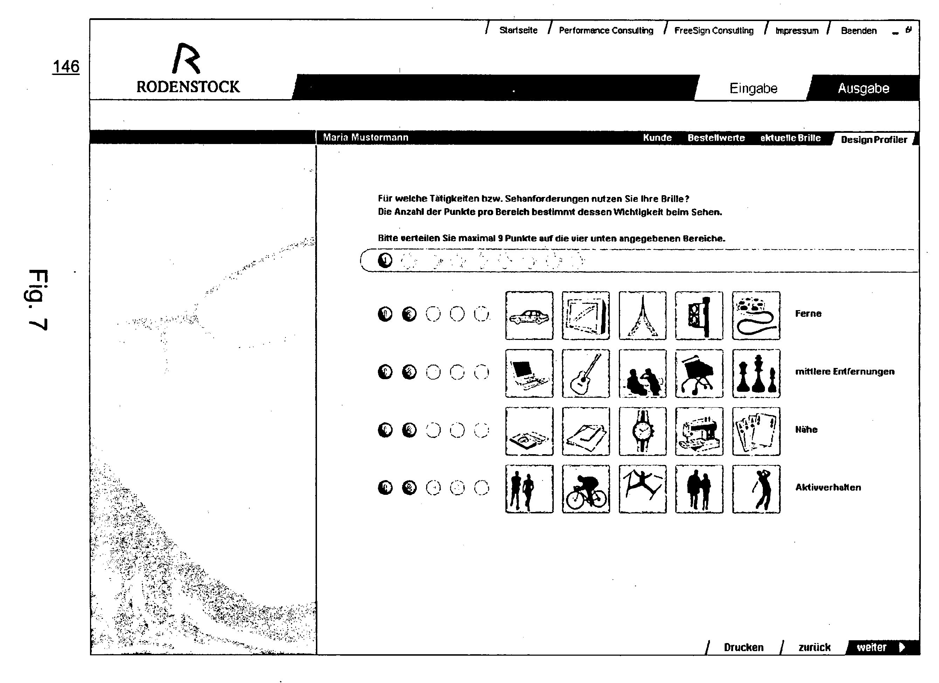

Fig. 7:　Beispiel einer Maske bzw. graphischen Benutzerschnittstelle zur Eingabe von Daten bezüglich der individuellen Präferenzen bzw. Gewichtungen der Sehbereiche;

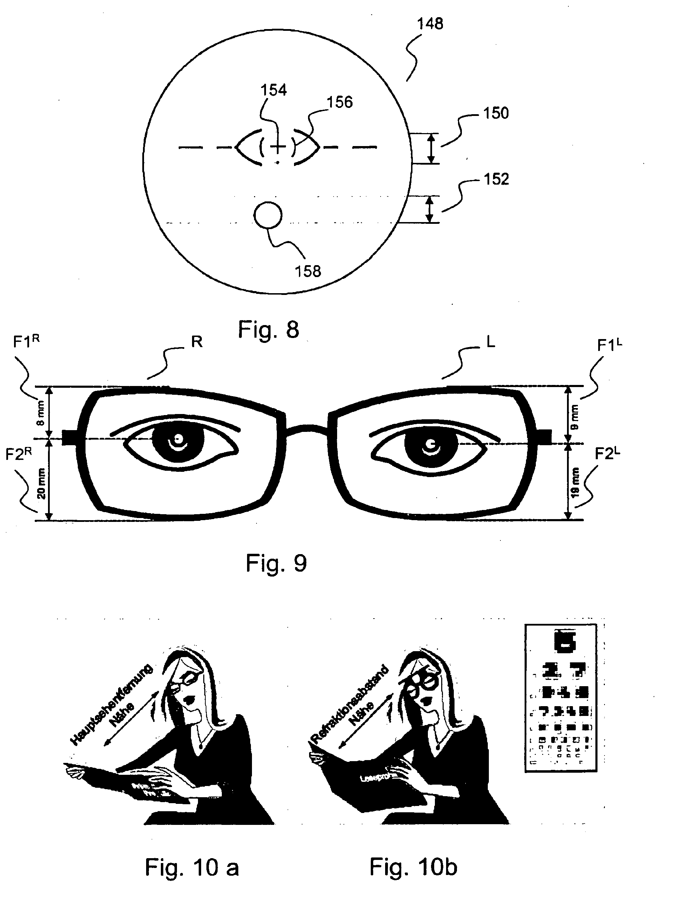

Fig. 8: Eine schematische Darstellung der Lage der Fern- und Nahbezugspunkte eines individuellen Brillenglasdesigns;

Fig. 9: Ein Beispiel unterschiedlicher Durchblickshöhen der beiden Augen;

Fig. 10 a, b: Eine schematische Darstellung der Hauptsehentfernung Nähe (Fig. 10a) und Refraktionsabstand Nähe (Fig. 10b);

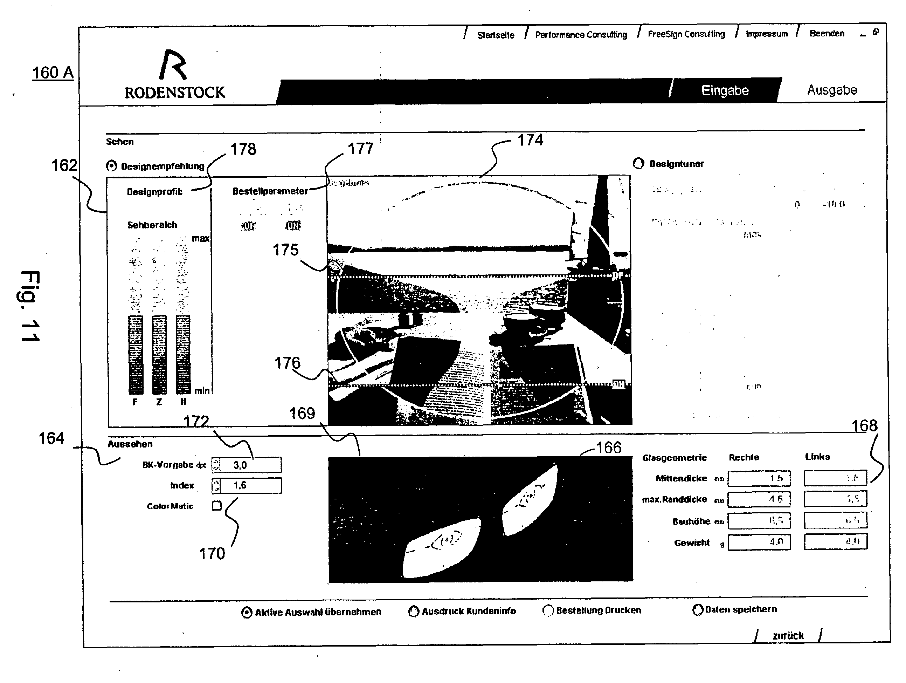

Fig. 11: Ein Beispiel einer graphischen Benutzerschnittstelle zur Ergebnisdarstellung;

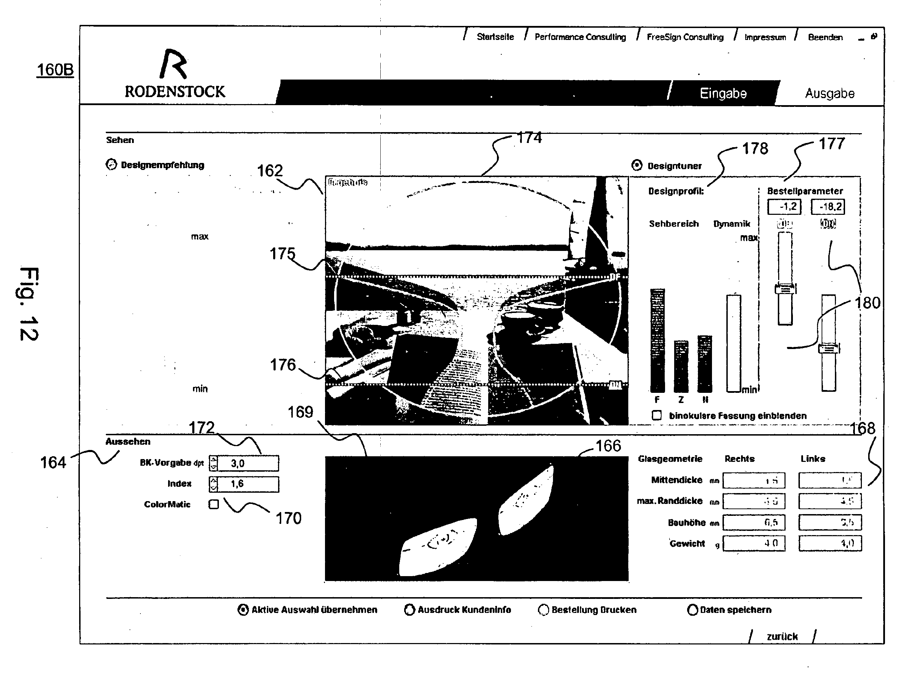

Fig. 12: Ein Beispiel einer graphischen Benutzerschnittstelle zur Ergebnisdarstellung und Designänderung bzw. -tuning;

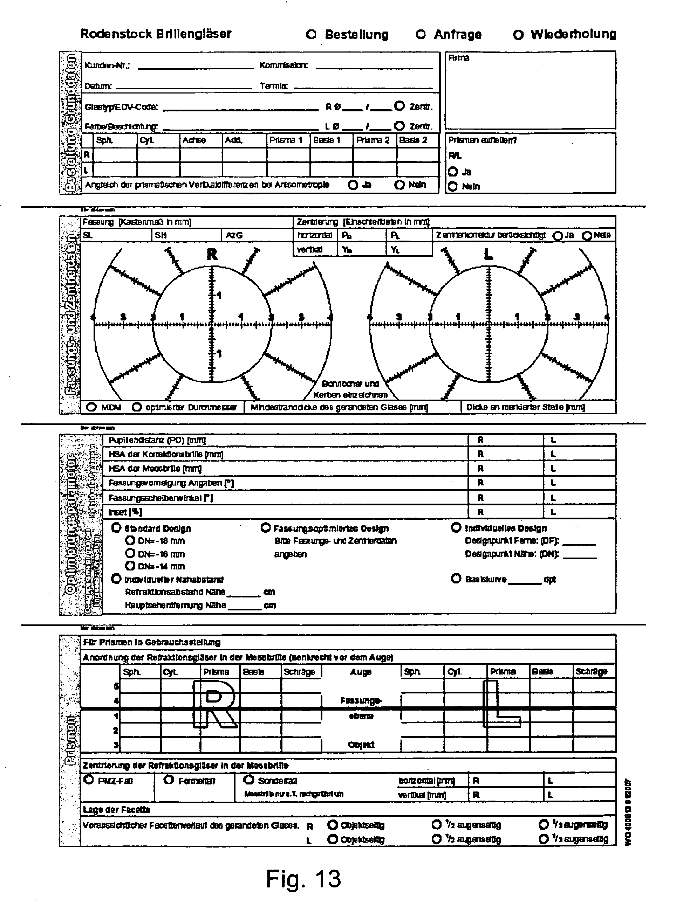

Fig. 13: Ein Beispiel eines Bestellformulars;

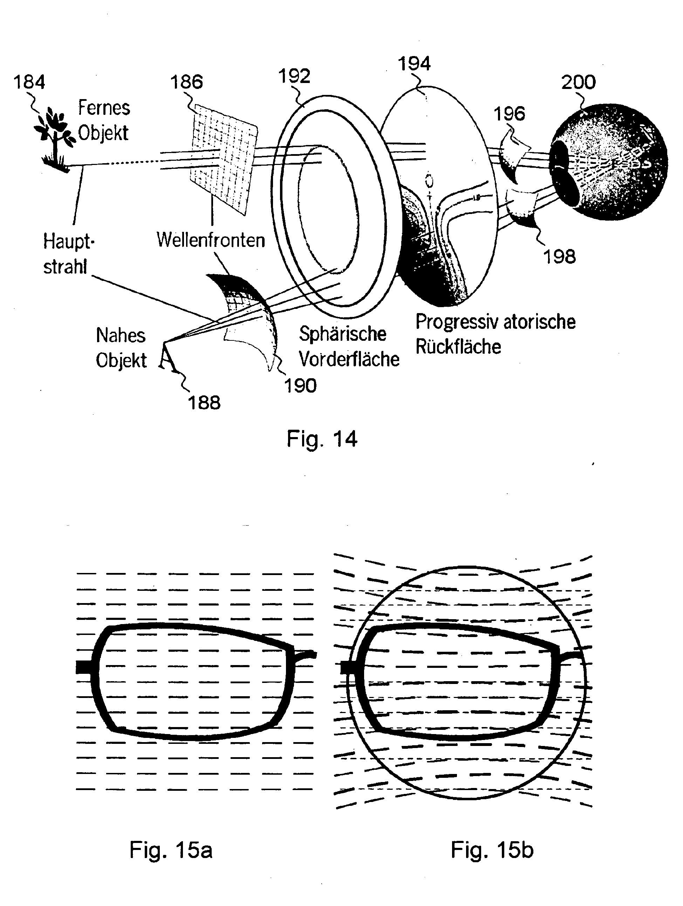

Fig. 14: Eine schematische Darstellung des physiologischen und physikalischen Modells eines Brillenglases in einer vorgegebenen Gebrauchsstellung;

Fig. 15 a, b: Schematische Darstellungen der Achslagen in einem Brillenglas ohne Berücksichtigung der Listing'schen Regel (Fig. 15a) und mit Berücksichtigung der Listing'schen Regel (Fig. 15b) ;

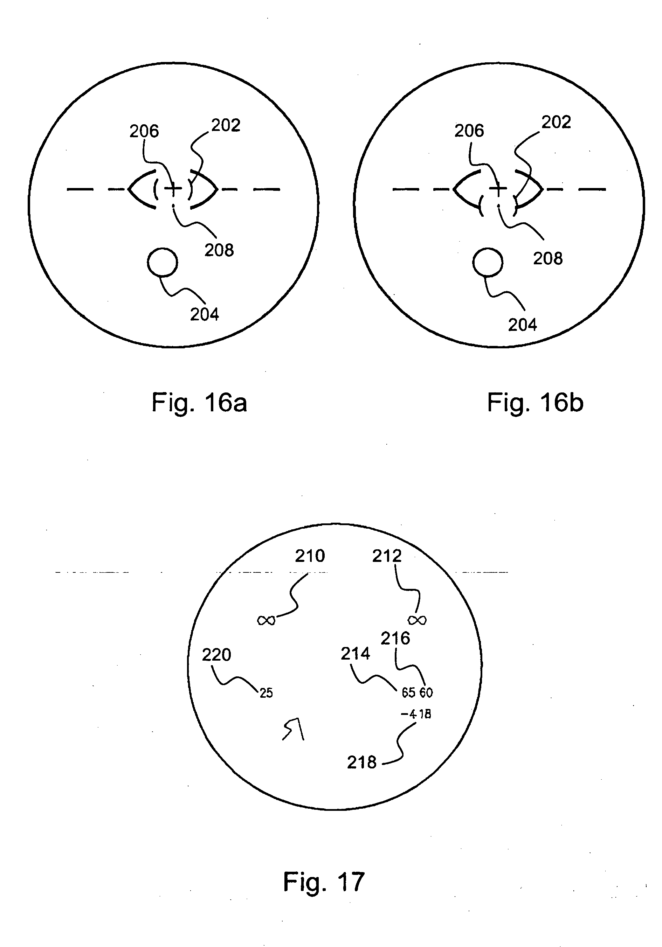

Fig. 16 a,b: Zwei Beispiele nicht permanenter Stempelungen individuell berechneten progressiven Brillengläsern;

Fig. 17: Ein Beispiel der permanenten Gravur eines linken individuell optimierten progressiven Brillenglases;

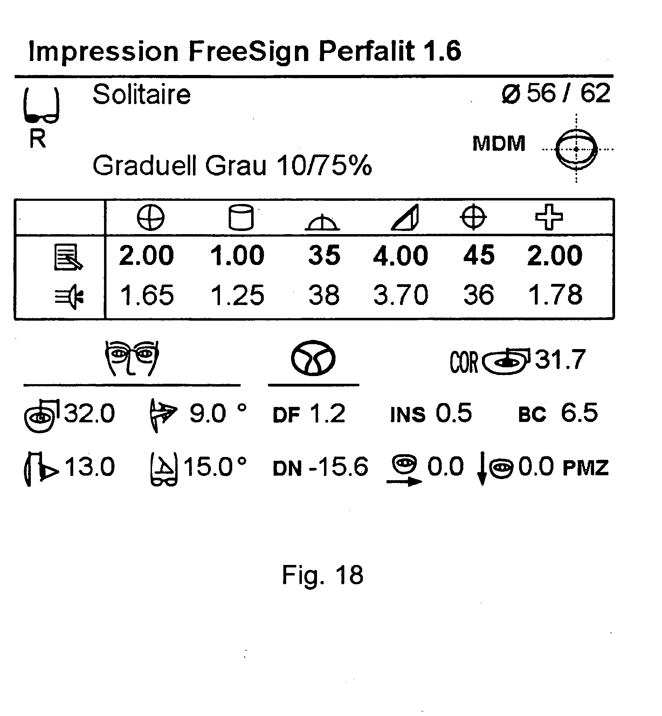

Fig. 18: Ein Beispiel einer Glastüte für ein individuell optimiertes Brillenglases;

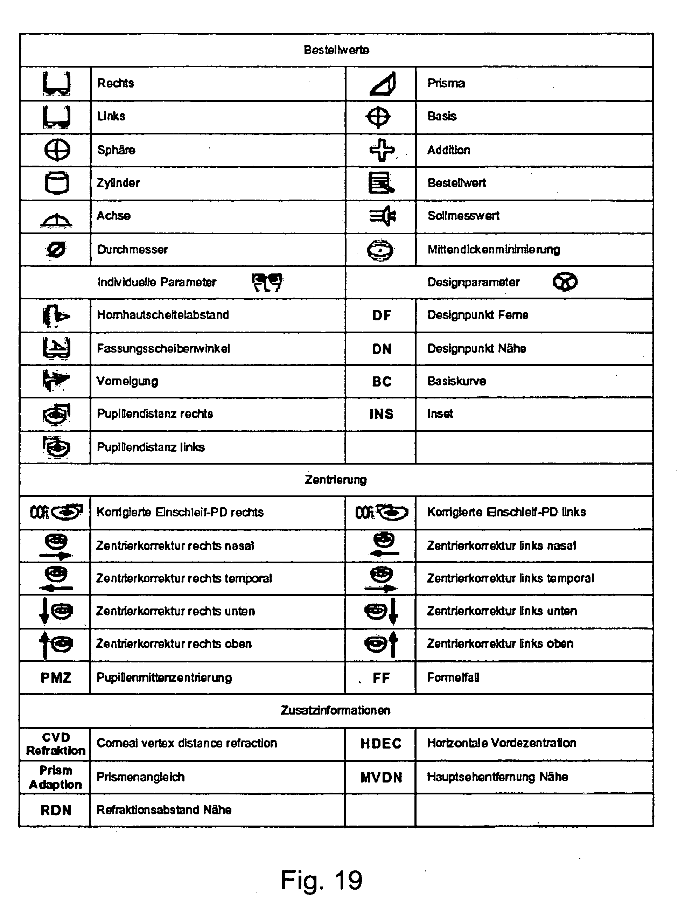

Fig. 19: Legende der auf der Glastüte verwendeten Piktogramme;

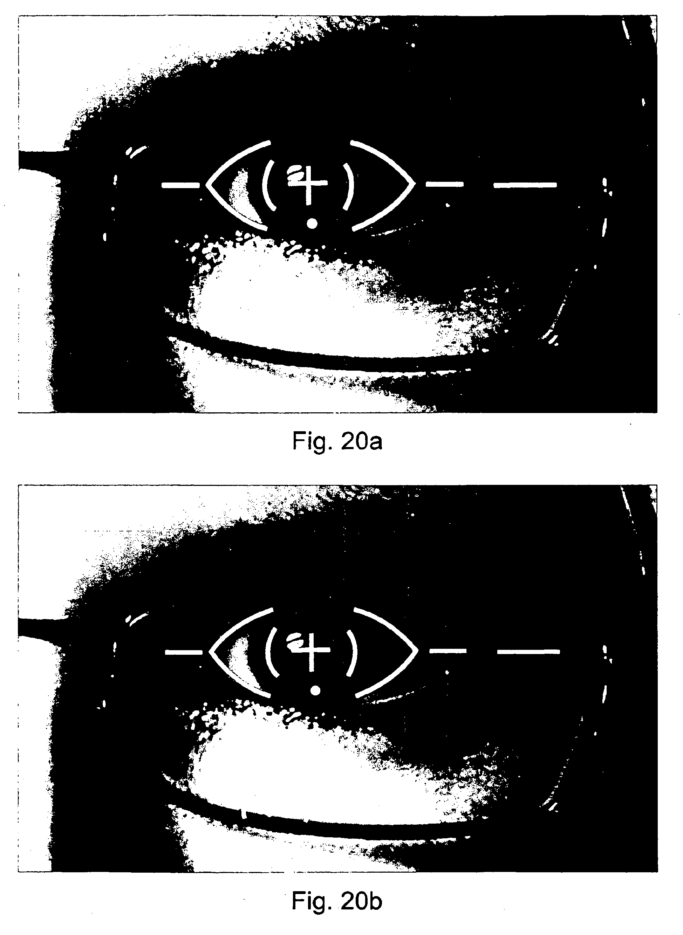

Fig. 20 a,b: Beispiele der Zentrierung eines individuellen Brillenglases (Fig. 20a) oder eines Standardbrillenglases (Fig. 20b) vor den Augen des Brillenträgers;

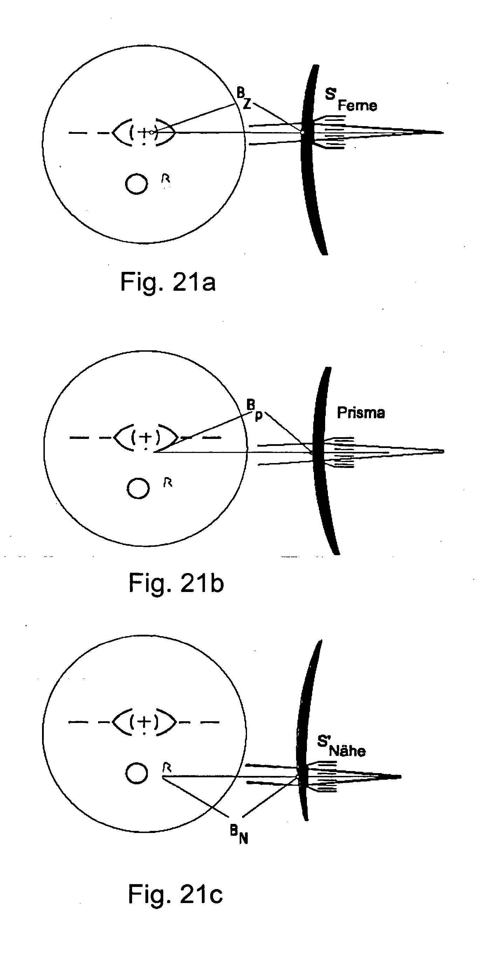

Fig. 21 a-c: Eine schematische Darstellung der Messung der Wirkungen eines individuellen Brillenglases;

Konventionelle progressive Brillengläser (Gleitsichtgläser) besitzen in der Regel eine progressive Vorderfläche, während die Rezeptfläche augenseitig nach Bestelleingang gefertigt wird. Bei der Fertigung nach dem Basiskurvensystem wird auf eine begrenzte Anzahl (z.B. 72) auf Fehlsichtigkeit angepasste, vorgefertigte und damit standardisierte Gleitsichtflächen zurückgegriffen. Diese gelten allerdings nicht für jede Wirkung separat, sondern für ein bestimmtes Spektrum des Wirkungsbereichs. Die Optimierung der Gleitsichtflächen erfolgt jeweils nur für die mittlere Wirkung pro Basiskurve bzw. Wirkungsbereich. Weichen die Refraktionsdaten von den optimierten Wirkungen ab, hat dies Einschränkungen der nutzbaren Blickfelder zur Folge.

Bereits bei kleinen Abweichungen der bestellten Wirkung in Sphäre, Zylinder, Achse oder auch Prisma und Basis von der dem Blank zugrunde liegenden Berechnung treten bei konventionellen Gleitsichtgläsern Einschränkungen in der Designtreue auf, die zu Unverträglichkeiten beim Brillenträger führen können. Hinzu kommt, dass der Optimierung konventioneller Gleitsichtgläser nur Standardwerte zugrunde liegen, die oft der Individualität der Glas-, Fassungs- und Kundendaten des Brillenträgers nicht gerecht werden.

Bei den wirkungsoptimierten Gleitsichtgläsern werden die Nachteile der konventionellen Gleitsichtgläser durch eine für jede Wirkungskombination einzeln online optimierte asphärische oder atorische Rezeptfläche beseitigt. Mit der Freiformtechnologie ist es möglich, wirkungsoptimierte Gleitsichtgläser zu fertigen. Je nach Berechnungs- und Fertigungs-Know-how können mit der Freiformtechnologie auch individuelle Gleitsichtgläser gefertigt werden.

Es sind ebenfalls individuelle Gleitsichtgläser bekannt, welche unter Berücksichtigung der individuellen Verordnung (Sph, Zyl, Achse, Add, Prisma, Basis) und der individuellen Lage der Gläser vor dem Auge (HSA, FSW, Vorneigung, Pupillendistanz) optimiert und berechnet werden.

Eine zweite Gruppe individueller Gleitsichtgläser sind Gleitsichtgläser, welche auf eine andere Art und Weise personalisiert sind, z.B. durch persönliche Verhaltensweisen des Brillenträgers oder seiner Präferenzen. Diese Gleitsichtgläser berücksichtigen jedoch nicht oder nur teilweise die individuellen Parameter. Diesen Gleitsichtgläsern liegt ein physionomisches Standardmodell zugrunde, welches mit den tatsächlichen Gegebenheiten meist nicht übereinstimmt und so optische Abweichungen und/oder Leistungsverluste nach sich zieht.

In allen Fällen war jedoch das Design eines progressiven Brillenglases bisher fest definiert. Mit einem bevorzugten erfindungsgemäßen Verfahren ist es möglich, das Design des Brillenglases individuell auf die Kundenbedürfnisse anzupassen, wobei individuelle Kundenparameter (z.B. Pupillendistanz (PD), Hornhautscheitelabstand (HSA), Fassungsform, Vorneigung (VN), Fassungsscheibenwinkel (FSW), individuelle Position des Fern- und/oder Nahbezugspunkte, individueller Nahabstand, etc.) berücksichtigt werden.

Vorzugsweise fließen die Seherfahrung und die Bedürfnisse bzw. Sehanforderungen des Kunden in einem bevorzugten erfindungsgemäßen Verfahren zum Berechnen eines individuellen Designs und zum Herstellen eines Brillenglases ein. Somit ist es möglich, unter Benutzung des fachlichen Know-how z.B. eines Augenoptikers und unter Mitwirkung des Kunden (Brillenträgers), ein individuelles progressives Brillenglas zu gestalten. Vorzugsweise werden dabei Vor- und Nachteile des Vorgängerglases berücksichtigt.

Die individuellen Parameter (z.B. Pupillendistanz PD, Hornhautscheitelabstand HSA, Vorneigung VN, Fassungsscheibenwinkel FSW, etc.), welche beispielsweise automatisch mittels einer geeigneten 3-D Meßvorrichtung, wie z.B. mittels der 3-D Videozentriervorrichtung ImpressionIST der Firma Rodenstock GmbH oder alternativ mittels herkömmlichen Meßtools ermittelt werden, werden bei der Berechnung bzw. Optimierung der räumlichen Lagen, insbesondere der vertikalen und/oder horizontalen Position des Fern- und/oder Nahbezugspunkts berücksichtigt.

Die individuellen Parameter können beispielsweise in folgenden Grenzen variieren:

Pupillendistanz (PD) von 30 bis 80 mm
Hornhautscheitelabstand (HSA) von 3 bis 50 mm
Vorneigung (VN) von -10 bis +20 Grad
Fassungsscheibenwinkel (FSW) von -10 bis +35 Grad.

Ferner können neben den individuellen Parametern auch die speziellen Sehgewohnheiten des Brillenträgers berücksichtigt werden.

**Figuren 5 bis 7** zeigen graphische Benutzerschnittstellen zur Eingabe von individuellen Kundenparametern.

So können z.B. in einer ersten Maske bzw. graphischen Benutzerschnittstelle (nicht gezeigt) Informationen zu dem Kunden (z.B. Name, Kontaktadresse, Fassungswahl, etc.) eingegeben oder z.B. aus einer Datenbank übernommen werden. Die ausgewählte Fassung, welche z.B. mit Hilfe eines geeigneten Tracers (wie z.B. ImpressionIST der Firma Rodenstock) direkt vermessen oder aus einer Datenbank abgerufen werden kann, kann ebenfalls angezeigt werden.

In **Fig. 5** ist ein Beispiel einer Maske bzw. einer graphischen Benutzerschnittstelle **120** zur Eingabe von individuellen Daten (Bestellwerten) des Brillenträgers gezeigt. Die individuellen Daten können direkt in den entsprechenden Eingabefeldern bzw. -abschnitten der Maske bzw. der graphischen Benutzerschnittstelle eingegeben oder z.B. aus einer Datenbank abgerufen werden. Die grau hinterlegten Felder werden automatisch vom dem Programm berechnet bzw. mit Daten belegt.

Die in **Fig. 5** gezeigte graphische Benutzerschnittstellen **120** enthält:

- einen Abschnitt "Refraktionsdaten" (Abschnitt **122**) umfassend Eingabefelder zur Eingabe von individuellen Refraktionsdaten wie Sphäre "Sph", Zylinder "Cyl", Achse, Prisma, Basis);
- einen Abschnitt "Individuelle Parameter" (Abschnitt **124**) umfassend Eingabefelder zur Eingabe von individuellen Parametern der Augen des Brillenträgers und/oder der individuellen Gebrauchsstellung (Pupillendistanz "PD", Hornhautscheitelabstand "HSA", Vorneigung "VN", Fassungsscheibenwinkel "FSW");
- einen Abschnitt "Fassungs- und Zentrierdaten" (Abschnitt **126**) umfassend Eingabefelder zur Eingabe von Fassungs- und Zentrierdaten (Einschleifhöhe, Scheibenlänge, Scheibenhöhe, Abstand zwischen den Gläsern "AzG" bzw. "AZG") sowie gegebenenfalls einen Anzeigeabschnitt (Abschnitt **127**) zur Anzeige der Zentrierung der Brille angepasst an dem Kastenmaß.

Die Fassungsdaten können in entsprechenden Eingabefeldern eingegeben werden. Diese Werte können automatisch eingetragen werden, wenn die Fassung z.B. mittels eines Tracers oder aus einer Liste von Fassungen ausgewählt wird. Die Zentrierdaten können gegebenenfalls direkt von einem 3-D Videozentriersystem (z.B. 3-D Videozentriersystem der Firma Rodenstock GmbG) übernommen werden. Mit einer Funktion "Anpassen an Kastenmaß" kann die Fassung den gegebenenfalls geänderten Fassungsdaten anpasst werden.

Im Abschnitt **126** "Fassungs- und Zentrierdaten" kann eine Fassung aus einer Datenbank ausgewählt werden, z.B. falls vorher mittels eines Tracers keine Fassung aufgenommen bzw. vermessen worden ist. Insbesondere kann die Fassung aus einer Liste in einem sich öffnenden Pop-up-Fenster ausgewählt werden. Form- und Fassungsdaten werden vorzugsweise ebenfalls angezeigt. Die Auswahl kann durch Bestätigen übernommen werden. Ebenfalls kann eine genäherte Fassung aus einer Anzahl verschiedener Fassungsformen ("genäherte Formen") ausgewählt werden. Hierbei kann sich z.B. ein anderes Pop-up-Fenster öffnen, in dem die Fassung aus einer Auswahl gängiger Formen ausgewählt werden kann.

Die in **Fig. 5** gezeigte graphische Benutzerschnittstelle **120** enthält ferner einen Abschnitt bzw. Eingabefeld "Inset" (Abschnitt **132**). Sollte der Brillenglasträger ein vom Standardfall abweichendes Konvergenzverhalten beim Blick in die Nähe zeigen, so kann der im Eingabefeld "Inset" vorbelegte Wert geeignet geändert werden. Der Inset-Wert wird vorzugsweise unter Berücksichtigung der individuellen Kundenparameter berechnet.

Ebenfalls weist die graphische Benutzerschnittstelle **120** einen Abschnitt **134 "Designparameter"** mit entsprechenden Eingabefelder zur Eingabe von:

- den individuellen Nahabstand bei der Refraktionsbestimmung (Refraktionsabstand Nähe);
- der Hauptsehentfernung Nähe; und
- der individuellen Zusatzwirkung

auf.

Wenn keine Daten bezüglich des individuellen Nahabstands eingegeben werden, wird angenommen, daß bis zur einen Addition von 2,5 dpt der individuelle Nahabstand bei der Refraktionsbestimmung 40 cm beträgt. In anderen Worten wird angenommen, daß die bestellte Addition in 40 cm bestimmt wurde und auch die Hauptsehentfernung des Brillenglasträgers in dieser Entfernung liegt. Bei höheren Additionen entspricht der Kehrwert der Addition dem maximalen Nahabstand. Wenn nur eines der beiden Eingabefelder "Refraktionsabstand Nähe" oder "Hauptsehentfernung Nähe" ausgefüllt wird, wird angenommen, daß der Wert auch für die jeweils andere Entfernung gilt. Der Inset und der Astigmatismus werden auf die Hauptsehentfernung "Nähe" berechnet.

Wenn für den Refraktionsabstand "Nähe" und für die Hauptsehentfernung "Nähe" jeweils unterschiedliche Werte in dem entsprechenden Eingabefeld eingetragen werden, wird automatisch auch die individuelle Zusatzwirkung für die Hauptsehentfernung berechnet. Die individuelle Zusatzwirkung wird angezeigt, wenn sie außerhalb des Lieferbereichs liegt (0,75 dpt bis 3,50 dpt) oder mehr als 0,5 dpt von der Bestelladdition abweicht.

**Beispiel:**

Bestellte Addition (Refraktion) = 2.00 dpt, Hauptsehentfernung Nähe = 30 cm, Refraktionsabstand in der Nähe = 40 cm. Die bestellte Addition von 2.00 dpt wird für 30 cm optimiert und es erfolgt eine Anpassung der Addition. Neben dem Inset wird auch der Astigmatismus schiefer Bündel für die gewünschte Hauptsehentfernung korrigiert.

Wenn nur ein Abstand (Hauptsehentfernung oder Refraktionsabstand) angegeben wird, wird davon ausgegangen, daß sich die bestelle Addition auf den angegebenen Abstand bezieht. Hier erfolgt keine Anpassung der Addition, und das Brillenglasdesign bzw. das Brillenglas wird für die bestellte Addition im angegebenen Nahabstand berechnet bzw. optimiert. Wird kein Nahabstand (Hauptsehentfernung und/oder Refraktionsabstand) angegeben, wird davon ausgegangen, daß in 40 cm refraktioniert worden ist und dieser Refraktionsabstand der Hauptsehentfernung in der Nähe entspricht. Hier erfolgt keine Anpassung der Addition und das individuelle Brillenglasdesign bzw. das individuelle Brillenglas wird für die bestellte Addition für 40 cm berechnet bzw. optimiert. In der Regel liegen die von Herstellern lieferbaren Additionen in einem Bereich zwischen 0,75 dpt bis 3,50 dpt. Anhand der folgenden einfachen Rechnung kann der Optiker bzw. Optometrist überprüfen, ob das Brillenglas lieferbar ist:

$$IZ(dpt) = Add(dpt) - \left(\frac{1}{RDN(m)}\right) + \left(\frac{1}{MVDN(m)}\right),$$

wobei:

$IZ$      die individuelle Zusatzwirkung in dpt;
$Add$      die Addition in dpt;
$RDN$      den Betrag des Refraktionsabstands Nähe in Meter; und
$MVDN$      den Betrag der Hauptsehentfernung Nähe

bezeichnen.

**Beispiele:**

*Möglich:*

Addition Refraktion = 1,75 dpt;
Refraktionsabstand Nähe = 40 cm;
Hauptsehentfernung Nähe = 30 cm;
$IZ$ = 1,75 dpt - 2,50 dpt + 3,33 dpt = 2,58 dpt.

*Nicht möglich:*

Addition Refraktion = 2,00 dpt;
Refraktionsabstand Nähe = 40 cm;

Hauptsehentfernung Nähe = 20 cm;
*IZ* = 2.00 dpt - 2.50 dpt + 5.00 dpt = 4,50 dpt

In der Rechnung wird davon ausgegangen, daß sich keine Änderung des Akkommodationserfolgs aufgrund der Veränderung des Nahabstands ergibt. Dies stellt jedoch lediglich eine Näherung dar.

Die in **Fig. 5** gezeigte graphische Benutzerschmttstelle **120** weist ferner einen Abschnitt bzw. ein Eingabefeld "Basiskurve" (Abschnitt **135**) auf, in welches die für die ausgewählte Fassung am besten passende Basiskurve eingetragen werden kann. Insbesondere ist es möglich, eine abweichende Basiskurve in Abhängigkeit von der Durchbiegung der Brillenfassung einzugeben und in der Optimierung des Brillenglases zu berücksichtigen. Das Programm berechnet automatisch die am besten geeignete Durchbiegung bzw. Basiskurve für die jeweiligen Refraktionsdaten und den jeweiligen Basiskurvenwunsch. Die von dem Programm berechnete Basiskurve kann sich von der im Eingabefeld "Basiskurve" eingegebenen Basiskurve unterscheiden. Vorzugsweise wird die eingegebene bzw. bestellte Basiskurve dahingehend automatisch überprüft, daß keine Plan- und Konvexflächen auf der Rückfläche oder zu stark gekrümmte Rückflächen entstehen, die insbesondere zu hohe Randdicken verursachen können.

**Fig. 6** zeigt eine Maske bzw. eine graphische Benutzerschnittstelle **140** zur Eingabe von individuellen Daten bezüglich der aktuellen bzw. bisher getragenen Brille.

In diese Maske können Angaben zum Vorgängerglas gemacht werden, falls dieses bekannt ist. So kann aus einer Liste **142** ("Glastyp") ausgewählt werden, ob der Kunde zuvor ein Einstärken-, Mehrstärken- oder Gleitsichtglas getragen hat oder ob es sich um die erste Brille des Kunden handelt (keine Vorgängerbrille). Wurde,ein Gleitsichtglas getragen, können zum Beispiel nähere Angaben zum Material, zum Brechungsindex und/oder zur Progressionslänge z.B. in einem Pop-up-Menü gemacht werden. Die Progressionslänge des Vorgängerglases kann ferner automatisch anhand der Wahl des Vorgängerprodukts oder manuell eingegeben werden. Insbesondere kann die Progressionslänge des Vorgängerglases grob z.B. als eine "Standard" bzw. lange Progression oder als eine kurze ("XS") Progressionslänge eingestuft werden.

Wenn die Addition des Vorgängerglases bekannt ist, kann diese in einem dafür vorgesehenen Eingabefeld **144** "Addition des Vorgängerglases" eintragen werden. So kann die Addition des Vorgängerglases mit der neuen Addition verglichen werden. Bei einer Additionserhöhung von mehr als 0,5 dpt kann ein Hinweisfeld (z.B. als Pop-up-Fenster) erscheinen, das auf die Besonderheiten der Additionserhöhung hinweist.

**Fig. 7** zeigt ein Beispiel einer Maske bzw. eine graphische Benutzerschnittstelle **146** ("Designprofiler") zur Eingabe von Daten bezüglich der individuellen Präferenzen bzw. Gewichtungen der Sehbereiche.

Jeweils fünf verschiedene Piktogramme für die Ferne, die mittlere Entfernung und die Nähe sowie für das Aktivverhalten des Brillenträgers symbolisieren die Bereiche, die der Brillenträger bei der Wahl seines Designprofils gegeneinander abwägen soll. Die Piktogramme dienen als Beispiele für den jeweiligen Entfernungsbereich und stellen nur eine kleine Auswahl aller möglichen Tätigkeiten für diese Entfernung dar. Mit den zu vergebenden Punkten können die Bereiche gewichtet werden.

In einem konkreten Beispiel können insgesamt 9 Punkte auf die vier verschiedenen Bereiche (Ferne, mittlere Entfernung, Nähe und Aktivverhalten) verteilt werden. Je wichtiger dem Kunden der jeweilige Entfernungsbereich ist bzw. je mehr seiner Tätigkeiten in einen Bereich fallen, desto mehr Punkte für diesen Bereich werden vergeben. Die Anzahl der Punkte pro Bereich sowie die Gesamtpunktzahl können beschränkt werden. So können z.B. pro Bereich maximal 5 Punkte vergeben werden, insgesamt jedoch nicht mehr als 9 Punkte.

Die vergebenen Punkte bestimmen das individuelle Designprofil des Brillenträgers. Vereinfacht gilt: Je mehr Punkte für die Ferne in Relation zur gegebenen Gesamtpunktzahl vergeben werden, desto tiefer liegt der individuelle Fernbezugspunkt und je mehr Punkte für die Nähe in Relation zur gegebenen Gesamtpunktzahl vergeben werden, desto höher liegt der individuelle Nahbezugspunkt. Die Punkte für das Aktivverhalten und das Sehen in mittleren Entfernungen wirken sich in erster Linie auf die Länge der Progressionszone aus und bestimmen somit auch wie verzeichnungsfrei das Brillenglas ist. Bei der Vergabe der Punkte entspricht eine gleich große Punktzahl in jedem Bereich einem ausgewogenen, universellen Design.

**Fig. 8** zeigt die Lage der Fern- und Nahbezugspunkte eines individuellen Brillenglasdesigns **148**. Grau hinterlegt sind die Bereiche (**150** und **152**), in welchen sich der Fernbezugspunkt (Bereich **150**) und der Nahbezugspunkt (Bereich **152**) vorzugsweise befinden können. Die Position des Zentrier- bzw. Anpaßpunkts wird mittels eines Kreuzes **154** (Zentrierkreuz) gekennzeichnet. Der Fernbezugspunkt befindet sich in der Mitte von zwei runden Klammern **156**. Der Nahbezugspunkt befindet sich in der Mitte des Nahmeßkreises **158**.

Die vertikale Höhe des Fernbezugspunkts kann vorzugsweise in einem Bereich von +4 bis -4 mm gegenüber dem für dieses Brillenglas vom Hersteller festgelegten Zentrier- bzw. Anpaßpunkt in Abhängigkeit von den individuellen Daten des Brillenträgers flexibel bestimmt werden. Der Nahbezugspunkt kann vorzugsweise flexibel zwischen 13 und 20 mm vertikal unterhalb des Zentrier- bzw. Anpaßpunkts festgelegt werden. Daraus ergibt sich eine flexibel wählbare Progressionslänge, welche vorzugsweise minimal 13 mm und maximal 24 mm betragen kann. Vorzugsweise können der Fern- und Nahbezugspunkt in Stufen von 0,1 mm innerhalb eines zulässigen Bereichs frei festgelegt werden. Wird z.B. der Fernbezugspunkt bzw. auf -4 mm vertikale Höhe verschoben, so muss der Nahbezugspunkt mindestens auf einer vertikalen Höhe von -17 mm liegen. Wird der Fernbezugspunkt +4 mm verschoben, so ergibt sich eine Mindestprogressionslänge von 17 mm, da der Nahbezugspunkt vorzugsweise nicht weiter als -13 mm verschoben wird.

Dabei beträgt vorzugsweise der minimale vertikale Abstand vom unteren Fassungsrand zum Nahbezugspunkt 2 mm. Der Fernbezugspunkt weist vorzugsweise minimal einen vertikalen Abstand von 6 mm, vorzugsweise 8 mm von dem oberen Fassungsrand auf. Mit den minimal zulässigen Abständen des Fern- und Nahbezugspunkts von dem oberen bzw. dem unteren Fassungsrand läßt sich die maximal zulässige Progressionslänge berechnen. Die Progressionslänge wird hierbei als der vertikale Abstand zwischen dem Fern- und dem Nahbezugspunkt definiert.

Aus der folgenden Tabelle kann entnommen werden, was durch Verschieben der Designpunkte im Gleitsichtglas beispielsweise erreicht werden kann:

Tabelle:

| Individuelle Sehanforderung des Brillenträgers | Umsetzung beim Festlegen der Position der Designpunkte |
|---|---|
| Besonders großer Fernbereich, z. B. Autofahrer | Der Designpunkt "Ferne" sollte unter das Zentrierkreuz verschoben werden. Die Progressionszone beginnt dann erst (deutlich) unterhalb des Zentrierkreuzes |
| Besonders großer Nahbereich, z.B. Lektor | Der Designpunkt "Nähe" sollte im Vergleich zum bisherigen Gleitsichtglas nach oben verschoben werden. Dies ermöglicht entspanntes Sehen in der Nähe bei bequemer Blicksenkung |
| Besonders breite Progressionszone, z.B. Architekt | Verschiebung des Designpunkts "Ferne" nach oben und des Designpunkts "Nähe" nach unten. Je länger die Progressionszone, desto breiter wird der Progressionskanal und umso weniger Schaukelbewegungen nimmt der Kunde wahr. |

Die Positionen der Fern- und Nahbezugspunkte sind vorzugsweise gleich für das rechte und das linke Brillenglas. Bei unterschiedlicher Durchblickshöhe können sich dadurch jedoch Nachteile in den Sehbereichen für eines der beiden Augen ergeben. Damit die Sehbereiche für beide Augen voll genutzt werden können, ist es vorteilhaft den jeweils kleineren vertikalen Abstand des Nahbezugspunktes vom Zentrierpunkt auszuwählen bzw. festzulegen.

**Fig. 9** verdeutlicht diesen Zusammenhang. In **Fig. 9** bezeichnet:

$F1^{L,R}$ den vertikalen Abstand "Zentrierpunkt- oberer Fassungsrand" des linken (L) bzw. des rechten (R) Brillenglases; und

$F2^{L,R}$ den vertikalen Abstand "unterer Zentrierpunkt - unterer Fassungsrand" des linken (L) bzw. des rechten (R) Brillenglases.

In **Fig. 9** fallen der Zentrierpunkt und der Fernbezugspunkt zusammen. Wenn sich die Auswahl der geeigneten vertikalen Position des Nahbezugspunkts an dem unteren Fassungsrand orientiert, würde sich für das rechte Auge ein vertikaler Abstand des Nahbezugspunkts vom Zentrierpunkt vom -18 mm ergeben und für das linke Auge würde dieser Abstand -17 mm betragen. In diesem Fall ist es bevorzugt, den kleineren Abstand auszuwählen bzw. festzulegen.

Die Angaben zu den Objektentfernungen "Ferne" und "Nähe" bei der Refraktionsbestimmung werden bei der Berechnung und Optimierung berücksichtigt. Somit kann der Strahlengang, welcher der tatsächlichen Gebrauchssituation entspricht, genauer simuliert werden und folglich die Abbildungsqualität verbessert werden.

Insbesondere ist es so möglich, die Hauptsehentfernung beim Blick in die Nähe in der tatsächlichen Gebrauchsstellung des Brillenglases bei der Glasberechnung zu berücksichtigen. **Fig. 10a** illustriert die Hauptsehentfernung beim Blick in die Nähe in der tatsächlichen Gebrauchsstellung des Brillenglases und **Fig. 10b** den Refraktionsabstand Nähe bzw. den Nahabstand bei der Refraktionsbestimmung.

Generell wird davon ausgegangen, daß die Addition in einem Refraktionsabstand in der Nähe von 40 cm bestimmt wurde (gilt bis Addition 2,50 dpt, für höhere Additionen gilt 1/Addition) und diese einer Hauptsehentfernung in der Nähe von 40 cm entspricht. Weicht die Hauptsehentfernung in der Nähe vom Refraktionsabstand in der Nähe ab, kann das individuelle Brillenglasdesign auf diese Hauptsehentfernung optimiert werden.

Wenn die optimale individuelle Position des Fern- und/oder Nahbezugspunkts anhand von individuellen Daten des Brillenträgers ermittelt wird, wird ein entsprechendes Brillenglasdesign mit den so ermittelten Positionen des Fern- und Nahbezugspunkts und gegebenenfalls unter Berücksichtigung weiterer individueller Parameter des Brillenträgers automatisch berechnet.

Der Designvorschlag kann mittels einer geeigneten graphischen Benutzerschnittstellen **160A** zur Ergebnisdarstellung (Designempfehlung) - wie in **Fig. 11** gezeigt - visualisiert werden. Je nach Auswahl in den Einstellungen, kann zusätzlich eine graphische Benutzerschnittstelle **160B** (Designtuner) gezeigt werden (vgl. **Fig. 12**) mit deren Hilfe, neben einer Ergebnisdarstellung, dem Benutzer die Möglichkeit gegeben wird, durch eine Veränderung der individuellen Position des Fern- und/oder des Nahbezugspunkts und/oder eine Veränderung der individuellen Daten des Brillenträgers (insbesondere der Präferenzen, der Fassungsdaten, etc.) das Design aktiv zu verändern. Zusätzlich können die entsprechenden geometrischen Daten des Brillenglases (Mittendicke, Randdicke, Basiskurve, Gewicht) berechnet und ebenfalls mittels einer geeigneten graphischen Benutzerschnittstelle (vorzugsweise in Form eines dreidimensionalen Models) visualisiert werden.

Die graphischen Benutzerschnittstellen **160A** und **160B** sind in zwei Bereiche aufgeteilt: im oberen Bereich **162** werden Informationen zum Thema "Sehen" und/oder "Performance" mit dem vorgeschlagenen Design für ein individuelles Brillenglas; im unteren Bereich **164** Informationen zum Thema "Aussehen" bzw. "Geometrie" des individuellen Brillenglases bzw. Brille dargestellt.

Im Bereich "Aussehen" **164** können insbesondere kosmetische Eigenschaften bzw. Daten bezüglich der Ästhetik des Brillenglases (z.B. Gewicht, geometrische Daten wie Bauhöhe, maximale Randdicke, Mittendicke, Basiskurve, etc.) des gerandeten Brillenglases bzw. der gerandeten Brillengläser visualisiert bzw. graphisch dargestellt werden. Die Visualisierung der kosmetischen Eigenschaften des Brillenglases kann beispielsweise mittels einer dreidimensionalen graphischen Darstellung eines Models des Brillenglases **166** mit den ermittelten geometrischen Daten erfolgen, wie z.B. in **Fig. 11 und 12** gezeigt. Die Darstellung der kosmetischen Eigenschaften des Brillenglases kann z.B. durch eine Auswahl der Basiskurve und des Brechungsindexes beeinflußt werden. Die Auswahl kann wirkungsabhängig sein.

Der Bereich "Aussehen" **164** kann ferner einen Subbereich **168** umfassen, in welchem numerische Werte bezüglich der geometrischen Eigenschaften des Brillenglases, wie z.B. Bauhöhe, maximale Randdicke, Mittendicke, Gewicht, Basiskurve des gerandeten Glases, etc. gezeigt werden. Diese Werte können Näherungswerte sein, welche gegebenenfalls von den tatsächlichen Glasgeometriedaten abweichen. Zusätzlich können neben den Gravuren auch die individuell ermittelten Fern- und Nahbezugspunkte als Stempelpunkte gezeigt werden.

Mittels geeigneter Buttons können Ansichten **169** der gerandeten Brillengläser aus verschiedenen statischen Perspektiven gezeigt werden (Fassung von oben, Fassung von vorn, von der Seite, von schräg oben). Ebenfalls können z.B. mittels Betätigung eines Animationsbutton die gerandeten Brillengläser in der gewählten Ansicht dynamisch rotierend dargestellt werden. Zur besseren Detailansicht kann das Bild z.B. über einen entsprechenden Button vergrößert dargestellt werden.

Der Bereich "Aussehen" **164** umfaßt ferner einen Abschnitt **170** zur Anzeige von numerischen Werten bezüglich des Brechungsindexes und einen Abschnitt zur Anzeige der Basiskurve (Abschnitt **172**). Die angezeigten Werte für die Basiskurve und den Brechungsindex setzen sich aus dem Wirkungsbereich, dem notwendigen Durchmesser, den Basiskurvenwunsch und den Refraktionsdaten zusammen. Daher sind Abweichungen zu dem der Maske "Bestellwerte" eingegebenen Basiskurvenwunsch möglich. Über entsprechende Auswahlfelder können die technisch realisierbaren Werte für Basiskurve und Brechungsindex des Glases verändert werden. Falls Änderungen der Basiskurven-Vorgabe, der Brechungsindex, etc. vorgenommen werden, können z.B. durch Betätigen eines Buttons "Aktualisieren" die Grafik und die Geometriedaten entsprechend den geänderten Werten neu berechnet werden.

Neben der Visualisierung der kosmetischen Eigenschaften des Brillenglases erfolgt ferner eine Visualisierung der optischen Eigenschaften des Brillenglases (Sehbereiche, insbesondere räumliche Lage und Größe der einzelnen Sehbereiche). Die Darstellung der Sehbereichsgrößen kann lediglich relativ zu den Verordnungsdaten erfolgen, ohne daß eine eventuelle Materialabhängigkeit berücksichtigt wird. Selbstverständlich kann jedoch eine Berücksichtigung einer Materialabhängigkeit vorgesehen werden. Neben einer Visualisierung des "Aussehens" erfolgt eine Visualisierung des "Sehens" durch das Brillenglas. Insbesondere kann eine Visualisierung des Sehkomforts (z.B. Blicksenkung, Schaukeln, peripheres Sehen, Verzerrungen, etc.) vorgesehen werden.

Zusätzlich kann eine geeignete Darstellung von Performancewerten bezüglich der Sehbereiche, des Sehkomforts und/oder der kosmetischen Eigenschaften bzw. der Ästhetik des individuellen Brillenglases vorgesehen werden. Ebenfalls können Performancewerte alternativer Designvorschläge dargestellt werden.

Der Bereich "Sehen" **162** der graphischen Benutzerschnittstellen **160A** und **160B** ist daher grundsätzlich in mehrere Unter- bzw. Subbereiche gegliedert.

In dem Subbereich **174** "Binokulare Sehbereichsdarstellung" des Bereichs **162** wird z.B. das für den Kunden und die angegebene Fassung ideale Design anhand einer Ellipse schematisch gezeigt. Graue Bereiche sind dabei mit Abbildungsfehlern (z.B. Astigmatismus in Gebrauchsstellung größer als 0,5 dpt) behaftete Bereiche. Zusätzlich kann gegebenenfalls der Verlauf der 0,5 dpt Isoastigmatismuslinie gezeigt werden. Die vertikalen Höhen der Fern- und Nahbezugspunkte können jeweils durch (gegebenenfalls unterschiedlich gefärbte) Linien **175, 176** gekennzeichnet werden. Im Subbereich **177** des Bereichs **162** werden numerische Werte für die räumliche Lage (insbesondere für die vertikale Höhe im Bezug auf den Zentrierpunkt) des Fern- und des Nahbezugspunkts gezeigt.

Im Subbereich **178** "Designprofil" des Bereichs **162** wird ein qualitativer Vergleich der Sehbereichsgrößen zueinander, z.B. in Form von unterschiedlich längen Balken dargestellt, wobei F den Fernbereich, Z den Zwischenbereich und N den Nahbereich bezeichnet. Die Länge des jeweiligen Balkens bzw. Schiebers korreliert mit der jeweiligen Schwerpunktsetzung, die einem entsprechenden Entfernungsbereich zugeordnet ist. Da sich die Länge im Designprofil aus den Angaben aller vorheriger Masken ergibt, können sie gegebenenfalls von den zuvor ermittelten Präferenzen bzw. Gewichtungen des Kunden abweichen. Darüber hinaus kann eine qualitative Bewertung des dynamischen Seheindrucks durch das individuelle Brillenglas dargestellt werden. Je höher der Balken, welcher den dynamischen Seheindruck (Balken "Dynamik") darstellt, desto länger wird die Progressionszonenlänge und desto einstärkenähnlicher wird das Brillenglas bzw. desto weniger Schaukeleffekt weist das Brillenglas auf.

Zusätzlich kann dem Augenoptiker/Optometristen und/oder dem Brillenträger die Möglichkeit gegeben werden das so berechnete individuelle Brillenglasdesign aktiv zu verändern. Die Veränderung erfolgt beispielsweise in dem die räumliche Position, insbesondere die vertikale Höhe des Fern- und/oder Nahbezugspunkts, aktiv verändert wird. Alternativ können die Gewichtungen der Sehbereiche verändert werden.

Die Änderung bzw. die Anpassung der Position des Fern- und/oder Nahbezugspunkts und/oder der Präferenzen bezüglich der Sehbereiche kann beispielsweise mittels einer geeigneten graphischen Benutzerschnittstelle erfolgen. Ein Beispiel einer geeigneten graphischen Benutzerschnittstelle in Form von Schieberegler **180** ist in **Fig. 12** gezeigt. Mit den in **Fig. 12** gezeigten Schieberegler **180** ist eine direkte Anpassung der Position des Fern- und/oder Nahbezugspunkts möglich.

Das neue Brillenglasdesign mit der geänderten Position des Fern- und/oder Nahbezugspunkts wird vorzugsweise in Echtzeit berechnet und visualisiert. Vorzugsweise wird ebenfalls die Differenz bzw. die Veränderung der optischen Eigenschaften des neuen gegenüber dem alten Brillenglasdesign visualisiert.

So kann z.B. in dem Designtuner über die in der Designempfehlung **(Fig. 11)** beschriebenen Möglichkeiten hinaus eine Ellipse eingeblendet werden, welche in den Kastenmaßen und der vorgegebenen Zentrierung der genäherten binokularen Kundenfassung entspricht. Des Weiteren kann hier das vorgeschlagene, individuelle Design verändert werden, indem z.B. Schieberegler für den Fern- und den Nahbezugpunkt nach oben bzw. nach unten verschoben werden. Bei den Bestellparametern in den Anzeigefeldern für den Fern- und den Nahbezugspunkt verändern sich entsprechend die Zahlenwerte für die Lage der Bezugspunkte. Ferner verschieben sich in der binokularen Sehbereichsdarstellung die Linien für den Fern- und den Nahbezugspunkt.

Zusätzlich zu den flächig grau dargestellten Sehbereichen aus der Designempfehlung können vorzugsweise farbliche (z.B. gelbe) Sehbereichslinien (z.B. 0,5 dpt Isoastigmatismuslinie) erscheinen, welche das abgeänderte, individuelle Design zeigen. Ebenfalls ändern sich im Subbereich Designprofil **(178)** das Verhältnis der Größe der Sehbereiche zueinander sowie die Länge des Balkens "Dynamik". Die vergebenen Punkte im Abschnitt "Designprofiler" werden vorzugsweise durch die Veränderungen im Abschnitt "Designtuner" nicht beeinflusst.

Die nachfolgend aufgeführten Beispiele zeigen individuelle progressive Designs mit individuell, in Abhängigkeit von den erfaßten individuellen Daten des Brillenträgers ermittelten Fern- und Nahbezugspunkte.

## Beispiel 1: Brillenglasträger Architekt:

Der Brillenglasträger legt großen Wert auf einen breiten Zwischenbereich und wünscht sich ein "eher ruhiges" Brillenglas mit wenigen Schaukelbewegungen, da er aus beruflichen Gründen den überwiegenden Teil des Tages im Zwischenbereich (mittlere Entfernungen) sehen muss. In seiner jetzigen Brille trägt er ein Gleitsichtglas mit einer Progressionszonenlänge von 18 mm.

Für diesen Brillenglasträger empfiehlt das Programm für die ausgewählte Fassung und entsprechende Zentrierung den Fernbezugspunkt auf +2,4 mm über das Zentrier- bzw. Anpaßpunkt zu setzen. Der Nahbezugspunkt würde optimal bei -19 mm unterhalb des Zentrier- bzw. Anpaßpunkt liegen. Mit diesem progressiven Brillenglas hat der Architekt einen guten Kompromiß aus entspannter Kopfhaltung, einem breitem Zwischenbereich und geringen Schaukelbewegungen für seine Sehgewohnheiten.

## Beispiel 2: Brillenglasträgerin Lektorin:

Sie legt großen Wert auf einen großen Nahbereich und wünscht sich eine geringere Blicksenkung als bei ihrem jetzigen Gleitsichtglas, da sie aus beruflichen Gründen den überwiegenden Teil des Tages mit Arbeiten in der Nähe verbringt. In der jetzigen Brille trägt sie ein Gleitsichtglas mit einer Progressionszonenlänge von 18 mm. Für diese Kundin empfiehlt das Programm für die ausgewählte Fassung und entsprechende Zentrierung den Fernbezugspunkt auf 1,5 mm über das Zentrier- bzw. Anpaßpunkt zu verlegen. Der Nahbezugspunkt würde optimal bei -15,5 mm unterhalb des Zentrier- bzw. Anpaßpunkts liegen. Damit hat die Lektorin einen guten Kompromiss aus breiterem Nahbereich und entspannter Kopfhaltung.

Wenn der Brillenglasträger großen Wert auf einen breiten Zwischen- und Nahbereich und geringe Schaukelbewegungen im Brillenglas legt, wird von dem Programm empfohlen in Abhängigkeit von den anderen Eingabeparametern den Fernbezugspunkt nach oben zu verschieben. Der Fernbezugspunkt würde sich dann oberhalb vom Zentrier- bzw. Anpaßpunkt befinden. Je nach Refraktionsdaten und individuellen Parametern kann sich in diesen Fällen eine "Nebelung" im Zentrier- bzw. Anpaßpunkt von bis zu +0,25 dpt ergeben. Neben dieser geringfügigen Nebelung im Zentrierpunkt können sich auch seitliche Einschränkungen im Fernbereich ergeben, da der Brillenglasträger - bei einer Verschiebung des Fernbezugspunkts nach oben - in Nullblickrichtung durch die bereits früher beginnende Progression im Brillenglas sieht. Durch die veränderte Lage der Progressionszone im Brillenglas können die Sehbereiche auf Höhe des Zentrierpunktes dementsprechend kleiner ausfallen, weil die peripheren Abbildungsfehler "nach oben" verschoben werden. Der Brillenglasträger erhält jedoch bei der Wahl dieser Positionierung des Fernbezugspunkts ein nach seinen individuellen Sehgewohnheiten gestaltetes bzw. optimiertes Brillenglasdesign bzw. Brillenglas.

**Beispiel 3: Brillenglasträger arbeitet im Außendienst**

Der Brillenglasträger legt besonderen Wert auf einen großen Fernbereich, da er aus beruflichen Gründen den überwiegenden Teil des Tages mit Sehen in die Ferne verbringt. In seiner jetzigen Brille trägt er ein Gleitsichtglas mit Progressionszonenlänge 18 mm. Das Programm berechnet automatisch und empfiehlt bei diesem Kunden für die ausgewählte Fassung und entsprechende Zentrierung den Fernbezugspunkt auf -2,5 mm unterhalb des Zentrier- bzw. Anpaßpunkts zu setzen. Der Nahbezugspunkt würde optimal bei -18,4 mm unterhalb des Zentrier- bzw. Anpaßpunkts liegen. Mit diesem Brillenglas hat der Brillenglasträger einen großen Fernbereich und einen guten Kompromiß aus geringen Schaukelbewegungen sowie gut ausnutzbarem Zwischen- und Nahbereich.

**Beispiel 4:**

Auf die Frage, für welche Tätigkeiten bzw. Sehanforderungen die Brillenglasträgerin ihre Brille benutzt, ergibt sich z. B. folgendes Profil:

- Sie fährt regelmäßig Auto und sieht fern;
- Sie spielt ein Instrument und geht 2x die Woche zur Orchesterprobe;
- Abends liest Sie zur Entspannung gerne die abonnierte Tageszeitung;
- Mindestens 1x die Woche treibt sie Sport wie z. B. Joggen oder spielt Handball in ihrem Verein.

In der aktuellen Brille trägt die Brillenglasträgerin Gleitsichtgläser mit normaler Progressionszonenlänge. Da keinerlei Präferenzen festzustellen sind und die Tätigkeiten dieser Kundin gleich auf die Bereiche Ferne, mittlere Entfernung und Nähe verteilt sind, werden jeweils gleich viele Punkte für alle Entfernungen und auch für das Aktivverhalten bzw. Dynamik vergeben. In anderen Worten werden alle Sehbereiche und das dynamische Verhalten bzw. die dynamischen Eigenschaften gleich gewichtet. In dem konkreten Beispiel werden für alle Bereiche des in **Fig. 7** gezeigten "Designprofilers" jeweils 2 Punkte vergeben. In der graphischen Benutzerschnittstelle "Designempfehlung" wird das Ergebnis der Berechnungen unter Berücksichtigung der individuellen Eingaben in die vorherigen Masken dargestellt. Das Programm berechnet automatisch und empfiehlt für diese Kundin den Fernbezugspunkt auf 0 mm und den Nahbezugspunkt auf -18 mm zu positionieren. Dieses Brillenglas würde einem ausgewogenen, universellen progressiven Brillenglas mit einer Progressionszonenlänge von 18 mm entsprechen (z.B. einem Brillenglas bisherigen "Impression ILT®" der Firma Rodenstock GmbH), da bei der Designauslegung davon ausgegangen wird, daß kein Tätigkeitsschwerpunkt in einem der Entfernungsbereiche erkennbar ist.

**Beispiel 5**

Auf die Frage, für welche Tätigkeiten bzw. Sehanforderungen der Brillenglasträger seine Brille benutzt, ergibt sich folgendes Profil:

- Er legt besonderen Wert auf ungestörtes Sehen in der Ferne, da er aus beruflichen Gründen den überwiegenden Teil des Tages im Auto verbringt;
- In die mittlere Entfernung schaut er nur, um das Armaturenbrett klar erkennen zu können;
- Die Nähe nutzt der Brillenglasträger nur für kurzzeitige Schreibtischtätigkeiten, wie z.B. Vertragsabschlüsse und Ähnliches;
- In seiner Freizeit spielt er gerne Tennis und Squash, dabei legt er Wert auf wenig Schaukelbewegungen im Brillenglas.

In der aktuellen Brille trägt der Brillenglasträger Gleitsichtgläser mit normaler Progressionszonenlänge (PZL). Die Präferenz des Brillenglasträgers liegt hier eindeutig in der Ferne, die mittlere Entfernung und die Nähe spielen eine untergeordnete Rolle. Daher wurden für dieses Beispiel für die Ferne 4 Punkte, für mittlere Entfernungen und Nähe jeweils 1 Punkt vergeben (vgl. **Fig. 7**). Aufgrund der Anforderungen der dynamischen Sportarten, wie Verzeichnungsfreiheit und gute Raumwahrnehmung, wurde das Aktivverhalten bzw. Dynamik bei dem in **Fig. 7** gezeigten "Designprofiler" mit 3 Punkten gewichtet. In der graphischen Benutzerschnittstelle "Designempfehlung" wird das Ergebnis der Berechnungen unter Berücksichtigung der individuellen Eingaben in die vorherigen Masken dargestellt. Das Programm berechnet automatisch und empfiehlt für diesen Kunden den Fernbezugspunkt auf -1,1 mm und den Nahbezugspunkt auf -18,5 mm zu positionieren. Somit wird ein für die individuellen Anforderungen des Kunden größtmöglicher Fernbereich realisiert. Aufgrund der Lage des Nahbezugspunktes und der damit verbundenen relativ langen Progressionszonenlänge bietet das Brillenglas einstärkenähnliches Sehen und ist nahezu verzeichnungsfrei. Dies wirkt sich positiv z.B. bei den sportlichen Freizeitaktivitäten des Brillenglasträgers aus.

### Beispiel 6

Auf die Frage, für welche Tätigkeiten bzw. Sehanforderungen der Brillenglasträger seine Brille benutzt, ergibt sich folgendes Profil:

- Die Ferne spielt für Ihn eine untergeordnete Rolle, da er z. B. beim Autofahren die Brille meist abnimmt;
- Das Sehen in den mittleren Entfernungen ist ihm besonders wichtig;
- Der Brillenträger reagiert auf ungewohnte Verzeichnungen sehr sensibel, z. B. bei gekrümmten Linien in seinen zeichnerischen Skizzen;
- Nach getaner Arbeit liest er gern Kriminalromane;
- Aufgrund seines stressigen Jobs kommt er nicht dazu, Sport zu treiben oder sich zu bewegen.

Die wichtigste Entfernung für diesen Brillenglasträger ist also die mittlere Entfernung, auch die Nähe ist für ihn wichtig, die Ferne und das Aktivverhalten spielen eine untergeordnete Rolle. Daher werden in dem in **Fig. 7** gezeigten "Designprofiler" für die Ferne und für das Aktivverhalten jeweils 1 Punkt, 3 Punkte für mittlere Entfernungen sowie 2 Punkte für die Nähe vergeben. In der graphischen Benutzerschnittstelle "Designempfehlung" wird das Ergebnis der Berechnungen unter Berücksichtigung der Eingaben in die vorherigen Masken dargestellt. Das Programm berechnet automatisch und empfiehlt, für diesen Kunden den Fernbezugspunkt +0,7 mm und den Nahbezugspunkt auf -18,1 mm zu positionieren. Somit wird ein größtmöglicher Zwischenbereich realisiert. Aufgrund der Lage des Nahbezugspunkts und der damit verbundenen relativ langen Progressionszonenlänge bietet das Brillenglas einstärkenähnliches Sehen und ist nahezu verzeichnungsfrei. Dies kommt dem Brillenglasträger bei der Arbeit mit zeichnerischen Skizzen zugute.

### Beispiel 7

Auf die Frage, für welche Tätigkeiten bzw. Sehanforderungen die Brillenglasträgerin ihre Brille benutzt, ergibt sich folgendes Profil:

- Sie benutzt die Brille kaum für Tätigkeiten in der Ferne, daher spielt diese eine untergeordnete Rolle;
- Für ihren Beruf ist das Lesen von Schriftstücken besonders wichtig;
- Sie legt großen Wert auf eine angenehme Blicksenkung für Nahsehaufgaben;
- Aufgrund der eher statischen Haltung am Arbeitsplatz spielen Schaukelbewegungen eine untergeordnete Rolle;
- In die mittlere Entfernung schaut die Kundin vor allem bei gelegentlicher Bildschirmarbeit.

Die wichtigste Entfernung für diese Brillenglasträgerin ist also die Nähe. Auch die mittlere Entfernung ist wichtig, die Ferne sowie auch das Aktivverhalten spielen eine untergeordnete Rolle. Daher werden in dem in **Fig. 7** gezeigten "Designprofiler" für die Nähe 4 Punkte, für die mittlere Entfernung 2 Punkte und jeweils 1 Punkt für die Ferne und das Aktivverhalten vergeben. In der graphischen Benutzerschnittstelle "Designempfehlung" wird das Ergebnis der Berechnungen unter Berücksichtigung der Eingaben in die vorherigen Masken dargestellt. Das Programm berechnet automatisch und empfiehlt, den Fernbezugspunkt auf +0,8 mm und den Nahbezugspunkt auf -17,0 mm zu positionieren. Somit wird ein für die individuellen Anforderungen der Brillenglasträgerin größtmöglicher Zwischen- und Nahbereich realisiert. Aufgrund der Lage des Nahbezugspunkts wird der Wunsch der Brillenglasträgerin nach einer angenehmen Blicksenkung für Nahsehaufgaben in ihrem individuellen Gleitsichtglas umgesetzt.

Mit einem Button "Aktive Auswahl übernehmen" kann festgelegt werden, welche Daten für die Bestellung übernommen werden sollen. Es werden z.B. stets die Daten des Bereichs übernommen der gerade aktiv (nicht im Hintergrund) ist. Nach Betätigen des Buttons "Aktive Auswahl übernehmen" kann ferner ein mit dem Ergebnis gefülltes Bestellformular ausgedruckt werden. Das Bestellformular kann ferner z.B. mit weiteren Details, wie z.B. Farbe, Beschichtung, ColorMatic Farbe, Messbrille usw. ergänzt werden. Die individuellen Daten können ebenfalls gespeichert werden und/oder online an einem Brillenglashersteller übermittelt werden.

Die individuellen Daten des Brillenträgers können ebenfalls mittels geeigneter Bestellformulare erfaßt und dem Brillenglashersteller weiter übermittelt werden. **Fig. 13** zeigt ein beispielhaftes Bestellformular. In dem Bestellformular werden die erfaßten individuellen Refraktionsdaten (Sphäre, Zylinder, Achse, Prisma, Basis), Fassungs- und Zentrierdaten, individuelle Parameter der Augen des Brillenträgers und der individuellen Gebrauchsstellung (Pupillendistanz, Fassungsscheibenwinkel, Vorneigung, Hornhautscheitelabstand, etc.) und gegebenenfalls weitere individuelle Daten angegeben. Mit dem Bestellformular ist es möglich, die Positionen der Fern- und/oder Nahbezugspunkte so zu wählen, daß diese den Positionen eines universellen Gleitsichtglasdesigns entsprechen (z.B. Impression® oder Impression XS® der Firma Rodenstock GmbH). Ebenfalls ist es möglich eine mittlere Progressionszonenlänge von 16 mm festzulegen. Alternativ können die Positionen der Fern- und/oder Nahbezugspunkte in Abhängigkeit von den individuellen Fassungsdaten festgelegt werden (fassungsoptimiertes Design). So kann z.B. der Fernbezugspunkt auf dem Zentrierpunkt (d.h. bei 0 mm) und der Nahbezugspunkt auf 2 mm oberhalb vom unteren Fassungsrand festgelegt werden. Die Position der Fern- und Nahbezugspunkte kann ferner unter Berücksichtigung von weiteren individuellen Daten (z.B. Tätigkeitsschwerpunkte und Präferenzen bezüglich der Sehbereiche), wie oben in Detail beschrieben, individuell festgelegt werden.

Anschließend wird ein individuelles Brillenglas optimiert bzw. berechnet, wobei die Optimierung unter Berücksichtigung zumindest eines Teils der ermittelten individuellen Daten, insbesondere Daten bezüglich der individuellen Parameter des Brillenträgers und der individuellen Gebrauchsstellung (Fassungsscheibenwinkel, Vorneigung, Pupillendistanz, Hornhautscheitelabstand, etc,) erfolgt.

Um die Abbildungseigenschaften von Brillengläsern in der Tragesituation zu beschreiben und/oder zu berechnen, sind in der geometrischen Optik zwei Berechnungsverfahren bekannt:

- Berechnung mit Lichtstrahlen (Ray Tracing); und
- Berechnung mit Wellenfronten (Wave Tracing).

Der Begriff "Ray Tracing" setzt sich aus Ray = Strahl und Tracing = Verfolgung zusammen. In der geometrischen Optik wird das Ray Tracing Verfahren eingesetzt, um optische Abbildungen zu beschreiben. Die Berechnung eines Brillenglases mit Ray Tracing ist jedoch sehr zeitaufwändig, da für jeden Punkt im Brillenglas außer dem eigentlichen Lichtstrahl bzw. Hauptstrahl auch noch ein "begleitendes" Bündel an Nachbarstrahlen durch das Brillenglas simuliert werden muss.

Vorzugsweise wird das individuelle Brillenglas mittels eines Wavefront-Tracing-Verfahrens, insbesondere mittels einer lokalen Wellenfrontoptimierung berechnet. Der Begriff "Wave Tracing" setzt sich aus Wave = Welle und Tracing = Verfolgung zusammen. Wellenfronten können genauso wie Lichtstrahlen eingesetzt werden, um optische Abbildungen zu beschreiben oder zu berechnen. Eine Wellenfront ist die Fläche gleicher Phase einer sich ausbreitenden Welle. Eine jede solche Wellenfront fasst sämtliche Eigenschaften eines Bündels aus Nachbarstrahlen in einem einzigen Objekt zusammen. Dadurch kann die Berechnungszeit deutlich reduziert werden, so daß eine individuelle Optimierung jedes einzelnen Brillenglases ermöglicht wird. Insbesondere ist es durch die freie Wahl der Designpunkte Ferne und/oder Nähe möglich, die Verteilung der Abbildungseigenschaften auf dem Brillenglas wunschgerecht an die individuellen Sehgewohnheiten des Brillenträgers anzupassen.

**Fig. 14** zeigt eine schematische Darstellung des physiologischen und physikalischen Modells eines Brillenglases in einer vorgegebenen Gebrauchsstellung, welches **Fig. 13** ist zu erkennen, daß die Strahlen von einem unendlich entfernten Objekt **184** alle parallel verlaufen, was sich in einer ebenen Wellenfront **186** widerspiegelt. Im Gegensatz dazu divergieren die Strahlen, die von einem nahen Objekt **188** ausgehen. Entsprechend ist die Wellenfront **190** gewölbt. Das Brillenglas, welches eine vorzugsweise sphärische Vorderfläche **192** und eine individuelle berechnete progressive-atorische Rückfläche **194** aufweist, muss nun dafür sorgen, daß jede Wellenfront **196, 198** auf der Augenseite vorzugsweise so gekrümmt ist, daß das entsprechende Objekt **184, 188** scharf auf der Netzhaut des Auges **200** abgebildet wird. Idealerweise müssen diese Wellenfronten augenseitig für alle Blickrichtungen gleich stark gekrümmt sein.

Zur Berechnung des Brillenglases wird vorzugsweise eine flexible Flächengestaltung der individuell zu berechnenden progressiven Fläche mit einer Mehrzahl an Bewertungsstellen (vorzugsweise über 7000 Bewertungsstellen) eingesetzt, wobei jeder dieser Bewertungsstellen eine eigene lokale Wellenfrontdurchrechnung zugeordnet wird. Die individuelle progressive Fläche wird vorzugsweise mittels Minimierung einer Zielfunktion, welche an den Bewertungsstellen ausgewertet wird, und unter Berücksichtigung des physiologischen Sehmodells optimiert. Auf diese Weise ist es möglich, durch individuelle Wellenfrontdurchrechnungen sehr schnell und damit online nach dem Bestelleingang die Optimierung eines Brillenglases nach der variablen Zielfunktion durchzuführen.

Die Berechnung des Brillenglases umfaßt vorzugsweise eine Optimierung mit mehr als 2000 Optimierungsparametern in einem hochdimensionalen Raum. Für die so vorgenommene Echtzeit-Online-Optimierung können Multiprozessor-Großrechner eingesetzt werden.

Vorzugsweise werden bei der individuellen Optimierung des Brillenglases nicht nur Abbildungsfehler niedriger Ordnung (Sphäre, Zylinder, Prisma), sondern auch Abbildungsfehler höherer Ordnung (z.B. Koma und sphärische Abberation) minimiert. Diesbezüglich wird z.B. auf US 7,063,421 B1 verwiesen. Die Fertigung des individuell berechneten Brillenglases erfolgt z.B. mittels Präzisionsmaschinen, vorzugsweise CNC-Schleif- und Poliermaschinen, welche die berechneten Flächendaten mit einer Genauigkeit in μm-Bereich umsetzten können.

Vorzugsweise wird bei der Optimierung der individuellen Brillengläser insbesondere die Listing'sche Regel berücksichtigt.

**Fig. 15a,b** stellen jeweils schematische Darstellungen der Achslagen in einem Brillenglas ohne Berücksichtigung der Listing'schen Regel (**Fig. 15a**) und mit Berücksichtigung der Listing'schen Regel (**Fig. 15b**).

Da das Auge bei peripheren Blickauslenkungen eine leichte Rollbewegung ausführt, darf es keine feste Zylinderachse über das gesamte Brillenglas geben, sondern diese muss sich im Übergang von der Horizontalen zur Vertikalen leicht ändern (Fig. 15b). Wenn der im Auge vorhandene (durch die Refraktion bekannte) Zylinder durch das Brillenglas gut korrigiert werden soll, muss die Achslage des Zylinders im Brillenglas gut zu der Achslage passen, die das Auge aufgrund seiner Rollbewegung tatsächlich einnimmt. Passen die Achslagen von Auge und Brillenglas nicht zusammen, so ergeben sich optisch zwei schief gekreuzte Zylinder. Der Brillenglasträger hätte bei schiefen, seitlichen Blickbewegungen somit einen Astigmatismus, welcher nicht ausgeglichen wird. Das hat einen Visusabfall in diesem Bereich zur Folge. Vorzugsweise wird daher die Torsionseinstellung bei der Berechnung des individuellen Brillenglases berücksichtigt. Die Berücksichtigung der Listing'schen Regel wird umso relevanter:

- je größer der Refraktionszylinder des Kunden ist, und/oder
- je stärker die Blickauslenkung von der horizontalen und vertikalen Auslenkung abweicht, und/oder
- je stärker bzw. größer die Blickauslenkung absolut ist.

In einem konventionellen progressiven Brillenglas mit einer progressiven Vorderfläche und einer sphärische/torischen Rezeptfläche kann die Listing'sche Regel - im Gegensatz zu Brillengläsern mit einer progressiven, individuellen, augenseitigen Freiformfläche - nicht umgesetzt werden.

Ferner bevorzugt wird bei der Optimierung und Berechnung des individuellen progressiven Brillenglases eine individuelle Vordezentration berücksichtig. Somit werden die ausnutzbaren Durchmesser vergrößert. Die optimale Vordezentration kann anhand von Daten bezüglich der Fassungs- bzw. Brillenglasform sowie Daten bezüglich der Zentrierung automatisch berechnet werden. Alternativ kann eine individuelle Vordezentration vom Augenoptiker/Optometrist selbst festgelegt werden. In diesem Fall kann der anhand einer speziellen Zentrierkarte ermittelte gewünschte Durchmesser ebenfalls berücksichtigt werden. Insbesondere kann eine Vordezentration von bis zu 5 mm berücksichtigt werden.

Das individuell berechnete Brillenglas weist vorzugsweise eine sphärische oder rotationssymmetrische asphärische objektseitige Vorderfläche und eine individuelle in Abhängigkeit von den individuell festgelegten Bezugs- bzw. Designpunkte Ferne und Nähe, den individuellen Refraktionsdaten, den individuellen Parameter des Brillenträgers und der Gebrauchssituation (z.B. Pupillendistanz, Vorneigung, Fassungsscheibenwinkel, Hornhautscheitelabstand, etc.) optimierte progressive, augenseitige Freiformfläche auf.

Die Position der individuellen Fern- und Nahbezugspunkte wird vorzugsweise mittels einer individuellen Stempelung mittels nicht permanenten Markierungen aufgezeichnet. Vorzugsweise kann die Position der individuellen Fern- und Nahbezugspunkte ferner anhand von permanenten Markierungen bzw. Mikrogravuren des Brillenglases und einer Rekonstruktionsvorschrift (Schablone, Zentrierkarte) eindeutig rekonstruiert werden. **Fig. 16a,b** zeigen Beispiele von nicht permanenter Stempelung zweier individuellen progressiven Brillengläsern.

Die nicht permanente Markierung bzw. der Stempel eines individuell nach einem bevorzugten erfindungsgemäßen Verfahren optimierten Brillenglases besteht aus "beweglichen" und "fixen" Bestandteilen. Zu den beweglichen Teilen gehören zwei runde Klammern **202**, welche die Lage des Fernbezugspunkts bzw. des Designpunkts Ferne kennzeichnen, sowie der Nahmeßkreis **204**, welcher die Lage des Nahbezugspunkts bzw. des Designpunkts "Nähe" markiert. Der Fernbezugspunkt befindet sich in der Mitte der runden Klammern **202** und der Nahbezugspunkt in der Mitte des Nahmeßkreises **204**. Abhängig von der Lage der Fern- und Nahbezugspunkte kann der Stempel eines individuellen Brillenglases daher unterschiedlich aussehen. Mittels eines Kreuzes **206** (Zentrierkreuz) wird die Position des Zentrier- bzw. Anpaßpunkts gekennzeichnet.

Der Prismenbezugspunkt **208** befindet sich im Normalfall 4 mm unter dem Zentrierpunkt. Bei höherer Anisometropie und Kundenwunsch bezüglich einer bestimmten Gewichtung (z. B. wenn im Nahbereich die prismatischen Vertikaldifferenzen angeglichen werden sollen) kann ein Prismenangleichspunkt in die gewünschte Richtung verschoben werden.

Bei dem in **Fig. 16a** gezeigten Beispiel befindet sich der Fernbezugspunkt auf der Höhe des Zentrierpunkts. Der Nahbezugspunkt befindet sich auf einer vertikalen Höhe von -18 mm unterhalb des Zentrierpunkts. In **Fig. 16b** ist ein weiteres Beispiel einer individuellen Stempelung bzw. eines individuellen Stempelbildes eines individuellen Brillenglases dargestellt. Das Brillenglas wird für einen Brillenträger, welcher viel Wert auf einen großen Fernbereich legt, individuell berechnet bzw. optimiert. Der Fernbezugspunkt liegt auf einer vertikalen Höhe von -4 mm unterhalb des Zentrier- bzw. Anpaßpunkts und der Nahbezugspunkt liegt auf einer vertikalen Höhe von -18 mm unterhalb des Zentrier- bzw. Anpaßpunkts.

Vorzugsweise sind die Werte für die Lage der Fern- und Nahbezugspunkte (insbesondere für die vertikale Höhe im Bezug auf den Zentrier- bzw. Anpaßpunkt) ebenfalls permanent im Brillenglas eingraviert.

In Ausnahmefällen kann die Stempelung von der oben beschriebenen abweichen. Ferner kann eine explizite nicht permanente Kennzeichnung der Positionen der Fern- und Nahbezugspunkte und/oder des Zentrier- bzw. Anpaßpunkts fehlen. Die Bezugspunkte können jedoch mit Hilfe einer Rekonstruktionsvorschrift, umfassend eine Zentrierkarte, aufgestempelte Skalen in 1 mm-Schritten und eine Glastüte eindeutig, ermittelt werden. Zur Rekonstruktion der Bezugspunkte wird die Brillenfassung mit gekennzeichnetem Zentrierpunkt auf das Zentrierkreuz der Zentrierkarte gelegt und die Position der Fern- und Nahbezugspunkte auf das Brillenglas gezeichnet. Die Position der Fern- und Nahbezugspunkte kann ebenfalls mit Hilfe der permanent eingravierten Werte unterhalb der nasalen Basiskurven- und Indexgravur ermittelt werden.

Neben einer Rekonstruktion der Position der Bezugspunkte ist es mit einer entsprechenden Zentrierkarte möglich einen optimalen Durchmesser des rohrunden Brillenglases zu ermitteln.

Die Ermittlung eines optimalen Durchmessers mittels Zentrierkarte kann folgendermaßen erfolgen:

1) Bestimmen des für die ausgesuchte Fassung entsprechenden Mindestdurchmessers, der - unabhängig von der seitlichen Zentrierung - dem kleinsten umschreibenden Durchmesserkreis der Zentrierkarte entspricht. Dieser Wert entspricht dem ersten Wert in einer Durchmesserbestellung, z. B. **50**/60.

2) Positionieren des in der Anpassung ermittelten Durchblickspunkts so auf der Zentrierkarte, daß er mit dem Zentrierkreuz der Zentrierkarte zur Deckung kommt.

3) Ablesen des größten notwendigen Durchmessers. Dies ist bei einer Dezentration Richtung nasal, wie sie in den meisten Fällen auftritt (Pupillendistanz PD kleiner als der Mittenabstand der Fassung), der Durchmesserkreis, welcher die Fassung temporal umschreibt. Dieser Wert entspricht dem zweiten Wert der Durchmesserbestellung, z.B. 50/60. Vorzugsweise ist die Differenz zwischen nutzbarem und Mindestdurchmesser nicht größer als 10 mm.

4) Sind die Durchmesser nasal und temporal gleich, so empfiehlt sich die Bestellung in zentrischer Ausführung.

Zusätzlich zu der nicht permanenten Markierungen bzw. Stempelungen weist das individuelle Brillenglas ebenfalls permanente (Mikro-)Gravuren auf.

**Fig. 17** zeigt die permanente Gravur eines individuell optimierten linken Brillenglases, das von hinten betrachtet wird (d.h. von der augenseitigen Seite). Die Funktionsgravur bzw. die permanente Markierung zur Ausrichtung des Brillenglases ist das Unendlichzeichen. Die beiden Funktionsgravuren **210, 212** befinden sich in einem Abstand von 34 mm zueinander auf Höhe des Zentrierpunkts bzw. Zentrierkreuzes. Unterhalb des nasalen Unendlichzeichens **212** befinden sich die jeweils zweistellige Basiskurvengravur **214** und Indexgravur **216.** Darunter befindet sich die Gravur **218** für die Lage von Fern- und Nahbezugspunkt. Die erste Zahl gibt dabei den vertikalen Abstand des Fernbezugspunkts relativ zum Zentrier- bzw. Anpaßpunkt an. Die zweite Zahl gibt den vertikalen Abstand des Nahbezugspunkts relativ zum Zentrier- bzw. Anpaßpunkt an.

Der Fernbezugspunkt kann vorzugsweise in einem Bereich zwischen -4 und +4 mm unterhalb bzw. oberhalb des Zentrierpunkts befinden. Der Nahbezugspunkt kann sich vorzugsweise in einem Bereich zwischen -13 und -20 mm unter dem Zentrier-bzw. Anpaßpunkt befinden.

Temporal unter der Funktionsgravur **210** befindet sich die zweistellige Additionsgravur **220**.

Zusammengefaßt bezeichnen in **Fig. 17**:

∞  die Funktionsgravur;
25  die Addition;
65  die Basiskurve;
60  die Brechzahl;
-4  den individuellen vertikalen Abstand des Fernbezugspunkts vom Zentrier- bzw. Anpaßpunkt;
18  den individuellen vertikalen Abstand des Nahzbezugspunkts vom Zentrier- bzw. Anpaßpunkt.

Das fertigbearbeitete und gestempelte Brillenglas wird in einer Glastüte verpackt und dem Augenoptiker/Kunden geliefert. Ein Beispiel einer Glastüte ist in **Fig. 18** gezeigt. **Fig. 19** zeigt eine Liste der auf der Glastüte verwendeten Piktogramme bzw. Symbole.

Die individuellen Daten des Brillenträgers sind auf jeder Glastüte aufgedruckt. Insbesondere sind auf jeder Glastüte folgende Daten aufgedruckt:

- Glastyp, Material, Farbe, Beschichtung, Durchmesser
- Bestellwert: Sphäre, Zylinder, Achse, Prisma (resultierend), Basis (resultierend), Addition;
- Soll-Messwerte für das Scheitelbrechwertmessgerät im Messpunkt für Ferne und Addition in konkaver Scheitelmessstellung inkl. des messbaren Prismas im Prismenbezugspunkt (zusammengesetzt aus DRP und bestellten Prismen);

- Bei prismatischen Refraktionsdaten: Angaben zur Art der Refraktion: Pupillenmittenzentrierung (PMZ) oder Formelfall (FF) und Größe und Richtung der notwendigen Zentrierkorrektur;
- Allgemeine Auftragsdaten, ergänzende Informationen und Kommission auf der Rückseite der Glastüte;
- Angaben zu den individuellen Parametern: monokulare PD, HSA, VN, FSW;
- Angaben zu den Designpunkten: Lage von Fern- und Nahbezugspunkt bezogen auf den Zentrier- bzw. Anpaßpunkt;
- Basiskurve, Vordezentration und Inset des Glases; Angabe der korrigierten PD zum Einschleifen (COR PD), wenn die Scheibenform und die Zentrierdaten bekannt sind.

Auf der Glastüte finden sich insbesondere die relevanten Daten für ein korrektes Einschleifen in der Brillenfassung, insbesondere <u>Daten bezüglich der Fassungs- bzw. Scheibenform.</u>

Insbesondere wird bei einer Bestellung mit Angabe der Scheibenform und der Zentrierdaten (wie bei den Sportgläsern), die korrigierte Pupillendistanz PD zum Einschleifen (COR PD) berechnet. Diese ist notwendig, um die richtige Kunden-PD in der fertig verglasten Brille zu erhalten. Auch bei Brillengläsern mit Korrektionsprisma ist die COR PD anstatt der Kunden PD zum Einschleifen zu verwenden, wenn die Form angegeben wurde. Die notwendige Zentrierkorrektur für Prismen mit horizontaler und vertikaler Basislage ist bereits bei der Berechnung der Brillengläser berücksichtigt worden. Der Wert für die Zentrierkorrektur auf der Glastüte ist deshalb stets null.

Bei einer Bestellung ohne Formangabe kann die COR PD nicht berechnet werden, da die zu deren Berechnung notwendigen Parameter (Fassungs- und Zentrierdaten) nicht übermittelt werden. Bei einem individuell nach einem bevorzugten Optimierungsverfahren optimierten progressiven Brillenglas mit Korrektionsprismen wird die Zentrierkorrektur für Prismen mit horizontaler und vertikaler Basislage vorzugsweise bereits bei der Berechnung der Gläser berücksichtigt. Der Wert für die Zentrierkorrektur auf der Glastüte bleibt null. Dieser Wert bezieht sich bei einer Bestellung ohne Formangabe auf die PD.

**Fig. 20a** und **b** illustrieren die Zentrierung eines progressiven Brillenglases vor den Augen des Brillenträgers sowie die entsprechende Lage der Bezugspunkte. Das in **Fig. 20a** gezeigte Brillenglas ist ein individuelles Brillenglas mit individuell nach einem bevorzugten erfindungsgemäßen Verfahren ermittelten Positionen der Fern- und Nahbezugspunkte. Insbesondere sind die Positionen des in **Fig. 20a** gezeigten Brillenglases individuell in Abhängigkeit von den Fassungsdaten festgelegt. Das in **Fig. 20b** gezeigte Brillenglas ist ein Standardbrillenglas.

Die individuell berechneten progressiven Brillengläser werden nach Bezugspunktforderung angepasst. Das bedeutet, daß der Zentrier- bzw. Anpaßpunkt (bzw. das Zentrierkreuz) bei Nullblickrichtung in habitueller Kopf- und Körperhaltung auf Pupillenmitte liegen soll. Die Mindesteinschleifhöhe hängt von der Lage des Nahbezugspunkts ab. Vorzugsweise bleiben mindestens noch 2 mm unterhalb des Nahbezugspunkts in der Fassung erhalten. Die minimale Einschleifhöhe liegt somit vorzugsweise bei 15 mm unter dem Zentrierpunkt. Werden Gleitsichtgläser abweichend von der Zentrierempfehlung angepasst, kann es zu Einschränkungen in den Abbildungseigenschaften kommen.

Bei einer fehlerhaften Zentrierung des Brillenglases, insbesondere bei einer zu tiefen Zentrierung, ergeben sich bereits im Fernbereich geringfügige Einschränkungen durch die tiefe Zentrierung. Die Unterschiede kommen insbesondere dadurch zustande, daß das Brillenglas nicht in der bei der Optimierung zugrunde gelegten Gebrauchssituation getragen wird.

Im Nahbereich hingegen zeigen sich, im Gegensatz zum Fernbereich, deutliche Einschränkungen in einem tiefer zentrierten Brillenglas. Zum einen resultieren diese Einschränkungen aus der einfachen Tatsache, daß der Nahbereich je nach Fassungsgröße nicht mehr in der Fassung vorhanden ist und der Brillenträger beim Blick in die Nähe durch den Progressionsbereich sieht, der deutlich schmäler ist als der Nahbereich. Zum anderen entstehen zusätzliche Fehler dadurch, daß das Brillenglas nicht in der bei der Optimierung zugrunde gelegten Gebrauchssituation getragen wird. Zusätzlich wird bei gleicher Blicksenkung die Nahwirkung nicht erreicht und der Kunde hat einen zusätzlichen Akkommodationsaufwand.

Eine Betonung der Sehbereiche kann daher richtigerweise wie oben beschrieben durch eine Verschiebung des Fern- und/oder Nahbezugspunkts erzeugt werden. Zusätzlich können bei einer abweichenden Hauptblickrichtung, z.B. bei besonders großen oder kleinen Menschen, die Hauptsehbereiche so individuell angeordnet werden, daß diese mit der jeweiligen Hauptblickrichtung zusammenfallen.

In den Bezugspunkten werden auch die so genannten Soll-Messwerte gemessen, wobei die Soll-Messwerte neben den Bestellwerten auf der Glastüte des individuellen Brillenglases angegeben werden. Die Soll-Messwerte beziehen sich vorzugsweise auf die konkave Scheitelmessstellung. Toleranzbetrachtungen beziehen sich dabei auf die Soll-Messwerte, nicht auf die Bestellwerte.

**Fernwirkung**

Die Sollmesswerte für Sphäre, Zylinder und Achse werden im Fernbezugspunkt überprüft. Dieser Fernbezugspunkt befindet sich individuell unterschiedlich, vorzugsweise innerhalb eines Bereichs von +4 bis -4 mm, um den Zentrierpunkt. Die genaue Lage des Fernbezugspunkts kann der Zusatzgravur unterhalb der Basiskurven- und Indexgravur entnommen werden. Die Messung der Fernteilwirkung ist in **Fig. 21a** schematisch dargestellt.

**Prismatische Wirkung**

Im Prismenbezugspunkt wird eine kombinierte Wirkung aus Dickenreduktionsprisma (Basislage immer 270°) und Korrektionsprismen gemessen. Die Messung der prismatischen Wirkung ist in **Fig. 21**b schematisch dargestellt.

**Nahwirkung**

Der Nahbezugspunkt befindet sich individuell unterschiedlich innerhalb eines Bereichs von -13 bis -20 mm unterhalb des Zentrierpunkts. Die genaue Lage des Nahbezugspunkts kann der Zusatzgravur unterhalb der Basiskurven- und Indexgravur entnommen werden. Die Messung der Nahwirkung ist in **Fig. 21c** gezeigt.

**Addition**

Der Sollmesswert der Addition entspricht der Differenz der mittleren Wirkung (sphärisches Äquivalent) zwischen Fern- und Nahbezugspunkt. In vielen Fällen ist es jedoch einfacher und im Allgemeinen ausreichend die Übereinstimmung von bestellter und gravierter Addition zu überprüfen.

Das nach dem oben beschriebenen Verfahren bzw. flexible Brillenglasdesign zeichnet sich insbesondere durch folgende vorteilhafte Eigenschaften aus:

- optimale Korrektur der Fehlsichtigkeit durch Berücksichtigung aller Refraktionsdaten (Wirkungsoptimierung), der Fassungs- und Zentrierdaten sowie von PD, HSA, VN und FSW;
- Sehbereiche sind immer optimal groß und ideal überlappend angeordnet, da alle individuellen Parameter und Refraktionsdaten bei der Optimierung berücksichtigt werden;
- Optimierung

  - in Gebrauchsstellung;
  - für alle Refraktionsdaten;
  - Wellenfrontenoptimierung unter Berücksichtigung der Abbildungsfehler höherer Ordnung, wie Koma und sphärische Aberration;
  - Berücksichtigung der Listing'schen Regel;
  - in Freiformtechnologie;

- Höchste Spontanverträglichkeit;
- Punktgenauer Inset, auch abweichend von 100% Konvergenzvermögen bestellbar (z. B. für Einäugige);
- Identische Sehbereiche rechts/links, auch bei Anisometropien;
- Bestellung der Refraktionsdaten für die Ferne auch in 0,12-dpt-Schritten;
- Bestellung von Prismen/MDM inklusive;
- Perfekte Ästhetik.

Vorzugsweise weist das individuell in Abhängigkeit von den Kundenbedürfnissen und Parametern ermittelte bzw. berechnete Brillenglasdesign charakteristische Eigenschaften eines ausgewogenen, universellen Brillenglasdesigns, d.h. maximal große Sehbereiche für alle Entfernungen bei harmonischen Übergängen zwischen den zentralen und peripheren Sehbereichen auf. Ein solches Design bzw. ein solches Brillenglas bietet somit einen optimalen Sehkomfort für ein breites Spektrum von Situationen im täglichen Leben (Autofahren, Freizeitaktivitäten, Lesen, etc.).

**Patentansprüche**

1. Verfahren zur Herstellung eines prismatischen Brillenglases für einen Brillenträger, umfassend

   - Erfassen von individuellen Benutzerdaten des Brillenträgers, wobei die individuellen Benutzerdaten prismatische Verordnungsdaten umfassen, wobei die prismatischen Verordnungsdaten eine Vertikalkomponente $p_y$ einer prismatischen Korrektionswirkung umfassen;
   - Ermitteln eines Designentwurfs unter Berücksichtigung der individuellen Benutzerdaten ohne die prismatischen Verordnungsdaten;

- Bestimmen eines Anpasspunkts und zumindest eines optischen Entwurfsbezugspunkts für zumindest eine optische Wirkungsgröße des Brillenglases in Abhängigkeit von den individuellen Benutzerdaten ohne die prismatischen Verordnungsdaten derart, dass ein gemäß dem Designentwurf gefertigtes Entwurfs-Brillenglas bei Zentrierung für den Brillenträger gemäß dem Anpasspunkt zumindest für einen durch den optischen Entwurfsbezugspunkt verlaufenden Hauptstrahl einen vorgegebenen Wert für die zumindest eine optische Wirkung für den Brillenträger erfüllt;

- Hinzufügen einer prismatischen Wirkung zum Designentwurf in Abhängigkeit von den prismatischen Verordnungsdaten; und

- Bestimmen einer Bezugspunktverschiebung $c_B$ in Abhängigkeit von den prismatischen Verordnungsdaten, wobei eine Vertikalkomponente $c_y$ (in mm) der Bezugspunktverschiebung $c_B$ gemäß den Formeln

$$\delta = -\frac{p_y}{100}$$

($p_y$ in cm/m)

$$\alpha_K = \frac{\delta}{n-1}$$

$$d_{Pr} = \frac{\varnothing \left|\tan\alpha_K\right|}{2} \approx \frac{\varnothing \left|\alpha_K\right|}{2} \qquad ,$$

mit einem Brillenglasdurchmesser $\varnothing$ (in mm), $z_K = b' + \frac{e+10}{100}\left(b' + d_{Pr} + d_{min} + \max(0, S')\right)\cos\alpha_V$ mit einem Augendrehpunktabstand b' (in mm), einem Hornhautscheitelabstand e (in mm), einer minimalen Dicke $d_{min}$ des Brillenglases (in mm) einem mittleren Brechwert S' des Brillenglases (in dpt),

$\Delta_{y1} = y_{BP} - y_{BZ}$ , mit einer vertikalen Positionskomponente $y_{BP}$ des optischen Entwurfsbezugspunkts (in mm) und einer vertikalen Positionskomponente $y_{BZ}$ des Anpasspunkts,

$$\varphi_1 = \arctan\left(\frac{\Delta y_1}{z_K}\right)$$

$$\varphi_2 = \varphi_1 + \delta$$

$$\Delta y_2 = z_K \tan\varphi_2$$

$$c_y = \Delta y_2 - \Delta y_1$$

bestimmt wird.

2. Verfahren zur Herstellung eines prismatischen Brillenglases für einen Brillenträger, umfassend

- Erfassen von individuellen Benutzerdaten des Brillenträgers, wobei die individuellen Benutzerdaten prismatische Verordnungsdaten umfassen;

- Ermitteln eines Designentwurfs unter Berücksichtigung der individuellen Benutzerdaten ohne die prismatischen Verordnungsdaten;

- Bestimmen eines Anpasspunkts und zumindest eines optischen Entwurfsbezugspunkts für zumindest eine optische Wirkungsgröße des Brillenglases in Abhängigkeit von den individuellen Benutzerdaten ohne die prismatischen Verordnungsdaten derart, dass ein gemäß dem Designentwurf gefertigtes Entwurfs-Brillenglas bei Zentrierung für den Brillenträger gemäß dem Anpasspunkt zumindest für einen durch den optischen Entwurfsbezugspunkt verlaufenden Hauptstrahl einen vorgegebenen Wert für die zumindest eine optische Wirkung für den Brillenträger erfüllt;

- Bestimmen zumindest einer objektseitigen "Soll"-Richtung als die Richtung des objektseitigen Abschnitts des Hauptstrahls durch den zumindest einen optischen Entwurfsbezugspunkt des Entwurfsbrillenglases;

- Festlegen eines prismatischen Designentwurfs durch Hinzufügen einer prismatischen Wirkung zum Designentwurf in Abhängigkeit von den prismatischen Verordnungsdaten; und

- Bestimmen einer Bezugspunktverschiebung $c_B$ in Abhängigkeit von den prismatischen Verordnungsdaten, wobei das Bestimmen einer Bezugspunktverschiebung umfasst

-- Festlegen zumindest eines um einen Startwert der zumindest einen Bezugspunktverschiebung relativ zu dem zumindest einen Entwurfsbezugspunkt verschobenen Entwurfsbezugspunkt; und

-- Ermitteln zumindest einer objektseitigen "Ist"-Richtung als die Richtung des objektseitigen Abschnitts des Hauptstrahls durch den zumindest einen verschobenen Entwurfsbezugspunkt auf Basis des prismatischen Designentwurfs, wobei das Verfahren ferner umfasst

- Bewerten des prismatischen Designentwurfs auf Basis der zumindest einen "Soll"-Richtung und der zumindest einen "Ist"-Richtung, und

wobei im Falle einer unzureichenden Übereinstimmung der zumindest einen "Ist"-Richtung mit der zumindest einen "Soll"-Richtung im Schritt des Bewertens des prismatischen Designentwurfs eine weitere Bezugspunktverschiebung ermittelt wird und insbesondere im Falle einer ausreichenden Übereinstimmung der zumindest einen "Ist"-Richtung mit der zumindest einen "Soll"-Richtung der prismatische Designentwurf als Brillenglasdesign festgelegt wird.

3.  Verfahren nach Anspruch 1 oder 2,
    wobei der zumindest eine optische Entwurfsbezugspunkt einen Prismenbezugspunkt umfasst und wobei der vorgegebene Wert für die zumindest eine optische Wirkungskungsgröße einen Wert Null für die prismatische Wirkung umfasst; und/oder
    wobei der zumindest eine optische Entwurfsbezugspunkt einen Fernbezugspunkt umfasst und wobei der vorgegebene Wert für die zumindest eine optische Wirkungsgröße einen von den individullen Benutzerdaten umfassten Wert für die dioptrische Fernwirkung umfasst; und/oder
    wobei der zumindest eine optische Entwurfsbezugspunkt einen Nahbezugspunkt umfasst und wobei der vorgegebene Wert für die zumindest eine optische Wirkungsgröße einen von den individullen Benutzerdaten umfassten Wert für die dioptrische Nahwirkung umfasst.

4.  Verfahren nach einem der vorangegangenen Ansprüche, wobei das Brillenglas eine Referenzfläche, auf oder bezüglich der der Anpasspunkt und/oder der zumindest eine optische Bezugspunkt bzw. Entwurfsbezugspunkt festgelegt bzw. verschoben wird, und eine Rezeptfläche umfasst, welche in Abhängigkeit von den individuellen optischen Korrektionsdaten ermittelt bzw. angepasst wird.

5.  Verfahren nach Anspruch 4, ferner umfassend ein Festlegen eines korrigierten prismatischen Designentwurfs umfassend

    - Verschieben der Rezeptfläche relativ zur Referenzfläche und/oder der Referenzfläche relativ zum Anpasspunkt in Abhängigkeit von der zumindest einen Bezugspunktverschiebung; und
    - Ermitteln eines korrigierten prismatischen Designentwurfs durch Optimieren der Rezeptfläche in Abhängigkeit von den Benutzerdaten,

    wobei das Ermitteln der zumindest einen objektseitigen "ist"-Richtung als die Richtung des objektseitigen Abschnitts des Hauptstrahls durch den zumindest einen verschobenen Entwurfsbezugspunkt auf Basis des korrigierten prismatischen Designentwurfs erfolgt.

**6.** Verfahren nach einem der vorangegangen Ansprüche, ferner umfassend ein Fertigen des Brillenglases mit einer Zentriermarkierung, insbesondere einem Zentrierkreuz am Anpasspunkt und/oder zur Kenntlichmachung bzw. zum Markieren des Zentrierpunkts.

**7.** Verfahren nach einem der vorangegangenen Ansprüche, wobei das Hinzufügen der prismatischen Wirkung unabhängig von weiteren individuellen optischen Korrektionswirkungen erfolgt.

**8.** Verfahren nach einem der vorangegangenen Ansprüche, wobei das Hinzufügen der prismatischen Wirkung durch ein Verkippen einer Rückfläche im Designentwurf des Brillenglases relativ zu einer Vorderfläche erfolgt.

**9.** Verfahren nach einem der vorangegangenen Ansprüche, wobei das Ermitteln eines Designentwurfs ein Bestimmen eines Entwurfszentrierpunkts derart umfasst, dass ein gemäß dem Designentwurf gefertigtes Entwurfs-Brillenglas bei Zentrierung für den Brillenträger gemäß dem Entwurfszentrierpunkt die von den Benutzerdaten umfassten individuellen Korrektionswirkungen für den Brillenträger erfüllt, und wobei das Bestimmen von Zentrierdaten ein Ermitteln einer Zentrierverschiebung $s_Z$ als Verschiebung eines Anpasspunkts relativ zum Entwurfszentrierpunkt umfasst.

**10.** Computerprogrammprodukt umfassend Programmcode, welcher, wenn in einem Computersystem geladen und ausgeführt, zur Durchführung eines Verfahrens nach einem der vorangegangenen Ansprüche ausgelegt ist.

**11.** System zur Herstellung eines prismatischen Brillenglases, welches ausgelegt ist, ein Verfahren nach einem der Ansprüche 1 bis 9 auszuführen.

## Claims

**1.** Method for the production of a prismatic spectacle lens for a spectacle wearer, comprising

- collecting individual user data of the spectacle wearer, the individual user data comprising prismatic prescription data, the prismatic prescription data comprising a vertical component $p_y$ of a prismatic correction effect;
- determining a design draft, taking into account the individual user data without the prismatic prescription data;
- determining an accommodation point and at least one draft reference point for at least one optical effect value of the spectacle lens, as a function of the individual user data without the prismatic prescription data such that a draft spectacle lens, manufactured according to the design draft, when centring for the spectacle wearer according to the accommodation point at least for a main beam which extends through the optical draft reference point, fulfils a prescribed value for the at least one optical effect for the spectacle wearer;
- adding a prismatic effect to the design draft as a function of the prismatic prescription data; and
- determining a reference point displacement $c_B$ as a function of the prismatic prescription data, there being determined a vertical component $c_y$ (in mm) of the reference point displacement $c_B$ according to the formulae

$$\delta = -\frac{p_y}{100}$$

($p_y$ in cm/m)

$$\alpha_K = \frac{\delta}{n-1}$$

$$d_{Pr} = \frac{\varnothing|\tan\alpha_K|}{2} \approx \frac{\varnothing|\alpha_K|}{2}$$

with a spectacle lens diameter ø (in mm)

$$z_K = b' + \frac{e+10}{100}\left(b' + d_{Pr} + d_{min} + \max(0, S')\right)\cos\alpha_V$$

with an eye rotation point spacing b' (in mm), a corneal apex spacing e (in mm), a minimum thickness $d_{min}$ of the spectacle lens (in mm), an average refractive index S' of the spectacle lens (in dpt), $\Delta y_1 = y_{BP} - y_{BZ}$, with a vertical position component $y_{BP}$ of the optical draft reference point (in mm) and a vertical position component $y_{BZ}$ of the accommodation point,

$$\dot{\varphi}_1 = \arctan\left(\frac{\Delta y_1}{z_K}\right)$$

$$\varphi_2 = \varphi_1 + \delta$$

$$\Delta y_2 = z_K \tan\varphi_2$$

$$c_y = \Delta y_2 - \Delta y_1$$

2. Method for the production of a prismatic spectacle lens for a spectacle wearer, comprising

- collecting individual user data of the spectacle wearer, the individual user data comprising prismatic prescription data;
- determining a design draft, taking into account the individual user data without the prismatic prescription data;
- determining an accommodation point and at least one optical draft reference point for at least one optical effect value of the spectacle lens, as a function of the individual user data without the prismatic prescription data such that a draft spectacle lens, manufactured according to the design draft, when centring for the spectacle wearer according to the accommodation point at least for a main beam which extends through the optical draft reference point, fulfils a prescribed value for the at least one optical effect for the spectacle wearer;
- determining at least one object-side "reference" direction as the direction of the object-side portion of the main beam through the at least one optical draft reference point of the draft spectacle lens;
- fixing a prismatic design draft by adding a prismatic effect to the design draft as a function of the prismatic prescription data; and
- determining a reference point displacement $c_B$ as a function of the prismatic prescription data, the determination of a reference point displacement comprising

  - fixing at least one draft reference point which is displaced by a starting value of the at least one reference point displacement relative to the at least one draft reference point; and
  - determining at least one object-side "actual" direction as the direction of the object-side portion of the main beam through the at least one displaced draft reference point on the basis of the prismatic design draft,

the method comprising furthermore

  - evaluating the prismatic design draft on the basis of the at least one "reference" direction and of the at least one "actual" direction, and

in the case of an inadequate correspondence of the at least one "actual" direction to the at least one "reference" direction in the step of evaluating the prismatic design draft, a further reference point displacement being determined and in particular in the case of an inadequate correspondence of the at least one "actual" direction to the at least one "reference" direction, the prismatic design draft being fixed as spectacle lens design.

3. Method according to claim 1 or 2,
the at least one optical draft reference point comprising a prism reference point and the prescribed value for the at least one optical effect value comprising a zero value for the prismatic effect; and/or
the at least one optical draft reference point comprising a distance reference point and the prescribed value for the at least one optical effect value comprising a value, included by the individual user data, for the dioptric distance effect; and/or
the at least one optical draft reference point comprising a near reference point and the prescribed value for the at least one optical effect value comprising a value, included by the individual user data, for the dioptric near effect.

4. Method according to one of the preceding claims, the spectacle lens comprising a reference surface, on or relative to which the accommodation point and/or the at least one optical reference point or design reference point is fixed or displaced, and a prescription surface which is determined or adapted as a function of the individual optical correction data.

5. Method according to claim 4, comprising furthermore fixing a corrected prismatic design draft comprising

- displacing the prescription surface relative to the reference surface and/or the reference surface relative to the accommodation point as a function of the at least one reference point displacement; and
- determining a corrected prismatic design draft by optimising the prescription surface as a function of the user data,
- determining the at least one object-side "actual" direction as the direction of the object-side portion of the main beam through the at least one displaced draft reference point being effected on the basis of the corrected prismatic design draft.

6. Method according to one of the preceding claims, comprising furthermore manufacture of the spectacle lens with a centring marking, in particular a centring cross, at the accommodation point and/or for indicating or for marking the centring point.

7. Method according to one of the preceding claims, the addition of the prismatic effect being effected independently of further individual optical correction effects.

8. Method according to one of the preceding claims, **characterised in that** the addition of the prismatic effect is effected by tilting of a rear surface in the design draft of the spectacle lens relative to a front surface.

9. Method according to one of the preceding claims, determination of a design draft comprising determining a draft centring point such that a draft spectacle lens manufactured according to the design draft, when centring for the spectacle wearer according to the draft centring point, fulfils the individual correction effects which are included by the user data for the spectacle wearer, and determination of centring data comprising determining a centring displacement $s_Z$ as displacement of an accommodation point relative to the draft centring point.

10. Computer programme product comprising program code which, when loaded and run in a computer system, is designed to implement a method according to one of the preceding claims.

11. System for the production of a prismatic spectacle lens, which is designed to implement a method according to one of the claims 1 to 9.

**Revendications**

1. Procédé destiné à la fabrication d'un verre de lunettes prismatique pour un porteur de lunettes, comprenant :

- l'acquisition des données utilisateur individuelles du porteur de lunettes, les données utilisateur individuelles comprenant des données de prescription prismatiques, les données de prescription prismatiques comportant une composante verticale $p_y$ pour un effet de correction prismatique ;
- la mise au point d'un projet de conception en tenant compte des données utilisateur individuelles, à l'exclusion des données de prescription prismatiques ;
- la détermination d'un point d'accommodation et d'au moins un point de référence optique de conception pour au moins une grandeur d'influence optique du verre de lunettes en fonction des données utilisateur individuelles,

à l'exclusion des données de prescription prismatiques, de telle sorte qu'un verre de lunettes de conception fabriqué selon le projet de conception satisfasse au moins à une influence optique pour le porteur de lunettes lors du centrage pour le porteur de lunettes selon le point d'accommodation au moins pour une valeur prédéfinie par le faisceau principal passant par le point de référence de conception optique ;

- l'addition d'un effet prismatique au projet de conception en fonction des données de prescription prismatiques ; et

- la détermination d'un décalage du point de référence $c_B$ en fonction des données de prescription prismatiques, une composante verticale $c_y$ (en mm) du décalage du point de référence $c_B$ étant déterminée selon les formules

$$\delta = p_y/100$$

($p_y$ en cm/m)

$$\alpha_K = \delta/n-1$$

$d_{Pr} = \varnothing |\tan \alpha_K| /2 \approx \varnothing |\alpha_K| /2$, avec un diamètre $\varnothing$ du verre de lunettes (en mm),

$$z_K = b' + \frac{e + 10}{100} (b' + d_{pr} + d_{min} + \max(0,S'))\cos \alpha_F$$

avec une distance b' (en mm) du point de rotation de l'oeil, une distance e (en mm) cornée-sommet de la tête, une épaisseur minimale $d_{min}$ (en mm) du verre de lunettes, une valeur de puissance S' (en dioptries) moyenne du verre de lunettes,

$\Delta_{y1} = y_{BP} - y_{BZ}$, avec une composante de position verticale $y_{BP}$ (en mm) du point de référence de conception optique et une composante de position verticale $y_{BZ}$ du point d'accommodation,

$$\varphi_1 = \arctan (\Delta y_1/z_K)$$

$$\varphi_2 = \varphi_1 + \delta$$

$$\Delta \mathbf{y_2} = z_K \tan\varphi_2$$

$$C_y = \Delta y_2 - \Delta y_1.$$

**2.** Procédé destiné à la fabrication d'un verre de lunettes prismatique pour un porteur de lunettes, comprenant

- l'acquisition de données utilisateur individuelles du porteur de lunettes, les données utilisateur individuelles comprenant les données de prescription prismatiques ;
- la mise au point d'un projet de conception en tenant compte des données utilisateur individuelles à l'exclusion des données de prescription prismatiques ;
- la détermination d'un point d'accommodation et d'au moins un point de référence de la conception optique pour au moins une grandeur d'influence optique du verre de lunettes en fonction des données utilisateur individuelles à l'exclusion des données de prescription prismatiques, de telle sorte qu'un verre de lunettes de conception fabriqué selon le projet de conception satisfasse au moins à une influence optique pour le porteur de lunettes lors du centrage pour le porteur de lunettes selon le point d'accommodation au moins pour une valeur prédéfinie par le faisceau principal passant par le point de référence de conception optique ;
- la détermination d'au moins une direction
« souhaitée » du côté objet en tant que direction de la partie de faisceau principal du côté objet par au moins un point de référence de conception optique du verre de lunettes de conception ;

- la mise au point d'un projet de conception prismatique par l'addition d'un effet prismatique au projet de conception en fonction des données de prescription prismatiques ; et
- la détermination d'un décalage du point de référence $C_B$ en fonction des données de prescription prismatiques, la détermination d'un décalage du point de référence comprenant

-- la mise au point d'au moins un décalage du point de référence équivalent à au moins une valeur de départ par rapport à au moins un point de référence de conception décalé par rapport au point de référence de conception ; et

-- la détermination d'au moins une direction « réelle » du côté objet en tant que direction de la partie de faisceau principal du côté objet par au moins un point de référence de conception décalé sur la base du projet de conception prismatique,

le procédé comprenant en outre
- l'évaluation du projet de conception prismatique sur la base d'au moins une direction « souhaitée » et d'au moins une direction « réelle », et

dans le cas d'une concordance insuffisante d'au moins une direction « réelle » à l'aide d' au moins une direction « souhaitée » dans l'étape d'évaluation du projet de conception prismatique, un nouveau décalage du point de référence est évalué, et, en particulier, dans le cas d'une concordance suffisante d'au moins une direction « réelle » avec au moins une direction « souhaitée » du projet de conception prismatique, est désigné en tant que conception du verre de lunettes.

3. Procédé selon les revendications 1 ou 2,
   le point de référence de conception optique comprenant au moins un point de référence du prisme et la valeur prédéfinie pour au moins la grandeur d'influence optique comprenant une valeur nulle pour l'effet prismatique ; et/ou
   au moins un point de référence de conception optique comprenant un point de référence de loin et la valeur prédéfinie pour au moins une grandeur d'influence optique comprenant une valeur comprise parmi les données utilisateur individuelles pour l'effet optique de loin ; et/ou
   au moins un point de référence de conception optique comprenant un point de référence de près et la valeur prédéfinie pour au moins une grandeur d'influence optique comprenant une valeur comprise parmi les données utilisateur individuelles pour l'effet dioptrique de près.

4. Procédé selon l'une des revendications précédentes, le verre de lunettes comprenant un plan de vision, sur lequel, ou par rapport auquel, le point d'accommodation et/ou au moins un point de référence optique, respectivement un point de référence de conception, sont mis au point, respectivement décalés, et un plan de vision, qui est évalué, respectivement, ajusté, en fonction des données de correction optiques individuelles.

5. Procédé selon la revendication 4, comprenant en outre la mise au point d'un projet de conception prismatique corrigé, comportant

   - le décalage du plan de vision relativement par rapport au plan de référence, et/ou le décalage du plan de référence relativement par rapport au point d'accommodation en fonction d'au moins le décalage du point de référence ; et
   - l'évaluation d'un projet de conception prismatique corrigé par l'optimisation du plan de vision en fonction des données utilisateur,

   l'évaluation de la direction « réelle » du côté de l'objet étant effectuée au moins en tant que direction de la partie du faisceau principal orienté vers l'objet par au moins un point de référence de conception décalé sur la base d'un projet de conception prismatique corrigé.

6. Procédé selon l'une des revendications précédentes, comprenant en outre la finition du verre de lunettes par un repérage du centrage, notamment d'une croix de centrage au point d'accommodation et/ou pour le renseignement, respectivement, pour le repérage, du point de centrage.

7. Procédé selon l'une des revendications précédentes, l'addition d'un effet prismatique étant effectuée indépendamment des autres effets de correction optiques individuels.

8. Procédé selon l'une des revendications précédentes, l'addition de l'effet prismatique étant effectuée par une inversion

**EP 2 115 526 B1**

entre un plan arrière dans le projet de conception du verre de lunettes et un plan frontal.

9. Procédé selon l'une des revendications précédentes, la détermination d'un projet de conception comprenant une détermination d' un point de centrage de conception de telle sorte qu'une conception réalisée du verre de lunettes selon le projet de conception satisfait les effets de correction individuels compris dans les données utilisateur du porteur de lunettes selon le point de centrage de conception lors du centrage pour le porteur de lunettes, et la détermination des données de centrage comprenant une évaluation d'un décalage du centrage $s_z$ en tant que décalage d'un point d'accommodation relativement par rapport au point de centrage de conception.

10. Produit d'un programme par ordinateur, comprenant des codes d'un programme qui, lorsqu'il est enregistré et exécuté sur un système d'ordinateur, est conçu pour l'exécution d'un procédé selon l'une des revendications précédentes.

11. Système destiné à la fabrication d'un verre de lunettes prismatique qui est conçu pour exécuter un procédé selon l'une des revendications 1 à 9.

# Fig. 1

# Fig. 2

# Fig. 3

# Fig. 4

120

Fig. 5

41

EP 2 115 526 B1

Startseite / Performance Consulting / FreeSign Consulting / Impressum / Beenden _ &

**RODENSTOCK**

Eingabe | Ausgabe

Maria Mustermann | Kunde / Bestellwerte / aktuelle Brille | Design Profiler

**Refraktionsdaten** 122

| | Sph dpt | Cyl dpt | Achse ° | Add dpt | Pris cm/m | Basis ° |
|---|---|---|---|---|---|---|
| Rechts | -4,0 | -0,5 | 90 | 1,50 | | |
| Links | -4,5 | -0,25 | 95 | | | |

**Individuelle Parameter** 124

| | PD mm | HSA mm | VN ° | FSW ° | Inset % |
|---|---|---|---|---|---|
| Rechts | 32,9 | 15,5 | 9,1 | 8,7 | 100% |
| Links | 33,3 | 15,2 | 7,9 | | 100% |

132

**Fassungs- und Zentrierdaten** 126

| | Einschleifhöhe mm | u mm | v mm |
|---|---|---|---|
| Rechts | 20,2 | 1,8 | 4,1 |
| Links | 20,2 | 1,4 | 4,1 |

127

R L

18.4

20.2    20.2

Scheibenlänge mm  51,0
Scheibenhöhe mm  32,2
AZG mm  18,4
Durchmesser mm  51,0
Dezentration mm  1,2
Fassung aus Tracer  ○
Fassung Rodenstock  ○
Genäherte Formen  ○
Impression IST endaten  ⊙

○ Anpassen an Kastenmaß

**Designparameter**

134  Individueller Nahabstand

Refraktionsabstand Nähe cm  40

Hauptsehentfernung Nähe cm  30

Individuelle Zusatzwirkung dpt  2,33

135  Basiskurve
dpt

/ Drucken / zurück / weiter ▶

EP 2 115 526 B1

**140**

Fig. 6

RODENSTOCK

Eingabe | Ausgabe

Maria Mustermann | Kunde | Bestellwerte | aktuelle Brille | Design Profiler

Glastyp
- ○ Keine Brille
- 142 ○ Einstärkenbrille
- ⊙ Gleitsichtbrille
- ○ Mehrstärkenbrille

Rodenstockprodukte | [ Spezifizieren ]

Produkte anderer Hersteller | [ Spezifizieren ]

Addition des Vorgängerglases | dpt [ 1.50 ]
144

/ Drucken / zurück | weiter ▶

Fig. 7

Fig. 8

Fig. 9

Fig. 10 a     Fig. 10b

Fig. 11

160 A

162

164

168

170

EP 2 115 526 B1

45

RODENSTOCK

Eingabe   Ausgabe

Sehen

178   177   174

○ Designempfehlung                    ○ Designtuner

Designprofil:   Bestellparameter

Sehbereich

max

175

min

F   Z   H

176

169

172

166

Aussehen

BK-Vorgabe dpt   3,0

Index   1,6

ColorMatic

| Glasgeometrie | Rechts | Links |
|---|---|---|
| Mittendicke mm | 1 5 | |
| max. Randdicke mm | 4 5 | |
| Bauhöhe mm | 6,5 | |
| Gewicht g | 4,0 | 4,0 |

○ Aktive Auswahl übernehmen   ○ Ausdruck Kundeninfo   ○ Bestellung Drucken   ○ Daten speichern

/ zurück /

Fig. 12

Rodenstock Brillengläser    O Bestellung    O Anfrage    O Wiederholung

**Bestellung Grunddaten**

Kunden-Nr.: _____    Kommission: _____

Datum: _____    Termin: _____

Glastyp/EDV-Code: _____    R Ø ___ / ___    O Zentr.

Farbe/Beschichtung: _____    L Ø ___ / ___    O Zentr.

Firma

| | Sph. | Cyl. | Achse | Add. | Prisma 1 | Basis 1 | Prisma 2 | Basis 2 |
|---|---|---|---|---|---|---|---|---|
| R | | | | | | | | |
| L | | | | | | | | |

Angleich der prismatischen Vertikaldifferenzen bei Anisometropie    O Ja    O Nein

Prismen aufteilen?

R/L

O Ja
O Nein

---

**Fassungs- und Zentrierdaten**

Fassung [Kastenmaß in mm]    Zentrierung [Einschleifdaten in mm]

| SL | SH | AzG | horizontal | P_R | P_L |
|---|---|---|---|---|---|
| | | | vertikal | Y_R | Y_L |

Zentrierkorrektur berücksichtigt    O Ja    O Nein

R          L

Bohrlöcher und Kerben einzeichnen

O MDM    O optimierter Durchmesser    Mindestranddicke des gerandeten Glases [mm]    Dicke an markierter Stelle [mm]

---

**Optimierungsparameter**

| Pupillendistanz (PD) [mm] | | R | L |
|---|---|---|---|
| HSA der Korrektionsbrille [mm] | | R | L |
| HSA der Messbrille [mm] | | R | L |
| Fassungsvorneigung Angaben [°] | | R | L |
| Fassungsscheibenwinkel [°] | | R | L |
| Inset [%] | | R | L |

O Standard Design
  O DN= -18 mm
  O DN= -16 mm
  O DN= -14 mm
O Individueller Nahabstand
  Refraktionsabstand Nähe _____ cm
  Hauptsehentfernung Nähe _____ cm

O Fassungsoptimiertes Design
Bitte Fassungs- und Zentrierdaten
angeben

O Individuelles Design
Designpunkt Ferne: (DF): _____
Designpunkt Nähe: (DN): _____

O Basiskurve _____ dpt

---

**Prismen**

Für Prismen in Gebrauchsstellung

Anordnung der Refraktionsgläser in der Messbrille (senkrecht vor dem Auge)

| | Sph. | Cyl. | Prisma | Basis | Schräge | Auge | Sph. | Cyl. | Prisma | Basis | Schräge |
|---|---|---|---|---|---|---|---|---|---|---|---|
| 5 | | | | | | | | | | | |
| 4 | | | | | Fassungs- | | | | | |
| 1 | | | | | ebene | | | | | |
| 2 | | | | | | | | | | | |
| 3 | | | | | Objekt | | | | | |

Zentrierung der Refraktionsgläser in der Messbrille

| O PMZ-Fall | O Formfall | O Sonderfall | horizontal [mm] | R | L |
|---|---|---|---|---|---|
| | | Messtrib nur z.T. nachgeführt um | vertikal [mm] | R | L |

Lage der Facette

Voraussichtlicher Facettenverlauf des gerandeten Glases    R    O Objektseitig    O ½ augenseitig    O ⅓ augenseitig
L    O Objektseitig    O ½ augenseitig    O ⅓ augenseitig

Fig. 13

Fig. 14

Fig. 15a

Fig. 15b

Fig. 16a

Fig. 16b

Fig. 17

## Impression FreeSign Perfalit 1.6

| | Solitaire | | | | | Ø 56 / 62 |

Graduell Grau 10/75%        MDM

| | ⊕ | ⊟ | ⌂ | ◿ | ⊕ | ✛ |
|---|---|---|---|---|---|---|
| 📖 | **2.00** | **1.00** | **35** | **4.00** | **45** | **2.00** |
| | 1.65 | 1.25 | 38 | 3.70 | 36 | 1.78 |

COR 31.7

32.0    9.0 °    DF 1.2    INS 0.5    BC 6.5

13.0    15.0°    DN -15.6    0.0    0.0 PMZ

Fig. 18

| | Bestellwerte | | | | |
|---|---|---|---|---|---|
| ⊔ | Rechts | | ◁ | Prisma | |
| ⊔ | Links | | ⊕ | Basis | |
| ⊕ | Sphäre | | ✠ | Addition | |
| ⊟ | Zylinder | | ▤ | Bestellwert | |
| ⬡ | Achse | | ⊒ | Sollmesswert | |
| ∅ | Durchmesser | | ☺ | Mittendickenminimierung | |
| | Individuelle Parameter 👓 | | | Designparameter ⊛ | |
| 📲 | Hornhautscheitelabstand | | DF | Designpunkt Ferne | |
| 🔲 | Fassungsscheibenwinkel | | DN | Designpunkt Nähe | |
| 📫 | Vorneigung | | BC | Basiskurve | |
| 👁 | Pupillendistanz rechts | | INS | Inset | |
| 👁 | Pupillendistanz links | | | | |
| | Zentrierung | | | | |
| ⌀☺ | Korrigierte Einschleif-PD rechts | | ⌀☺ | Korrigierte Einschleif-PD links | |
| 👁→ | Zentrierkorrektur rechts nasal | | ←👁 | Zentrierkorrektur links nasal | |
| 👁← | Zentrierkorrektur rechts temporal | | 👁→ | Zentrierkorrektur links temporal | |
| ↓👁 | Zentrierkorrektur rechts unten | | 👁↓ | Zentrierkorrektur links unten | |
| ↑👁 | Zentrierkorrektur rechts oben | | 👁↑ | Zentrierkorrektur links oben | |
| PMZ | Pupillenmittenzentrierung | | FF | Formelfall | |
| | Zusatzinformationen | | | | |
| CVD Refraktion | Corneal vertex distance refraction | | HDEC | Horizontale Vordezentration | |
| Prism Adaption | Prismenangleich | | MVDN | Hauptsehentfernung Nähe | |
| RDN | Refraktionsabstand Nähe | | | | |

## Fig. 19

Fig. 20a

Fig. 20b

Fig. 21a

Fig. 21b

Fig. 21c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7063421 B1

**In der Beschreibung aufgeführte Nicht-Patentliteratur**

- Zentrieren von Fernbrillen mit prismatischer Wirkung. **VON WOLFGANG SCHULZ ; JOHANNES EBER.** Brillenanpassung. DOZ-Verlag, 35-40